# EUROPEAN PATENT APPLICATION

(11) **EP 4 589 895 A1**
(43) Date of publication of application: **23.07.2025**
(21) Application number: 22960093.7
(22) Date of filing: 29.09.2022
(51) Int. Cl.: H04L 27/00

(54) **INFORMATION TRANSMISSION METHODS AND APPARATUSES, TIMER CONFIGURATION METHODS AND APPARATUSES, DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN); SHI, Cong, Dongguan, Guangdong 523860 (CN)
(74) Representative: Novagraaf Technologies
(86) International application number: PCT/CN2022/122807
(87) International publication number: WO 2024/065456

(57) **Abstract**

The present application relates to the technical field of communications. Disclosed are information transmission methods and apparatuses, timer configuration methods and apparatuses, a device and a storage medium. An information transmission method is executed by a terminal, and the method comprises: reporting auxiliary information, the auxiliary information being used for indicating service information of the terminal.

## Description

### TECHNICAL FIELD

The present disclosure relates to the field of communication technologies, and in particular, relates to a method and apparatus for transmitting information, a method and an apparatus for configuring a timer, and a device and a storage medium thereof.

### BACKGROUND

In the 5^{th} generation (5G) communication, service characteristics of extended reality (XR) services are not taken into account in processing of the XR services. Therefore, dual objectives of meeting specific requirements of XR services of a terminal and ensuring or enhancing system capacity cannot be met.

### SUMMARY

Embodiments of the present disclosure provide a method and apparatus for transmitting information, a method and an apparatus for configuring a timer, and a device and a storage medium thereof. The technical solutions are as follows.

According to some embodiments of the present disclosure, a method for transmitting information is provided. The method is applicable to a terminal, and the method includes: reporting assistance information, wherein the assistance information indicates service information of the terminal.

According to some embodiments of the present disclosure, a method for transmitting information is provided. The method is applicable to a network device, and the method includes: adjusting a transmission resource or a configuration of the transmission resource.

According to some embodiments of the present disclosure, a method for transmitting information is provided. The method is applicable to a terminal, and the method includes: triggering or generating first report information, wherein the first report information is used to trigger a network device to perform at least one of resource allocation, resource adjustment, resource scheduling, parameter adjustment, or parameter configuration.

According to some embodiments of the present disclosure, a method for configuring a timer is provided. The method is applicable to a terminal, and the method includes: receiving a timer configuration configured by a network device, wherein the timer is a timer corresponding to first report information, and a duration of the timer is a first duration.

According to some embodiments of the present disclosure, a method for transmitting information is provided. The method is applicable to a network device, and the method includes: transmitting indication information, wherein the indication information instructs a terminal to perform at least one of processing a transmission resource or using the transmission resource.

According to some embodiments of the present disclosure, a method for transmitting information is provided. The method is applicable to a terminal, and the method includes: generating a medium access control packet data unit (MAC PDU) during a logical channel prioritization (LCP) procedure.

According to some embodiments of the present disclosure, a method for processing a data packet is provided. The method includes: performing data packet processing.

According to some embodiments of the present disclosure, a method for selecting a resource is provided. The method is applicable to a terminal, and the method includes: selecting a transmission resource or a hybrid automatic repeat request (HARQ) based on at least one of a second packet data unit (PDU), a logical channel (LCH) corresponding to the second PDU, data corresponding to the second PDU, or a logical channel priority.

According to some embodiments of the present disclosure, an apparatus for transmitting information is provided. The apparatus includes: a reporting module, configured to report assistance information, wherein the assistance information indicates service information of the terminal.

According to some embodiments of the present disclosure, an apparatus for transmitting information is provided. The apparatus includes: an adjusting module, configured to adjust a transmission resource or a configuration of the transmission resource.

According to some embodiments of the present disclosure, an apparatus for transmitting information is provided. The apparatus includes: a triggering module, configured to trigger or generate first report information, wherein the first report information is used to trigger a network device to perform at least one of resource allocation, resource adjustment, resource scheduling, parameter adjustment, or parameter configuration.

According to some embodiments of the present disclosure, an apparatus for configuring a timer is provided. The apparatus includes: a receiving module, configured to receive a timer configuration configured by a network device, wherein the timer is a timer corresponding to first report information, and a duration of the timer is a first duration.

According to some embodiments of the present disclosure, an apparatus for transmitting information is provided. The apparatus includes: a transmitting module, configured to transmit indication information, wherein the indication information instructs a terminal to perform at least one of processing a transmission resource or using the transmission resource.

According to some embodiments of the present disclosure, an apparatus for transmitting information is provided. The apparatus includes: a generating module, configured to generate a medium access control packet data unit (MAC PDU) during a logical channel prioritization (LCP) procedure.

According to some embodiments of the present disclosure, an apparatus for processing a data packet is provided. The apparatus includes: an executing module, configured to perform data packet processing.

According to some embodiments of the present disclosure, an apparatus for selecting a resource is provided. The apparatus includes: a selecting module, configured to select a transmission resource or a hybrid automatic repeat request (HARQ) based on at least one of a second packet data unit (PDU), a logical channel (LCH) corresponding to the second PDU, data corresponding to the second PDU, or a logical channel priority.

According to some embodiments of the present disclosure, a terminal is provided. The terminal includes a memory and a processor; and the memory stores at least one program code, and the processor is configured to load and execute the at least one program code, to cause the terminal to perform the method for transmitting information, the method for configuring a timer, the method for processing a data packet, or the method for selecting a resource as described above.

According to some embodiments of the present disclosure, a network device is provided. The network device includes a memory and a processor; and the memory stores at least one program code, and the processor is configured to load and execute the at least one program code, to cause the network device to perform the method for transmitting information, the method for configuring a timer, the method for processing a data packet, or the method for selecting a resource as described above.

According to some embodiments of the present disclosure, a computer-readable storage medium is provided. The storage medium stores one or more computer programs, and the processor is configured to load and run the one or more computer programs, to cause the processor to perform the method for transmitting information, the method for configuring a timer, the method for processing a data packet, or the method for selecting a resource as described above.

According to some embodiments of the present disclosure, a chip is provided. The chip includes one or more programmable logic circuits and/or program instructions, and an electronic device equipped with the chip, when executing the one or more programmable logic circuits and/or program instructions, is caused to perform the method for transmitting information, the method for configuring a timer, the method for processing a data packet, or the method for selecting a resource as described above.

According to some embodiments of the present disclosure, a computer program product is provided. The computer program product includes one or more computer instructions stored in a computer-readable storage medium, wherein a processor, when reading and executing the one or more computer instructions from the computer-readable storage medium, is caused to perform the method for transmitting information, the method for configuring a timer, the method for processing a data packet, or the method for selecting a resource as described above.

The technical solutions according to the embodiments of the present disclosure include at least the following beneficial effects.

A new processing method is provided for XR services, such that the purpose of satisfying the specific requirements of the terminal's XR services while ensuring or improving system capacity can be achieved.

### BRIEF DESCRIPTION OF THE DRAWINGS

For describing the technical solutions in the embodiments of the present disclosure more clearly, the following briefly describes the accompanying drawings required for describing the embodiments. Apparently, the accompanying drawings in the following description show merely some embodiments of the present disclosure, and those of ordinary skill in the art may still derive other drawings from these accompanying drawings without creative efforts.
FIG. 1 is a schematic diagram of a 5G network architecture according to some embodiments of the present disclosure;
FIG. 2 is a schematic diagram of a medium access control control element (MAC CE) according to some embodiments of the present disclosure;
FIG. 3 is a schematic diagram of another MAC CE according to some embodiments of the present disclosure;
FIG. 4 is a flowchart of a method for transmitting information according to some embodiments of the present disclosure;
FIG. 5 is a flowchart of a method for transmitting information according to some embodiments of the present disclosure;
FIG. 6 is an implementation of a buffer status report (BSR) MAC CE according to some embodiments of the present disclosure;
FIG. 7 is another implementation of a BSR MAC CE according to some embodiments of the present disclosure;
FIG. 8 is an implementation of an enhanced BSR or a first MAC CE according to some embodiments of the present disclosure;
FIG. 9 is another implementation of an enhanced BSR or a first MAC CE according to some embodiments of the present disclosure;
FIG. 10 is an implementation of an enhanced BSR or a first MAC CE according to some embodiments of the present disclosure;
FIG. 11 is another implementation of an enhanced BSR or a first MAC CE according to some embodiments of the present disclosure;
FIG. 12 is a flowchart of a method for configuring a timer according to some embodiments of the present disclosure;
FIG. 13 is a schematic diagram of using a timer according to some embodiments of the present disclosure;
FIG. 14 is a flowchart of a method for transmitting information according to some embodiments of the present disclosure;
FIG. 15 is a flowchart of a method for transmitting information according to some embodiments of the present disclosure;
FIG. 16 is a schematic diagram of processing a logical channel priority according to some embodiments of the present disclosure;
FIG. 17 is a flowchart of a method for processing a data packet according to some embodiments of the present disclosure;
FIG. 18 is a flowchart of a method for selecting a resource according to some embodiments of the present disclosure;
FIG. 19 is a schematic diagram of an apparatus for transmitting information according to some embodiments of the present disclosure;
FIG. 20 is a schematic diagram of an apparatus for transmitting information according to some embodiments of the present disclosure;
FIG. 21 is a schematic diagram of an apparatus for transmitting information according to some embodiments of the present disclosure;
FIG. 22 is a schematic diagram of an apparatus for configuring a timer according to some embodiments of the present disclosure;
FIG. 23 is a schematic diagram of an apparatus for transmitting information according to some embodiments of the present disclosure;
FIG. 24 is a schematic diagram of an apparatus for transmitting information according to some embodiments of the present disclosure;
FIG. 25 is a schematic diagram of an apparatus for processing a data packet according to some embodiments of the present disclosure;
FIG. 26 is a schematic diagram of an apparatus for selecting a resource according to some embodiments of the present disclosure; and
FIG. 27 is a schematic structural diagram of a communication device according to some embodiments of the present disclosure.

### DETAILED DESCRIPTION

For clearer descriptions of the objectives, technical solutions, and advantages of the present disclosure, embodiments of the present disclosure are further described in detail hereinafter with reference to the accompanying drawings.

First, the terms involved in the embodiments of the present disclosure are described.

Extended reality (XR): XR is a huge platform providing extensive supports and coverage for a plurality of heterogeneous use cases and services, studied and summarized in working groups of SA1, SA2, and SA4, including but not limited to TR 22.842 and TR 26.928. For example, an XR use case includes augmented reality (AR), virtual reality (VR), and mixed reality (MR).

Extended reality and media services (XRM): XRM includes XR (extended reality) services and media services.

Video slice: A video slice is a spatially different region in a video frame, which is coded separately from another region in the same frame.

Packet data unit set (PDU set): A PDU set includes one or more PDUs that bear an effective payload of one information unit generated in an application layer. For example, the information unit is a frame or a video slice of XRM. The information has the same importance requirements in the application layer. In the application layer, all the PDUs in the PDU set are required to use the corresponding information unit. In some cases, the application layer is still capable of restoring part of the information unit in the case that some of the PDUs are lost. It should be noted that I-frames, P-frames, and the like mentioned hereinafter represent only a form of the PDU set.

An I-frame is an intra-coded picture, and is a complete picture that may be independently encoded and decoded like a JPG image file.

An P-frame is a predictive picture, but is not a complete frame and only contains image changes as compared with a previous frame. In the case that a reference frame is lost, the P-frame cannot be decoded or displayed.

A B-frame is a bi-predictive picture, and contains changes between a previous reference frame and a later reference frame. The more reference frames, the higher a compression ratio. However, the B-frame may only be decoded in the case that a previous reference frame and a later reference frame are available.

Group of pictures (GOP): A GOP includes a set of consecutive video frames. The first frame of the GOP is an I-frame, and a following frame may be a P-frame or a B-frame.

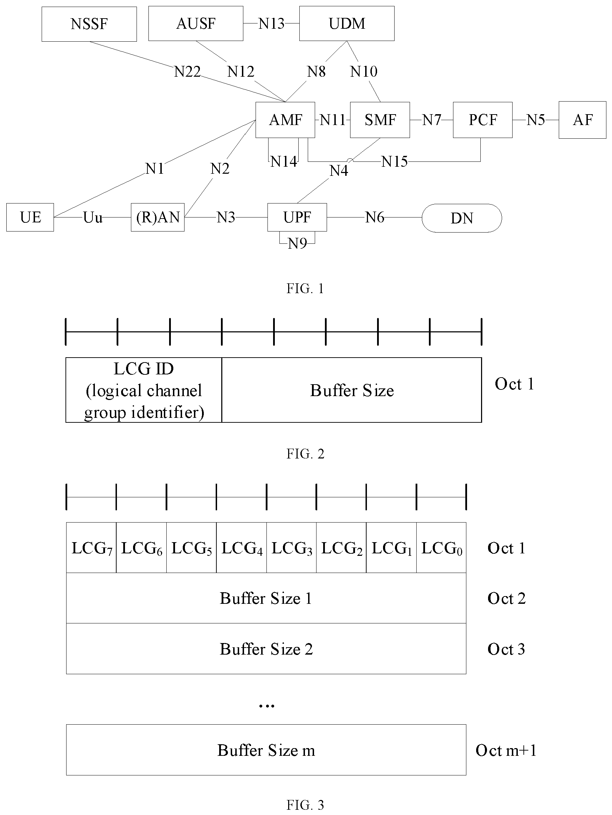

5G network system architecture: With reference to FIG. 1, the 5G network system includes: a user equipment (UE, naming of the mobile terminal in 3GPP), a (radio) access network ((R)AN), a user plane function (UPF), a data network (DN), and a control plane function.

The control plane function includes: an access and mobility management function (AMF), a session management function (SMF), a policy control function (PCF), a unified data management (UDM) function, an application function (AF), a network slice selection function (NSSF), and an authentication server function (AUSF).

The UE is connected via an access stratum to the AN over a Uu air interface to exchange access stratum messages and perform wireless data transmission, and the UE is connected via a non-access stratum (NAS) to the AMF over an N1 interface to exchange NAS messages. The AMF is a mobility management function in a core network, the SMF is a session management function in the core network, and the AMF is responsible for forwarding messages related to session management between the UE and the SMF in addition to performing mobility management on the UE. The PCF is a policy management function in the core network, and is responsible for formulating policies related to mobility management, session management, billing, and the like, on the UE. The UPF is a user plane function in the core network, and performs data transmission with an external data network over an N6 interface and with the AN over an N3 interface.

### XR/Ultra reliability and low latency communication (URLLC):

In the future, 3GPP systems is expected to increasingly extensively and deeply support vertical industries. For example, the URLLC supports requirements for transmission of services, such as factory automation, transport automation, and electrical power distribution, in a 5G system. The XR supports requirements for transmission of services such as augmented reality (AR)/virtual reality (VR)/cloud gaming (CG). These services imposes a common requirement for reliability and latency, as the services are required to satisfy a requirement on quality of service (QoS) for data transmission when resource scheduling is performed for UE. For the UE, a requirement on UE power consumption further needs to be satisfied, so as to avoid unnecessary power consumption. In addition, as a large number of UEs supporting the services may access the network, a requirement for ensuring network capacity further needs be satisfied during resource allocation.

For example, for the URLLC/XR, there is a need to support services requiring a minimum of 0.5 ms and 99, 999% reliability. The services may be pseudo-periodic, that is, jitter exists in the service arrival time. To be specific, the services do not arrive at a specific time point but at any moment within a range. In addition, a service period may be a non-integer period, for example, 16.67 ms. Further, arrival times of different service flows of the same service may differ significantly. For example, for the AR, a UL pose period is 4 ms, but a UL video period is 16.67 ms.

For the services such as the AR/VR/cloud gaming, possible service models are as follows.

VR: UL pose information + DL video streams.

CG: UL control information + DL video streams.

AR: UL (pose information + UL video streams) + DL video streams.

A period of the control information or the pose information is about 4 ms and a packet size requirement is about 100 bytes. A period of the video streams is about 16.67 ms, and a packet size requirement is about 0.67 Mbps.

Further, each service is pseudo-periodic, that is, the service arrives periodically. However, there is jitter in a time point at which the service arrives during each period, that is, the service arrives within a time range.

In particular, for the AR, in uplink transmission, pose information and video stream information are included in one period, and the two streams arrive at different times.

In particular, for the XR services, a data packet size is variable.

Characteristics of the XR services are as follows:
(i) a non-integer XR traffic period;
(ii) a variable XR data rate;
(iii) XR quasi-period, such that enhancements are beneficial in the field; and
(iv) having a latency requirement, and being latency sensitive services.

### Buffer Status Report (BSR):

A terminal enables a serving base station to acquire an uplink buffer data volume of the UE over the BSR, such that the base station can schedule the UE based on data volume information provided by the terminal. To save BSR reporting overheads, group reporting is adopted. Each uplink logical channel (LCH) corresponds to one logical channel group (LCG), a plurality of uplink logical channels may correspond to the same LCG, and a corresponding relationship between an LCH and an LCG is configured by a network over radio resource control (RRC). For example, the terminal reports the BSR based on the LCG. In new radio (NR), each terminal is capable of supporting up to eight LCGs.

For example, conditions for triggering the BSR include the following items.
1. In the case that uplink data arrives on a logical channel of a higher priority of the UE, a regular BSR is triggered.
2. In the case that a padding part of an uplink resource allocated to the UE, with other uplink data borne first, is capable of bearing a BSR medium access control control element (BSR MAC CE), a padding BSR is transmitted.
3. In the case that a retransmission BSR timer (retxBSR-Timer) expires, and at least one uplink logical channel has to-be-transmitted uplink data, a regular BSR is triggered.
4. In the case that a periodic BSR timer (periodicBSR-Timer) expires, a periodic BSR is triggered.

In the case that a plurality of logical channels simultaneously trigger regular BSRs, each of the plurality of logical channels triggers one single regular BSR.

In some embodiments, the BSR MAC CE is used to bear the BSR. Reporting content and forms of BSR are classified into the following four types:
1. short BSRs;
2. short truncated BSRs;
3. long BSRs; and
4. long truncated BSRs;

In the foregoing 4 forms of BSRs:
- Short BSR MAC CEs and short truncated BSR MAC CEs bear the short BSRs and the short truncated BSRs, and the size of a BSR MAC CE corresponding to a short BSR and a short truncated BSR is fixed, as defined in FIG. 2.
- Long BSR MAC CEs and long truncated BSR MAC CEs bear the long BSRs and the long truncated BSRs, and the size of a BSR MAC CE corresponding to a long BSR and a long truncated BSR is variable, as defined in FIG. 3.

With respect to regular BSRs and periodic BSRs:
- If a quantity of LCGs with uplink data for the UE is more than one, the UE reports long SBRs, and a data volume on all the LCGs with the uplink data is reported;
- else, the UE reports short BSRs.
- With respect to padding BSRs:
- If a quantity of padding bits is sufficient to bear a short BSR, but not sufficient to bear a long BSR,
- if a quantity of LCGs with uplink data is more than one,
- if the quantity of padding bits is just sufficient to bear short BSRs, the UE reports short truncated BSRs, and a data volume on an LCG corresponding to a logical channel of a highest priority in all logical channels with uplink data is reported.
- Else, the UE reports long truncated BSRs, a specific LCG on which a data volume is to be reported is determined by a priority of a logical channel of a highest priority included in the LCGs with uplink data. In the case that priorities of logical channels of a highest priority included in a plurality of LCGs with data are the same, a reporting priority order is further determined based on LCG IDs.
- Else, the UE reports short BSRs.
- Else, if the quantity of padding bits is sufficient to bear long BSRs, the UE reports long BSRs, and a data volume on all the LCGs with the uplink data is reported.

### NR MAC group packet:

In NR, as in long-term evolution (LTE), a network allocates an uplink transmission resource on a per-terminal (per-UE) basis, rather than on a per-bearer basis, and the UE determines a radio bearer of which data can be put into the allocated uplink transmission resource for transmission.

Based on an uplink transmission resource configured by a network, the UE needs to determine a data volume to be transmitted on each logical channel in a medium access control packet data unit (MAC PDU) for initial transmission, and in some cases, the UE needs to allocate a resource to a MAC CE.

In some embodiments, to achieve multiplexing of an uplink logical channel, a priority needs to be assigned to each uplink logical channel. For a MAC PDU of a given size, in the case that a plurality of uplink logical channels simultaneously need to transmit data, resources of the MAC PDU are sequentially allocated in a descending order of logical channel priorities corresponding to the plurality of uplink logical channels. In addition, for further ensuring equity among different logical channels, a probability of a prioritized bit rate (PBR) is introduced. In the case that the UE multiplexes logical channels, a minimum data rate requirement of each of the logical channels needs to be satisfied first, thereby avoiding a case where other uplink logical channels of a low priority of the UE are "starved to death" because an uplink logical channel of a high priority occupies, all along, uplink resources allocated to the UE by the network.

For example, to achieve multiplexing of the uplink logical channels, network RRC configures the following parameters for each of the uplink logical channels:
- a logical channel priority: a smaller priority value corresponds to a higher priority;
- a PBR: a prioritized bit rate indicating a minimal rate needs to be ensured for the logical channel; and
- bucket size duration (BSD): a parameter for determining the depth of a token bucket.

The MAC of the UE uses the token bucket mechanism to achieve uplink logical channel multiplexing.

The UE maintains a variable Bj for each uplink logical channel j, wherein the variable indicates a quantity of currently available tokens in the token bucket, and the method includes the following processes:
(1) The UE initializes initializing Bj to 0 in the process of setting up the logical channel j;
(2) The UE increases Bj by PBR×T before each logical channel prioritization (LCP) procedure, wherein T represents a time interval between a previous moment at which Bj is increased to a current moment; and
(3) The UE sets Bj to a maximum capacity of the token bucket in the case that Bj updated based on process 2 is greater than the maximum capacity of the token bucket (that is, PBR×BSD).

In some embodiments, in the case that the UE receives an uplink grant (UL grant) indicating new transmission, the UE performs logical channel prioritization processing with the following processes:
Process 1: For all logical channels with Bj>0, resources are allocated in a descending priority order from high to low, wherein a resource allocated to each of the logical channels only satisfies a PBR requirement, that is, the resource is allocated to the logical channel based on a quantity of tokens in a PBR token bucket corresponding to the logical channel. In the case that a PBR of a specific logical channel is set to infinity, a logical channel of a lower priority than the logical channel is considered only in the case that a resource requirement of the logical channel is satisfied.
Process 2: The size of all MAC service data units (SDUs) multiplexed into a MAC PDU in process 1 of the logical channel j is subtracted from Bj.
Process 3: In the case that there are remaining uplink resources after processes 1 and 2 are performed, the remaining resources are sequentially allocated to the logical channels in a descending logical channel priority order from high to low regardless of the size of Bj. The logical channel with lower priority can be served only in the case that data on a logical channel of a high priority is all transmitted and the uplink grant is not exhausted. That is, in this case, the UE maximizes data transmission for the logical channel of a high priority.

In addition, the UE should observe the following principles:
(1) In the case that the entire radio link control service data unit (RLC SDU) can be filled in the remaining resources, the RLC SDU is not segmented.
(2) In the case that the UE segments an RLC SDU in a logical channel, the largest segment is to be filled as far as possible based on the size of the remaining resources.
(3) The UE should maximize data transmission.
(4) In the case that the size of the uplink grant is greater than or equal to 8 bits (8 bytes), and the UE requires data transmission, the UE cannot transmit only a padding BSR or only padding.

For example, for different signals and/or logical channels, the UE further needs to follow the following priority order (in a descending priority order from high to low) when logical channel prioritization processing is performed:
- a C-RNTIMAC CE or data from a UL-CCCH;
- a configured grant confirmation MAC CE;
- a BSR MAC CE not for a padding BSR;
- a single entry power headroom report MAC CE (single entry PHR MAC CE) or a multiple entry PHR MAC CE;
- data from any logical channel other than a UL-CCCH;
- a MAC CE for recommended bit rate query; and
- a BSR MAC CE for a padding BSR.

Solution 1: Assistance information design or reporting, or resource or parameter configuration or adjustment based on assistance information.

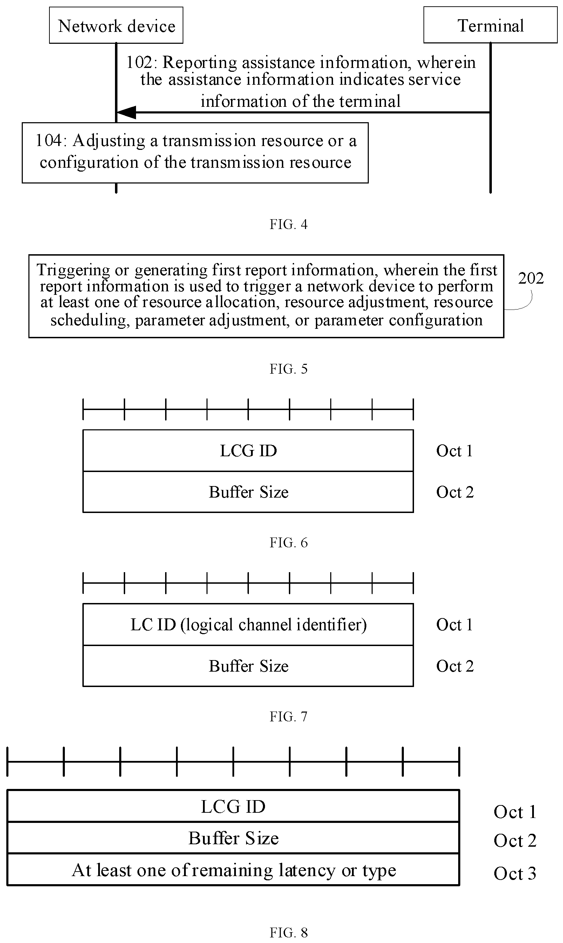

FIG. 4 illustrates a method for transmitting information according to some embodiments of the present disclosure. The method includes the following processes.

**In process 102,** a terminal reports assistance information to a network device.

For example, the assistance information indicates service information of the terminal.

To implement XR service processing, the terminal is capable of reporting the assistance information to the network device, such that the network device acquires service information of the terminal, and adjusts a transmission resource or a configuration of the transmission resource, thereby improving system capacity, satisfying an XR service requirement, and avoiding waste of resources.

In some embodiments, the service information includes at least one of: a service characteristic of the terminal; a service pattern of the terminal; remaining service information of the terminal; or remaining data information of the terminal.

In some embodiments, the terminal actively reports the assistance information to the network device; and in some other embodiments, the terminal reports the assistance information in the case that a reporting condition is satisfied.

In some embodiments, process 102 is implemented as: reporting, by the terminal, the assistance information in the case that a first condition is satisfied.

The first condition includes at least one of the following options.
• A new piece of information is present or arrives.
• A new piece of information is present or arrives, and a latency of the new piece of information is less than a first value. The new piece of information is a new data burst or a PDU set.
• A piece of information is present in buffer, and a latency of the piece of information is less than a second value. The piece of information is at least one data burst or at least one PDU set.
• The network device instructs the terminal to report the assistance information.
• The network device instructs the terminal to report the type of the assistance information. The type of the assistance information is one of the service characteristic of the terminal; the service pattern of the terminal; remaining service information of the terminal; or remaining data information of the terminal.
• The terminal has a capability of reporting the assistance information.
• The terminal reports the capability of reporting to the network device.
• The terminal supports a specified service.
• The terminal supports a session corresponding to the specified service. The specified service is one of an XR service, a media service, a video service, a service with a variable service characteristic, or a service including service flows between which an association relationship is present. In some embodiments, a service supported by the terminal corresponds to a plurality of service flows, and in the case that an association relationship between the plurality of service flows is present, it is considered that the terminal supports the specified service.
• The terminal has not reported the assistance information.
• The assistance information is changed as compared with a history report or a history tendency, wherein the history report or the history tendency refers to an information report or a tendency of the terminal before the assistance information is reported this time.
• The assistance information is changed as compared with information or a tendency before the first condition is satisfied.
• A scheduling request (SR) resource dedicated to the terminal is present.
• A physical uplink control channel (PUCCH) resource for an SR dedicated to the terminal is present.
• The SR resource dedicated to the terminal is available.
• The PUCCH resource for the SR dedicated to the terminal is available. The SR resource or the PUCCH resource corresponds to at least one of: an LCH; a user data radio bearer (DRB); a QoS flow; a PDU session; a PDU set; a PDU; a data burst; or a medium access control (MAC) entity. In some embodiments, the SR resource or the PUCCH resource is associated with at least one of a latency, a remaining latency, a data volume, a remaining data volume, or a service association.

In some embodiments, the assistance information includes at least one of:
• Direction information of a data packet.
• Direction information of a QoS flow.
• Direction information of a data flow. The direction information of the data packet, the direction information of the QoS flow, or the direction information of the data flow indicates uplink transmission corresponding to the data packet, the QoS flow, or the data flow; and/or the direction information of the data packet, the direction information of the QoS flow, or the direction information of the data flow indicates the downlink transmission corresponding to the data packet, the QoS flow, or the data flow. For example, the direction information of the data packet indicates at least one of uplink transmission corresponding to the data packet or downlink transmission corresponding to the data packet.
• An arrival time of the data packet. The arrival time of the data packet includes at least one of: a starting arrival time of the data packet; an ending arrival time of the data packet; an arrival time of the first data packet in associated data packets; an arrival time of the last data packet in the associated data packets; an arrival time of the first packet within one data burst; or an arrival time of the last packet within one data burst.
• An arrival interval of the data packet.
• An arrival period of the data packet.
• An arrival pattern of the data packet.
• A size of the data packet.
• A size pattern of the data packet.
• Latency tolerance information of the data packet.

In some embodiments, the latency tolerance information includes at least one of: a latency value pre-configured by the network device for the terminal; a latency value required by the terminal; at least one of total latency information, time consumed, waiting time consumed, or remaining latency information; a maximum value in the total latency information, the time consumed, the waiting time consumed, and the remaining latency information; a minimum value in the total latency information, the time consumed, the waiting time consumed, and the remaining latency information; a mean value in the total latency information, the time consumed, the waiting time consumed, and the remaining latency information; a remaining latency of data of a highest priority; a maximum value of the remaining latency of the data of the highest priority; a mean value of the remaining latency of the data of the highest priority; a minimum value of the remaining latency of the data of the highest priority; a remaining latency of data of a lowest priority; a maximum value of the remaining latency of the data of the lowest priority; a mean value of the remaining latency of the data of the lowest priority; a minimum value of the remaining latency of the data of the lowest priority; a remaining latency of data of a highest importance; a maximum value of the remaining latency of the data of the highest importance; a mean value of the remaining latency of the data of the highest importance; a minimum value of the remaining latency of the data of the highest importance; a remaining latency of data of a lowest importance; a maximum value of the remaining latency of the data of the lowest importance; a mean value of the remaining latency of the data of the lowest importance; a minimum value of the remaining latency of the data of the lowest importance; a latency level; a latency grade index; an identifier indicating that a latency is higher than a first latency threshold; or an identifier indicating that a latency is lower than a second latency threshold.

The highest or lowest priority or the highest or lowest importance is a numerical value or a grade; the first latency threshold and the second latency threshold are set based on actual needs; and the identifier indicating that a latency is higher than the first latency threshold may be understood as a high latency identifier, and the identifier indicating that a latency is lower than the second latency threshold may be understood as a low latency identifier.

In some embodiments, the latency tolerance information is information specific to at least one of: an LCH; a DRB; a QoS flow; a PDU session; a PDU set; a PDU; or a data burst.
• A QoS flow corresponding to the terminal.
• A QoS flow corresponding to the data packet.
• A data flow corresponding to the terminal.
• A data flow corresponding to the data packet.

Indication information of the specified service, wherein the specified service is one of an XR service, a media service, a video service, a service with a variable service characteristic, or a service including service flows between which an association relationship is present.
• A remaining data volume.
• Information of a to-be-transmitted volume. The information of the to-be-transmitted volume is at least one of: a data volume level; a data volume grade index; an identifier indicating that a data volume is higher than a first data volume threshold; or an identifier indicating that a data volume is lower than a second data volume threshold. For example, the identifier indicating that a data volume is higher than the first data volume threshold is understood as a high data volume identifier; and the identifier indicating that a data volume is lower than the second data volume threshold is understood as a low data volume identifier.

The remaining data volume or the information of the to-be-transmitted volume is information specific to at least one of: an LCH; a DRB; a QoS flow; a PDU session; a PDU set; a PDU; or a data burst.
• Latency information of remaining data.

In some embodiments, the latency information of the remaining data includes at least one of: at least one of total latency information, time consumed, waiting time consumed, or remaining latency information; a maximum value in the total latency information, the time consumed, the waiting time consumed, and the remaining latency information; a minimum value in the total latency information, the time consumed, the waiting time consumed, and the remaining latency information; a mean value in the total latency information, the time consumed, the waiting time consumed, and the remaining latency information; a remaining latency of data of a highest priority; a maximum value of the remaining latency of the data of the highest priority; a mean value of the remaining latency of the data of the highest priority; a minimum value of the remaining latency of the data of the highest priority; a remaining latency of data of a lowest priority; a maximum value of the remaining latency of the data of the lowest priority; a mean value of the remaining latency of the data of the lowest priority; a minimum value of the remaining latency of the data of the lowest priority; a remaining latency of data of a highest importance; a maximum value of the remaining latency of the data of the highest importance; a mean value of the remaining latency of the data of the highest importance; a minimum value of the remaining latency of the data of the highest importance; a remaining latency of data of a lowest importance; a maximum value of the remaining latency of the data of the lowest importance; a mean value of the remaining latency of the data of the lowest importance; a minimum value of the remaining latency of the data of the lowest importance; a latency level; a latency grade index; an identifier indicating that a latency is higher than a first latency threshold; or an identifier indicating that a latency is lower than a second latency threshold.

The highest or lowest priority or the highest or lowest importance is a numerical value or a grade; the first latency threshold and the second latency threshold are set based on actual needs; and the identifier indicating that a latency is higher than the first latency threshold may be understood as a high latency identifier, and the identifier indicating that a latency is lower than the second latency threshold may be understood as a low latency identifier.

In some embodiments, the latency information of the remaining data is information specific to at least one of: an LCH; a DRB; a QoS flow; a PDU session; a PDU set; a PDU; or a data burst.
• Latency information of the to-be-transmitted volume.
• Latency information of the data packet, wherein the data packet indicates a corresponding data packet in one of: a PDU set; a PDU; or a data burst.
• A transmission latency in at least one of uplink transmission or downlink transmission (UL+DL). The transmission latency in at least one of the uplink transmission or the downlink transmission is a transmission latency, collected by the terminal, in at least one of the uplink transmission or the downlink transmission, or the transmission latency in at least one of the uplink transmission or the downlink transmission is a transmission time difference, collected by the terminal, between a plurality of flows. In some embodiments, the transmission latency in at least one of the uplink transmission or the downlink transmission is specific to at least one of: a QoS flow; a PDU session; or a PDU set.
• A transmission time difference between a plurality of data flows or a plurality of QoS flows.

After specific information included in the assistance information is determined, the terminal reports the assistance information. In some embodiments, the assistance information is reported in one of the following manners:
reporting the assistance information over an assistance information reporting process of the terminal;
reporting the assistance information by carrying the assistance information in terminal assistance information;
reporting the assistance information over a MAC CE;
reporting the assistance information over RRC information dedicated to the terminal;
reporting the assistance information over uplink control information (UCI) dedicated to the terminal, wherein in some embodiments, the assistance information is reported over a dedicated SR, or the assistance information is reported over dedicated configured grant-uplink control information (CG-UCI);
reporting the assistance information periodically; or
reporting the assistance information in response to a change, wherein reporting the assistance information in response to the change refers to that the terminal reports the assistance information again in the case that information included in the assistance information is changed.

In some embodiments, in the case that the assistance information is indicated by the network device, the assistance information is carried in downlink (DL) information, a channel, or signaling, for example, at least one of a physical downlink control channel (PDCCH), downlink control information (DCI), a physical downlink shared channel (PDSCH), semi-persistent scheduling (SPS), a DL MAC CE, or a DL RRC message.

In some embodiments, in the case that a pre-configured or dynamically scheduled uplink resource includes at least one available resource, or in the case that at least one PDSCH occasion is present, the assistance information is transmitted over one or more transmission resources in the first i transmission resources, wherein i is a positive integer greater than 0. For example, the assistance information is transmitted on specific first i resources.

For example, the assistance information is transmitted on the first transmission resource.

In some embodiments, the method for transmitting information according to the embodiments of the present disclosure further includes: transmitting data packet characteristic information when the assistance information is transmitted.

In some embodiments, the data packet characteristic information includes at least one of: an attribute characteristic; an importance characteristic; an association characteristic; a latency characteristic; or a serial number or sequence in a PDU set or a data burst. The attribute characteristic indicates which PDU set or data burst a data packet belongs to; the importance characteristic indicates importance of the PDU set or a PDU; the association characteristic indicates an index number (SN) of an associated PDU set or a data burst; and the serial number of the data packet in the PDU set or the data burst indicates whether the data packet is the first packet/the last packet in the PDU set or the data burst.

In some embodiments, the data packet characteristic information is carried in the assistance information; and the data packet characteristic information is carried in a data packet data unit (data PDU) packet header or a control packet data unit (control PDU) packet header. In some embodiments, the data packet characteristic information is carried in a packet or a packet header of at least one of a Service Data Adaptation Protocol (SDAP), a Packet Data Convergence Protocol (PDCP), radio link control (RLC), or a MAC PDU.

In some embodiments, the terminal reports the assistance information to the network device, or the terminal reports the assistance information to the network device based on different configured resources. In some embodiments, process 102 is implemented as at least one of the following implementations.
(1) Implementation 1: The terminal transmits the assistance information in the case that at least one CG resource or SPS resource is configured.

In some embodiments, the assistance information is transmitted over a first resource in the at least one CG resource or SPS resource. The first resource is one of: the first CG resource or SPS resource; a CG resource or SPS resource with an index lower than a predetermined value; or at least one of the first j CG resources or SPS resources, j being a positive integer greater than 0.

In some embodiments, the assistance information is reported over a dynamically scheduled uplink grant; or the assistance information is reported over one of UCI, a PUCCH resource, or an SR resource.

(2) Implementation 2: The assistance information is transmitted in the case that at least one CG resource or SPS resource is configured within one CG resource or SPS resource period.

In some embodiments, the assistance information is transmitted over a first resource location in a resource location of the at least one CG resource or SPS resource. The first resource location is one of: a resource location of the first CG resource or SPS resource; or a resource location of at least one resource of the first k CG resources or SPS resources, wherein k is a positive integer greater than 0.

In some embodiments, the assistance information is reported over a dynamically scheduled uplink grant; or the assistance information is reported over one of UCI, a PUCCH resource, or an SR resource.

(3) Implementation 3: The assistance information is transmitted in the case that at least one physical uplink shared channel (PUSCH) resource or PDSCH resource is scheduled over DCI.

In some embodiments, the assistance information is transmitted over a second resource location in the resource locations of the at least one PUSCH resource or PDSCH resource. The second resource location is one of: a resource location of the first PUSCH resource or PDSCH resource; or at least one resource location of the first m PUSCH resources or PDSCH resources, wherein m is a positive integer greater than 0.

In some embodiments, the DCI carries first indication information, wherein the first indication information instructs the terminal to report the assistance information.

(4) Implementation 4: The assistance information is transmitted in the case that one PUSCH resource or physical downlink shared channel (PDSCH) resource is scheduled over DCI, or in the case that one PUSCH resource or PDSCH resource is scheduled over one piece of DCI, or in the case that one PUSCH resource or PDSCH resource is periodically scheduled over DCI.

Alternatively, the assistance information is transmitted on one PUSCH resource or PDSCH resource in the case that one PUSCH resource or PDSCH resource is scheduled over DCI, or in the case that one PUSCH resource or PDSCH resource is scheduled over one piece of DCI, or in the case that one PUSCH resource or PDSCH resource is periodically scheduled over DCI.

In some embodiments, the DCI carries first indication information, wherein the first indication information instructs the terminal to report the assistance information.

(5) Implementation 5: In the case that at least one PDSCH resource is scheduled over DCI, or in the case that at least one PDSCH resource is scheduled over one piece of DCI, or in the case that at least one PDSCH resource is scheduled periodically over DCI, indication information delivered by the network device is received, wherein the indication information indicates whether the terminal skips n PDSCH resources, n being a positive integer greater than 0.

In some embodiments, the n PDSCH resources are at least one of PDSCH resources indicated by the DCI; or the n PDSCH resources are PDSCH resources after the first PDSCH resource.

In some embodiments, the method for transmitting information according to the embodiments of the present disclosure further includes: skipping the n PDSCH resources, by the terminal, based on the indication information.

In some embodiments, the network device indicates the assistance information to the terminal, or the network device indicates the assistance information to the terminal based on different configured resources. In some embodiments, process 102 is implemented as at least one of the following implementations.
(1) Implementation 1: The network device transmits the assistance information in the case that at least one CG resource or SPS resource is configured.

In some embodiments, the assistance information is transmitted over a first resource in the at least one CG resource or SPS resource. The first resource is one of: the first CG resource or SPS resource; a CG resource or SPS resource with an index lower than a predetermined value; or at least one of the first j CG resources or SPS resources, j being a positive integer greater than 0.

In some embodiments, the assistance information is transmitted over a dynamically scheduled downlink grant; or the assistance information is carried by an activated/deactivated indication of SPS or CG; or the assistance information is transmitted over one of DCI, a PDCCH resource, a DL MAC CE, or DL RRC.

(2) Implementation 2: The assistance information is transmitted by the network device in the case that at least one CG resource or SPS resource is configured within one CG resource or SPS resource period.

In some embodiments, the assistance information is transmitted over a first resource location in a resource location of the at least one CG resource or SPS resource. The first resource location is one of: a resource location of the first CG resource or SPS resource; or a resource location of at least one resource of the first k CG resources or SPS resources, wherein k is a positive integer greater than 0.

In some embodiments, the assistance information is transmitted over a dynamically scheduled downlink grant; or the assistance information is carried by an activated/deactivated indication of SPS or CG; or the assistance information is transmitted over one of DCI, a PDCCH resource, a DL MAC CE, or DL RRC.

(3) Implementation 3: The network device transmits the assistance information in the case that at least one PUSCH resource or PDSCH resource is scheduled over DCI.

In some embodiments, the assistance information is transmitted over a second resource location in the resource locations of the at least one PUSCH resource or PDSCH resource. The second resource location is one of: a resource location of the first PUSCH resource or PDSCH resource; or at least one resource location of the first m PUSCH resources or PDSCH resources, wherein m is a positive integer greater than 0.

In some embodiments, the assistance information is carried in DCI or a PDCCH of the at least one PUSCH resource or PDSCH resource.

In some embodiments, the DCI carries first indication information, wherein the first indication information instructs the network device to transmit the assistance information.

(4) Implementation 4: The assistance information is transmitted by the network device in the case that one PUSCH resource or physical downlink shared channel (PDSCH) resource is scheduled over DCI, or in the case that one PUSCH resource or PDSCH resource is scheduled over one piece of DCI, or in the case that one PUSCH resource or PDSCH resource is periodically scheduled over DCI.

Alternatively, the assistance information is transmitted by the network on one PUSCH resource or PDSCH resource in the case that one PUSCH resource or PDSCH resource is scheduled over DCI, or in the case that one PUSCH resource or PDSCH resource is scheduled over one piece of DCI, or in the case that one PUSCH resource or PDSCH resource is periodically scheduled over DCI.

Alternatively, the assistance information is carried in DCI or a PDCCH of the PUSCH resource or PDSCH resource.

In some embodiments, the DCI carries first indication information, wherein the first indication information instructs the network device to transmit the assistance information.

(5) Implementation 5: In the case that at least one PDSCH resource is scheduled over DCI, or in the case that at least one PDSCH resource is scheduled over one piece of DCI, or in the case that at least one PDSCH resource is scheduled periodically over DCI, the network device transmits the assistance information or the indication information, wherein the indication information indicates whether the terminal skips n PDSCH resources, n being a positive integer greater than 0.

In some embodiments, the n PDSCH resources are at least one of PDSCH resources indicated by the DCI; or the n PDSCH resources are PDSCH resources after the first PDSCH resource.

In some embodiments, the method for transmitting information according to the embodiments of the present disclosure further includes: skipping the n PDSCH resources, by the terminal, based on the assistance information or the indication information.

It should be understood that, in various optional implementations described above, the assistance information is reported to the network device by the terminal, or is transmitted to the terminal by the network device.

In the case that a source object of the assistance information is the terminal, transmitting the assistance information includes reporting the assistance information, by the terminal, to the network device. For example, in the case that a plurality of CG resources are configured, the terminal reports the assistance information to the network device. In the case that a source object of the assistance information is the network device, transmitting the assistance information includes indicating the assistance information, by the network device, to the terminal, or carrying the assistance information in a transmission resource by the network device.

**In process 104,** the network device adjusts a transmission resource or a configuration of the transmission resource.

The network device may actively adjust the transmission resource or the configuration of the transmission resource, or the network device may perform the adjustment based on the assistance information from the terminal.

In some embodiments, process 104 includes: adjusting the transmission resource or the configuration of the transmission resource based on the assistance information reported by the terminal, wherein the assistance information indicates the service information of the terminal.

For the related description of the assistance information, reference is made to the foregoing content. The details are not described any further.

In some embodiments, process 104 includes: allocating or scheduling the transmission resource; or configurating or adjusting a configuration parameter or an RRC configuration parameter of the transmission resource; or allocating or scheduling the transmission resource based on the assistance information reported by the terminal; or configuring or adjusting a configuration parameter or an RRC configuration parameter of the transmission resource based on the assistance information reported by the terminal.

Similar to the terminal side, the network device adjusts the transmission resource or the configuration of the transmission resource differently based on different configured resources, specifically as follows.

In some embodiments, process 104 includes:
in the case that at least one CG resource or SPS resource is configured, adjusting a configuration parameter of the at least one CG resource or SPS resource, and/or activating or deactivating, or using or not using the at least one CG resource or SPS resource; or
in the case that at least one CG resource or SPS resource is configured, based on the assistance information reported by the terminal, adjusting a configuration parameter of the at least one CG resource or SPS resource, and/or activating or deactivating, or using or not using the at least one CG resource or SPS resource.

For example, the terminal reports the assistance information over a specific CG resource in a plurality of CG resources; and the network device adjusts the configuration parameter of the at least one CG resource and/or activates or deactivates at least one of the plurality of CG resources based on the assistance information.

In some embodiments, the assistance information is transmitted over a first resource in the at least one CG resource or SPS resource. The first resource is one of: the first CG resource or SPS resource; a CG resource or SPS resource with an index lower than a predetermined value; or at least one of the first j CG resources or SPS resources, j being a positive integer greater than 0.

In some embodiments, the assistance information is reported over a dynamically scheduled uplink grant; or the assistance information is reported over one of a MAC CE, UCI, a PUCCH resource, or an SR resource.

In some embodiments, process 104 includes:
in the case that at least one CG resource or SPS resource is configured within one CG resource or SPS resource period, adjusting a configuration parameter or a resource use parameter of a resource location of the at least one CG resource or SPS resource, and/or activating or deactivating, or using or not using the resource location of the at least one CG resource or SPS resource; or
in the case that at least one CG resource or SPS resource is configured within one CG resource or SPS resource period, based on the assistance information reported by the terminal, adjusting a configuration parameter or a resource use parameter of a resource location of the at least one CG resource or SPS resource, and/or activating or deactivating, or using or not using the resource location of the at least one CG resource or SPS resource.

For example, the terminal reports the assistance information over a resource location of a specific CG resource in a plurality of CG resources; and the network device adjusts, based on the assistance information, the configuration parameter or the resource use parameter of the resource location of the at least one CG resource, and/or activates or deactivates at least one of resource locations corresponding to the plurality of CG resources.

In some embodiments, the assistance information is transmitted over a first resource location in a resource location of the at least one CG resource or SPS resource. The first resource location is one of: a resource location of the first CG resource or SPS resource; or a resource location of at least one resource of the first k CG resources or SPS resources, wherein k is a positive integer greater than 0.

In some embodiments, the assistance information is reported over a dynamically scheduled uplink grant; or the assistance information is reported over one of a MAC CE, UCI, a PUCCH resource, or an SR resource.

In some embodiments, process 104 includes:
in the case that at least one PUSCH resource or PDSCH resource is scheduled over DCI, adjusting a configuration parameter or a resource use parameter of the at least one PUSCH resource or PDSCH resource, and/or activating or deactivating, or using or not using the at least one PUSCH resource or PDSCH resource; or
in the case that at least one PUSCH resource or PDSCH resource is scheduled over DCI, based on the assistance information reported by the terminal, adjusting a configuration parameter or a resource use parameter of the at least one PUSCH resource or PDSCH resource, and/or activating or deactivating, or using or not using the at least one PUSCH resource or PDSCH resource.

For example, the terminal reports the assistance information over a resource location of a specific PUSCH resource in a plurality of PUSCH resources; and the network device adjusts, based on the assistance information, the configuration parameter or the resource use parameter of the at least one PUSCH resource, and/or activates or deactivates at least one of resource locations corresponding to the plurality of PUSCH resources.

In some embodiments, the assistance information is transmitted over a second resource location in the resource locations of the at least one PUSCH resource or PDSCH resource. The second resource location is one of: a resource location of the first PUSCH resource or PDSCH resource; or at least one resource location of the first m PUSCH resources or PDSCH resources, wherein m is a positive integer greater than 0.

In some embodiments, the DCI carries first indication information, wherein the first indication information instructs the terminal to report the assistance information.

In some embodiments, process 104 includes:
determining whether to increase a scheduled grant, a PUSCH resource, or a PDSCH resource in the case that one PUSCH resource or PDSCH resource is scheduled over DCI, or in the case that one PUSCH resource or PDSCH resource is scheduled over one piece of DCI, or in the case that one PUSCH resource or PDSCH resource is periodically scheduled over DCI; or
determining whether to increase a scheduled grant, a PUSCH resource, or a PDSCH resource based on the assistance information reported by the terminal in the case that one PUSCH resource or PDSCH resource is scheduled over DCI, or in the case that one PUSCH resource or PDSCH resource is scheduled over one piece of DCI, or in the case that one PUSCH resource or PDSCH resource is periodically scheduled over DCI.

In some embodiments, the DCI carries first indication information, wherein the first indication information instructs the terminal to report the assistance information.

In some embodiments, process 104 includes:
in the case that at least one PDSCH resource is scheduled over DCI, or in the case that at least one PDSCH resource is scheduled over one piece of DCI, or in the case that at least one PDSCH resource is scheduled periodically over DCI, indicating whether the terminal skips n PDSCH resources on the DCI or a first PDSCH resource in the at least one PDSCH resource, wherein n is a positive integer greater than 0; or
in the case that at least one PDSCH resource is scheduled over DCI, or in the case that at least one PDSCH resource is scheduled over one piece of DCI, or in the case that at least one PDSCH resource is scheduled periodically over the DCI, indicating whether the terminal skips n PDSCH resources, based on the assistance information reported by the terminal, on the DCI or a first PDSCH resource in the at least one PDSCH resource, wherein n is a positive integer greater than 0.

In some embodiments, the n PDSCH resources are at least one of PDSCH resources indicated by the DCI; or the n PDSCH resources are PDSCH resources after the first PDSCH resource.

It should be understood that, the processes at the terminal side and the network device side may be separately implemented as one embodiment of the method for transmitting information. For specific description, reference is made to the foregoing content. The details are not described any further.

In summary, in the method for transmitting information according to the embodiments of the present disclosure, the assistance information of the XR service is reported by the terminal, such that the network device allocates or adjusts the use of the transmission resource, or the network device adjusts the resource configuration of the transmission resource, thereby improving system capacity, satisfying the requirement of the XR service, and avoiding waste of transmission resources.

In some embodiments, the method for transmitting information according to the embodiments of the present disclosure is implemented as follows.

**In process 1,** a UE reports assistance information in the case that a first condition is satisfied. The assistance information is used to report a service characteristic or pattern, or to report remaining service or data information.
(a) In some embodiments, the first condition includes at least one of the following options.
   i. A network (i.e., a network device) instructs the UE to report the assistance information, and the network is a base station.
   ii. The network instructs the UE to report the type of the assistance information, wherein the type is the service characteristic or pattern, or the remaining service or data information.
   iii. The UE has a capability for reporting, or the UE reports a capability for reporting.
   iv. The UE supports a specific service or an established session corresponding to a specific service. In some embodiments, the service is an XR service/a media service/a video service.
   v. The UE has not reported the assistance information, or the assistance information reported by the UE is changed as compared with current information or tendency.
   vi. A dedicated SR resource or a PUCCH resource of a dedicated SR is present, or a dedicated SR resource or a PUCCH resource of a dedicated SR is available. In some embodiments, the dedicated SR resource or the PUCCH resource of the dedicated SR corresponds to one of specific LCH, DRB, QoS flow, PDU session, PDU set, PDU, or data burst, or is associated with a latency/remaining latency/data volume.
(b) In some embodiments, content of the assistance information includes at least one of the following options.
   i. Direction information, UL and/or downlink.
   ii. A packet arrival time, including but not limited to at least one of a packet starting arrival time, a packet ending arrival time, an arrival time of the first packet (within one data burst), or an arrival time of the last packet (within one data burst).
   iii. A packet arrival interval/period.
   iv. A packet arrival pattern.
   v. A packet size, or a packet size pattern.
   vi. Packet latency tolerance information.

In some embodiments, the latency tolerance information is a pre-configured/required latency value, or the latency tolerance information is at least one of total latency information/time consumed/waiting time consumed/remaining latency information. In some embodiments, the remaining latency tolerance information is at least one of: a maximum value in at least one of the total latency information/the time consumed/the waiting time consumed/the remaining latency information, a minimum value in at least one of the total latency information/the time consumed/the waiting time consumed/the remaining latency information, a mean value in at least one of the total latency information/the time consumed/the waiting time consumed/the remaining latency information, a remaining latency of data of a highest priority/importance, a maximum value in the remaining latency of the data of the highest priority/importance, a mean value in the remaining latency of the data of the highest priority/importance, or a minimum value in the remaining latency of the data of the highest priority/importance. In some embodiments, the remaining latency tolerance information is specific to at least one of an LCH, a DRB, a QoS flow, a PDU session, a PDU set, a PDU, or a data burst.

In some embodiments, latency tolerance is one of a latency value, a latency level, a latency grade index, a high latency identifier, a low latency identifier, an identifier indicating that a latency is higher than a threshold, or an identifier indicating that a latency is lower than a threshold.
vii. A corresponding QoS flow and/or data flow.
viii. An indication of whether a service is a specific service or not, such as whether an XR service/media service/video service or not.
ix. A remaining data volume or information of a to-be-transmitted volume, wherein the remaining data volume or the information of the to-be-transmitted volume is specific to at least one of: an LCH, a DRB, a QoS flow, a PDU session, a PDU set, or a PDU.

In some embodiments, a data volume is one of a data volume value, a data volume level, a data volume grade index, a high data volume identifier, a low data volume identifier, an identifier indicating that a data volume is higher than a threshold, or an identifier indicating that a data volume is lower than a threshold.

x. Latency information of the remaining data.

In some embodiments, the latency information of the remaining data is specific to at least one of: an LCH, a DRB, a QoS flow, a PDU session, a PDU set, a PDU, or a data burst; and/or the latency information is at least one of total latency information, latency information about time consumed or a waiting time consumed, or remaining latency information.

In some embodiments, the latency information of the remaining data is at least one of: a maximum value in at least one of the total latency information/the time consumed/the waiting time consumed/the remaining latency information, a minimum value in at least one of the total latency information/the time consumed/the waiting time consumed/the remaining latency information, a mean value in at least one of the total latency information/the time consumed/the waiting time consumed/the remaining latency information, a remaining latency of data of a highest priority/importance, a maximum value of the remaining latency of the data of the highest priority/importance, a mean value of the remaining latency of the data of the highest priority/importance, or a minimum value of the remaining latency of the data of the highest priority/importance. In some embodiments, a latency is a latency value, a latency level, a latency grade index, a high latency identifier, a low latency identifier, an identifier indicating that a latency is higher than a threshold, or an identifier indicating that a latency is lower than a threshold.

In some embodiments, the latency information of the remaining data is specific to at least one of: a PDU set, a data burst, or a PDU.
xi. A time transmission latency of UL+DL transmission collected by the UE.
xii. A transmission time difference between a plurality of flows collected by the UE.

In some embodiments, the time transmission latency of the UL+DL transmission is specific to at least one of: a QoS flow; a PDU session; or a PDU set.

(c) In some embodiments, the assistance information is reported in one of the following manners:
i. reporting over a UE assistance information process, or in UE assistance information;
ii. reporting over a MAC CE, such as a first MAC CE, a BSR MAC CE or an enhanced BSR MAC CE;
iii. reporting over dedicated RRC or UCI information, such as an SR and CG-UCI; and
iv. reporting periodically , or reporting in response to a change.

In addition, the characteristic of the data packet includes, for example, which PDU set or data burst a PDU belongs to; the importance of the PDU set or the PDU; an SN of an associated PDU set or a data burst; and whether the data packet is the first packet/the last packet in the PDU set or the data burst. In some embodiments, the characteristic of the data packet is reported over the assistance information, or is carried in a data PDU packet header at an access stratum, or is carried in a control PDU (for example, in a packet or a packet header of at least one of an SDAP, a PDCP, RLC, or a MAC PDU).

(d) The assistance information reporting includes: transmitting the assistance information on specific first X resources_in the case that a pre-configured or dynamically scheduled UL resource includes a plurality of available resources, or a plurality of PUSCH occasions. In some embodiments, X is the first resource.

**In process 2,** the network receives the assistance information reported by the UE.

In some embodiments, based on the assistance information, the network performs resource allocation or scheduling, or adjusts a resource configuration/an RRC configuration parameter, or the like. A plurality of optional implementations are listed hereinafter.
(a) In the case that a plurality of CG/SPS resources are configured, the UE reports the assistance information.
   In this case, by using the assistance information, the network adjusts a configuration parameter of at least one CG/SPS, and/or activates or deactivates at least one of the plurality of CGs/SPSs. In some embodiments, the assistance information is transmitted over a specific CG/SPS resource of the plurality of CGs/SPSs, such as the first CG/SPS, a CG/SPS with a small index or at least one of the first M CGs/SPSs. In some embodiments, the assistance information is reported to the network before a plurality of available CG/SPS resources, for example, the assistance information is reported over a dynamically scheduled grant or UCI/PUCCH/SR.
(b) In the case that a plurality of CG/SPS resources are configured within one CG/SPS period, the UE reports the assistance information.
   In this case, by using the assistance information, the network adjusts a configuration/resource use parameter of at least one CG/SPS resource location, and/or activates or deactivates/uses/skips using at least one of the plurality of CG/SPS resource locations. In some embodiments, the assistance information is transmitted over a specific CG/SPS resource location of the plurality of CG/SPS resource locations, such as the first CG/SPS resource location or at least one of the first M CG/SPS resource locations. In some embodiments, the assistance information is reported to the network before an available resource within one CG/SPS period, for example, the assistance information is reported over a dynamically scheduled grant or UCI/PUCCH/SR.
(c) In the case that a plurality of PUSCH or PDSCH resources are scheduled by DCI, the UE reports the assistance information.
   In this case, by using the assistance information, the network adjusts a configuration/resource use parameter of at least one PUSCH/PDSCH, and/or activates or deactivates/uses/skips using at least one of a plurality of PUSCH/PDSCH resource locations. In some embodiments, the assistance information is transmitted over a specific PUSCH/PDSCH resource location of the plurality of PUSCH/PDSCH resource locations, such as the first PUSCH/PDSCH resource location or at least one of the first M PUSCH/PDSCH resource locations. In some embodiments, the DCI carries a first indication, wherein the first indication indicates assistance information reporting (for example, the first indication is a special DCI indication, a special grant indication, or an assistance information reporting trigger indication).
(d) The UE reports the assistance information or reports the assistance information on a PUSCH/PDSCH in the case that one PUSCH or PDSCH resource is scheduled by the DCI, one PUSCH or PDSCH resource is scheduled by one piece of DCI, or one PUSCH or PDSCH resource is periodically scheduled by the DCI.
   In this case, the network determines whether to schedule more grants/PUSCHs/PDSCHs using the assistance information. In some embodiments, the DCI carries a first indication, wherein the first indication indicates assistance information reporting (for example, the first indication is a special DCI indication, a special grant indication, or an assistance information reporting trigger indication).
(e) The base station indicates whether to skip specific N PDSCHs on the DCI or a PDSCH at a special location in the case that a plurality of PDSCH resources are scheduled by the DCI, or a plurality of PDSCH resources are scheduled by one piece of DCI, or a plurality of PDSCH resources are periodically scheduled by the DCI.

In some embodiments, the specific N PDSCHs are at least one of PDSCHs indicated by the DCI. In some embodiments, the specific N PDSCHs are a PDSCH after the PDSCH at the special location. The UE skips the specific N PDSCHs based on the network indication.

In some embodiments, the UE reports at least one of an accurate data volume or remaining latency of a finer granularity unit (for example, an LCH or a PDU set). Accordingly, new report triggering criteria is introduced:
1) A report is triggered when a fresh PDU set is available; and
2) A report is triggered when the latency of a PDU set buffered in the MAC layer approaches the PDSB.

Solution 2: First report information (or first report) design or reporting, or resource or parameter configuration or adjustment based on first report information (or first report).

FIG. 5 illustrates a method for transmitting information according to some embodiments of the present disclosure. The method is applicable to a terminal, and includes the following processes.

**In process 202,** first report information is triggered or generated.

For example, the first report information is used to trigger a network device to perform at least one of resource allocation, resource adjustment, resource scheduling, parameter adjustment, or parameter configuration. The first report information may also be referred to as a first report.

In some embodiments, the network device determines at least one of resource allocation, adjustment, or scheduling based on the first report information. Based on these embodiments, the method for transmitting information according to the embodiments of the present disclosure may be applied alone, or may be applied in combination with the method for transmitting information illustrated in FIG. 4, which is not limited herein.

In some embodiments, the first report information is used to trigger one of: a MAC CE; an SR; pre-configured grant-uplink control information (CG-UCI); or physical uplink shared channel-uplink control information (PUSCH-UCI).

In some embodiments, the first report information is triggered by the terminal or a MAC entity.

The terminal is a terminal having a specified capability; or the terminal is a terminal for bearing a specified service. In some embodiments, the specified service is one of an XR service, a media service, a video service, a service with a variable service characteristic, or a service including service flows between which an association relationship is present.

In some embodiments, the first report information or the first report is specific to a first object, and/or the first report information or the first report carries an identifier of the first object. The identifier of the first object is an identifier (ID) or index identifier; and the first object is one of: an LCH; an LCH pair; an LCG; a DRB; a QoS flow; a PDU session; a PDU set; a PDU; or a data burst.

In some embodiments, the first report information carries at least one of the following information.

A remaining data volume.

Information of a to-be-transmitted data volume.

Latency information.

A related data volume of the first object, wherein the latency information includes at least one of: a total latency; a remaining latency; a waiting time consumed; a latency upon entering buffer; or a latency associated with the first object. In some embodiments, the latency information is at least one of a latency value, a latency level, a latency grade index, an identifier indicating that a latency is higher than a first latency threshold, or an identifier indicating that a latency is lower than a second latency threshold.

In some embodiments, the related data volume of the first object indicates a data volume of the first object, or a data volume associated with the first object. Descriptions related to the first object are provided hereinafter.

In the embodiments of the present disclosure, at least one of a PDU set delay budget (PSDB), a latency, a remaining PSDB, or a remaining latency is determined by MAC or a PDCP through statistics. The MAC or the PDCP determines at least one of the PSDB, the latency, the remaining PSDB, or the remaining latency based on a first duration or a first timer.

In some embodiments, the first duration or the first timer is started in the case that a data packet or a data packet of a PDU set arrives, is stored, or is available. For example, the first duration or the first timer is started in the case that the data packet or the data packet of the PDU set (for example, the first data packet, where for example, whether the PDU set or not is determined based on an SN of the PDU set) arrives, is stored, or is available.

In some embodiments, the latency/remaining latency/PSDB/remaining PSDB/duration is determined in the case that the first report information is triggered, or a MAC CE corresponding to the first report information is generated, or a BSR is triggered, or a BSR MAC CE is generated, or a MAC PDU is packaged.

In some embodiments, the PSDB, the latency, the remaining PSDB, the remaining latency, and the duration are determined in the MAC or the PDCP. In some embodiments, the PSDB, the latency, the remaining PSDB, the remaining latency, and the duration are interacted to the MAC by another layer (for example, the PDCP layer).

In some embodiments, whether a data packet belongs to the PDU set is determined by the MAC based on a higher layer packet header, or is determined based on inter-layer interaction, or is determined based on a control PDU.

For descriptions related to the latency in the embodiments of the present disclosure, reference may be made to the foregoing content. The details are not described herein any further.

A priority of a transmission object, wherein
the priority is at least one of a priority value, a priority grade, a priority grade index, a high priority identifier, a low priority identifier, an identifier indicating that a priority is higher than a threshold, or an identifier indicating that a priority is lower than a threshold.

In some embodiments, the priority corresponds to one of one priority, two priorities, three priorities, or more priorities.

Importance of the transmission object, wherein the importance is at least one of an importance value, an importance level, an importance level index, a high importance identifier, a low importance identifier, an identifier indicating that an importance is higher than a threshold, or an identifier indicating that an importance is lower than a threshold.

In some embodiments, the priority corresponds to one of one type of importance, two types of importance, three types of importance, or more types of importance.

A type of the transmission object.

In some embodiments, the type of the transmission object is an I-frame or a P-frame. Alternatively, in some embodiments, the type of the transmission object is an I-frame, a P-frame, a B-frame, or the like. In some embodiments, a frame is also be referred to as a coded slice.

In some embodiments, the type corresponds to one of one type, two types, three types, or more types.

Similar to the assistance information reporting, the first report information is also triggered or generated in a specific condition.

In some embodiments, process 202 is implemented as follows.

The first report information is triggered or generated in the case that a second condition is satisfied.

In some embodiments, the second condition is specific to a MAC entity, specific to a terminal, or specific to the first object.

The MAC entity is any one MAC entity or a MAC entity corresponding to a (specific) terminal. In some embodiments, the specific terminal indicates a terminal having a specific capability, a terminal for bearing a specific service, or any terminal. For example, the specific terminal is a terminal bearing an XR service/media service/video service/service with a variable service characteristic/service including service flows between which an association relationship is present.

In some embodiments, the second condition includes at least one of the following options.
• A new piece of information is present or arrives.
• A new piece of information is present or arrives, and a latency of the new piece of information is less than a first value. The new piece of information is a new data burst or a PDU set.
• A piece of information is present in buffer, and a latency of the piece of information is less than a second value. The piece of information is at least one data burst or at least one PDU set.
• The network device instructs or triggers the terminal to report the first report information.

In some embodiments, the network device instructs or triggers the terminal to report the first report information over at least one of: DCI; a downlink MAC CE; downlink RRC; or PDSCH-DCI. The indication of the network device is an explicit indication or an implicit indication. For example, the terminal reports the first report information in the case of receiving any one of DCI, a MAC CE, RRC, or PDSCH-DCI that carries a specific identifier.
• The terminal receives a command or information carrying a first identifier.

In some embodiments, the command or information carrying the first identifier received by the terminal includes at least one of: DCI; a downlink MAC CE; downlink RRC; or PDSCH-DCI.
• An SR resource dedicated to the terminal is present.
• A physical uplink control channel (PUCCH) resource for an SR dedicated to the terminal is present.
• The SR resource dedicated to the terminal is available.
• The PUCCH resource for the SR dedicated to the terminal is available.

In some embodiments, the SR resource or the PUCCH resource corresponds to one of: an LCH; a DRB; a QoS flow; a PDU session; a PDU set; a PDU; or a data burst. In some embodiments, the SR resource or the PUCCH resource is associated with at least one of a latency, a remaining latency, a data volume, or a remaining data volume.
• The terminal receives data of a first LCH.
• The data of the first LCH is available. The first LCH is a specific LCH.
• The terminal receives a service or data corresponding to a first characteristic.
• The service or data corresponding to the first characteristic is available.

In some embodiments, the service or data corresponding to the first characteristic includes at least one of: a service, an LCH, or a flow with a first period or a first data rate; an LCH carrying a first identifier; an LCH carrying a first priority; an LCH bearing a specified service; an LCH bearing a first session; an LCH bearing a first quality of service (QoS) flow; a service or data carrying a first frame rate; a service with a PDU set characteristic, information, or requirement; or data or an LCH with a PDU characteristic, information, or requirement.

The specified service is one of an extended reality (XR) service, a media service, a video service, a service with a variable service characteristic, or a service including service flows between which an association relationship is present.

In some embodiments, the service or data corresponding to the first characteristic includes the service or data carrying the first frame rate, and/or the service or data corresponding to the first characteristic includes the data or LCH with corresponding PDU set information or characteristic, and/or the service or data carrying the first frame rate has the first period. For example, the first frame rate is 60 fps. Based on this, process 202 is implemented as follows.

A data burst or a PDU set arrives or is available; or
the terminal periodically reports the first report information in the case that a service or data transmitted within the first period is available; or
the terminal periodically reports the first report information in the case that a service or data transmitted within the first period is available, and a periodic timer corresponding to a periodic BSR expires or is not running; or
the terminal periodically reports the first report information in the case that a service or data transmitted within the first period is received, and a periodic timer corresponding to a periodic BSR expires or is not running; or
the terminal periodically reports the first report information in the case that a period time point of the first period is reached, and a periodic timer corresponding to a periodic BSR expires or is not running; or
the terminal periodically reports the first report information in the case that a service or data transmitted within the first period is received; or
the terminal periodically reports the first report information in the case that a period time point of the first period is reached; or
the terminal periodically reports the first report information within each first period; or
the terminal periodically reports the first report information within each first period in the case that a periodic timer corresponding to a periodic BSR expires or is not running; or
the terminal periodically reports the first report information in the case that a service or data transmitted within the first period is received, and a periodic timer corresponding to a periodic BSR expires or is not running; or
the terminal periodically reports the first report information as a periodic service arrives; or
the terminal periodically reports the first report information in the case that a periodic service arrives and a periodic timer corresponding to a periodic BSR expires or is not running; or
the terminal periodically reports the first report information in the case that a resource for a service or data corresponding to the first characteristic within the first period is available; or
the terminal periodically reports the first report information in the case that a resource for a service or data corresponding to the first characteristic within the first period is available, and a periodic timer corresponding to a periodic BSR expires or is not running.

The first period may be a specific period, and the first report information periodically reported by the terminal is a periodic first report, periodic first report information, a periodic BSR, or an enhanced periodic BSR.
• The terminal receives data carrying a second identifier.
• The data carrying the second identifier is available.

In some embodiments, the data carrying the second identifier is a PDU or a PDU set. The second identifier is one of an importance identifier, a priority identifier, an identifier of being dependent, or an I-frame identifier.
• The terminal receives first data.
• The first data arrives.

In some embodiments, the first data is one of: at least one PDU that has arrived early in a PDU set; a PDU that has first arrived in the PDU set; a PDU that has last arrived in the PDU set; a specified PDU (for example, a PDU at a specific location or with a specific serial number) that has arrived in the PDU set; at least one PDU that has last arrived in the PDU set; or a new PDU set. The PDU set is understood as data or a data packet corresponding to the PDU set; and the PDU is also understood as the data or the data packet corresponding to the PDU set.
• Data satisfying a third condition is present.

In some embodiments, the third condition includes at least one of: a packet delay budget (PDB) is less than a threshold; a remaining transmission latency is less than a latency threshold; an available duration for data in buffer is not less than a duration threshold; a data volume is greater than a third data volume threshold; a to-be-transmitted data volume is greater than a fourth data volume threshold; or a remaining data volume is greater than a fifth data volume threshold.

The data volume, the to-be-transmitted data volume, or the remaining data volume is specific to the first object. For related description of the first object, reference may be made to the foregoing content. In some embodiments, the first object is a PDU set, a data burst, or an LCH.
• The first report information is used to trigger one of a MAC CE, an SR, CG-UCI, or PUSCH-UCI.

In some embodiments, the first report information is at least one of newly defined report information, a BSR, an enhanced BSR, an SR, CG-UCI, or PUSCH-UCI. Based on this, in the case that the second condition is satisfied, triggering and generating the first report information is implemented as any one of the following implementations.
(1) Implementation 1: The identifier of the first object and/or the first report information is carried in the SR or the UCI in the case that the SR, the CG-UCI, or the PUSCH-UCI is triggered.
   In some embodiments, information carried in the first report information includes related information of at least one first object. For the related description of the first object, reference may be made to the foregoing content. The details are not described herein any further.
(2) Implementation 2: Different SR information is triggered based on at least one of the size of a to-be-transmitted data volume, latency information, a data priority, or data importance in the case that the SR is triggered.

In some embodiments, the different SR information corresponds to different SR configurations.

The SR configurations include at least one of a scheduling request identifier (SchedulingRequestId), a scheduling request resource identifier (SchedulingRequestResourceId), or a resource location of a PDCCH resource; and each piece of SR information carries related information of at least one first object. In some embodiments, in the case that a transmission resource conflict is present, the SR information is preferentially transmitted, or the transmission priority of the SR information is considered a high priority.

In some embodiments, the method for transmitting information according to the embodiments of the present disclosure further includes:
using, by the terminal, a new or modified BSR in the case that the first report information is a BSR or an enhanced BSR.

The new or modified BSR is one of a regular BSR, an enhanced regular BSR, or a BSR dedicated to the terminal. In some embodiments, the new or modified BSR carries related information of at least one first object.

In some embodiments, the method for transmitting information according to the embodiments of the present disclosure further includes one of:
a long BSR is reported in the case that a BSR is triggered, a MAC PDU including the BSR is generated, and at least one LCH or LCG has to-be-transmitted data;
a long BSR is reported in the case that an enhanced BSR is triggered, a MAC PDU including the enhanced BSR is generated, and at least one LCH or LCG has to-be-transmitted data;
a short BSR or an extended short BSR is reported in the case that a BSR is triggered, a MAC PDU including the BSR is generated, and one LCH or LCG has to-be-transmitted data; or
a short BSR or an extended short BSR is reported in the case that an enhanced BSR is triggered, a MAC PDU including the enhanced BSR is generated, and one LCH or LCG has to-be-transmitted data.

The BSR or the enhanced BSR is one of a regular BSR, an enhanced regular BSR, a BSR dedicated to the terminal, a periodic BSR, or an enhanced periodic BSR.

In some embodiments, in the case that a short BSR is reported, a length of 8 bits is used in a buffer size field.

Two implementations of a BSR MAC CE corresponding to a short (truncated) BSR are illustrated in FIG. 6 and FIG. 7, and four implementations of an enhanced BSR or a first MAC CE are illustrated in FIG. 8 to FIG. 11. The types in FIG. 8 to FIG. 11 may include a priority, importance, a frame type, and the like.

(3) Implementation 3: The identifier of the first object and/or the first report information is carried in the first MAC CE or a MAC CE corresponding to the enhanced BSR in the case that the first MAC CE or the enhanced BSR is triggered.

In some embodiments, information carried in the first MAC CE or the MAC CE corresponding to the enhanced BSR includes the related information of the at least one first object. The first MAC CE or the MAC CE corresponding to the enhanced BSR is identified using an extended logical channel identifier (LCID).

In some embodiments, in the case that the first MAC CE or the MAC CE corresponding to the enhanced BSR carries the information of the at least one first object, the information of the first object is carried in a bitmap manner, or the information of the first object is carried using a displayed identifier of the first object.

In some embodiments, an 8-bit buffer size level table is used in a buffer size field in the enhanced BSR; or a 5-bit buffer size level table is used in a buffer size field; or a new buffer size level table (mainly specific to a large data volume, for example, a data volume greater than 77,284 bits, 107,669 bits, or 150,000 bits) is added in a buffer size field.

In some embodiments, a 5-bit or 8-bit buffer size level table is used in the buffer size field in the enhanced BSR in the case that data volume-related information is carried in the first MAC CE.

The buffer size field is determined based on at least one of the following principles:
the new buffer size level table (that may be 8 bits, or 16 bits, or bits between 8 to 16) is used;
the 8-bit buffer size level table is used;
the 8-bit buffer size level table is used in the case that a data volume is less than a, and the new buffer size level table is used in the case that the data volume is not less than a;
the 5-bit buffer size level table is used in the case that a data volume is less than a, and the 8-bit buffer size level table is used in the case that the data volume is not less than a;
the 5-bit buffer size level table is used in the case that a data volume is less than a, and the new buffer size level table is used in the case that the data volume is not less than a;
the 5-bit buffer size level table is used in the case that a data volume is less than a, and the new buffer size level table is used in the case that the data volume is not less than a and is less than b;
wherein a and b may be set based on actual needs, which are not limited herein.

In some embodiments, besides the principles for determining the buffer size field, the second condition further needs to be satisfied, or the first report information further needs to be triggered.

In some embodiments, in the case that the second condition is satisfied, triggering and generating the first report information is also implemented as: generating one of the first MAC CE, the enhanced BSR, the BSR MAC CE, the SR, the PUSCH-UCI, or the CG-UCI in the case that the second condition is satisfied.

For example, the following four optional implementations are included:
the BSR MAC CE is generated in the case that at least one BSR is triggered and the at least one BSR is not deleted, and an uplink-shared channel (UL-SCH) resource for new transmission carries the BSR MAC CE and a subheader thereof; or
the enhanced BSR MAC CE is generated in the case that at least one enhanced BSR is triggered and the at least one enhanced BSR is not deleted, and a UL-SCH resource for new transmission carries the enhanced BSR MAC CE and a subheader thereof; or
the first MAC CE is generated in the case that at least one piece of first report information is triggered, at least one piece of identification information is not deleted, and a UL-SCH resource for new transmission carries the first MAC CE and a subheader thereof or carries an enhanced first MAC CE and a subheader thereof; or
an SR corresponding to the first report information is triggered in the case that the first report information is triggered.
In some embodiments, the method for transmitting information according to the embodiments of the present disclosure further includes:
starting or restarting an enhanced timer in the case that the enhanced BSR MAC CE or the first MAC CE is generated, wherein the enhanced timer is a periodic timer and/or a retransmission timer corresponding to the enhanced BSR or the first MAC CE.

Descriptions related to the timer are provided hereinafter.

In some embodiments, one MAC PDU carries one BSR MAC CE and one MAC CE; or one MAC PDU carries a BSR MAC CE or one MAC CE; or one MAC PDU does not simultaneously include a BSR MAC CE and one MAC CE; or one MAC PDU does not simultaneously include two or more MAC CEs related to a data volume or data buffering. Alternatively, one MAC PDU does not simultaneously include two or more MAC CEs specific to the same object; or one MAC PDU does not simultaneously include two or more MAC CEs specific to the same object and related to a data volume or data buffering.

There are two types of BSR MAC CEs in the protocol: BSR MAC CEs and extended BSR MAC CEs.

One MAC CE in the plurality of cases described above may be the first MAC CE, or may be the enhanced BSR MAC CE, or may be another newly defined MAC CE.

In some embodiments, the BSR MAC CE and the first MAC CE are of the same priority. In some embodiments, the BSR MAC CE and/or the first MAC CE are of a priority not lower than a priority of an extended BSR.

In some embodiments, the BSR MAC CE and the enhanced BSR MAC CE are of the same priority. In some embodiments, the BSR MAC CE and/or the enhanced BSR MAC CE are of a priority not lower than a priority of an extended BSR.

In some embodiments, the BSR MAC CE and another newly defined MAC CE are of the same priority. In some embodiments, the BSR MAC CE and/or another newly defined MAC CE are of a priority not lower than a priority of an extended BSR.

In summary, in the method for transmitting information according to the embodiments of the present disclosure, the terminal (may also be understood as an XR service) triggers or generates the first report information, such that the network device is capable of performing resource scheduling based on the first report information, thereby satisfying a service transmission requirement.

In some embodiments, the method for transmitting information according to the embodiments of the present disclosure may be implemented as follows.

**In process 1,** a first report (i.e., the first report information in the foregoing content) is triggered in the case that the second condition is satisfied.

In some embodiments, the second condition includes at least one of the following items.
(a) The second condition is specific to one MAC entity, or specific to the UE.
   The MAC entity is any MAC entity or a MAC entity of a specific UE, and the UE is a UE having a specific capability, a UE bearing a specific service (for example, an XR service/media service/video service), or any UE.
(b) In some embodiments, the triggering is UE triggering or MAC entity triggering.
(c) The first report is specific to the first object, and/or carries the reported identifier of the first object.
   i. The first object is one of: an LCH, an LCH pair, an LCG, a DRB, a QoS flow, a PDU session, a PDU set, a PDU, or a data burst.
   ii. The identifier of the first object is an id, index, or the like.
(d) The first report carries content to be reported.
   In some embodiments, the content carried in the first report includes at least one of: a remaining data volume, a to-be-transmitted data volume, a latency (at least one of a total latency, a remaining latency, a waiting time consumed, or a latency upon entering buffer; or the latency is one of a latency value, a latency grade, a latency grade index, a high latency identifier, a low latency identifier, an identifier indicating that a latency is higher than a threshold, or an identifier indicating that a latency is lower than a threshold), a priority of an object (the priority is one of a priority value, a priority grade, a priority grade index, a high priority identifier, a low priority identifier, an identifier indicating that a priority is higher than a threshold, or an identifier indicating that a priority is lower than a threshold), importance of the object (the importance is one of an importance value, an importance level, an importance level index, a high importance identifier, a low importance identifier, an identifier indicating that an importance is higher than a threshold, or an identifier indicating that an importance is lower than a threshold), or a type of the object (an I-frame, a P-frame, or the like).
(e) The network (i.e., the network device) instructs to report the first report, or the network instructs the UE to report the first report, or the network triggers the first report.
   i. In some embodiments, the UE is instructed to report, or the UE is triggered to report the first report over one of DCI, a downlink MAC CE, downlink RRC, PDSCH-DCI, or the like.
   ii. In some embodiments, the network indication is that the network explicitly indicates the first report, or that the network implicitly indicates the first report (for example, the UE receives DCI, a MAC CE, RRC, PDSCH-DCI, or the like carrying a specific identifier).
(f) A dedicated SR resource or a PUCCH resource of a dedicated SR is present, or a dedicated SR resource or a PUCCH resource of a dedicated SR is available.
   i. In some embodiments, the dedicated SR resource or the PUCCH resource of the dedicated SR corresponds to one of a specific LCH, DRB, QoS flow, PDU session, PDU set, PDU, or data burst, or is associated with a latency/remaining latency/data volume.
(g) Data of a specific LCH arrives, or UL data of a specific LCH is available, or a service/data with a specific characteristic arrives, where for example, a service with a specific period or data rate arrives.
   i. For example, an LCH with a specific identifier, an LCH of a specific priority, an LCH bearing a specific service/session/QoS flow arrives.
   ii. For example, data at 60 fps arrives.
   For example, in the case that a service/data with a specific period is available, a specific period time point is reached, or a service/data with a specific period arrives, a periodic first report is triggered. Further, in the case that the service/data with the specific period is available, the specific period time point is reached, or the service/data with the specific period arrives, and in the case that a timer corresponding to a periodic BSR expires (periodicBSR-Timer expires) or is not running, the periodic first report is triggered. In some embodiments, the periodic first report is a periodic BSR or an enhanced periodic BSR.
(h) Data with a specific identifier arrives.
   i. The data is a PDU or a PDU set.
   ii. The specific identifier is at least one of an importance identifier, a priority identifier, an identifier of being dependent, or an I-frame.
(i) Specific data arrives.
   i. At least the first PDU in the PDU set arrives, or at least the last PDU arrives.
   ii. A specific PDU (at a specific location or with a specific serial number) in the PDU set arrives.
   iii. A new PDU set arrives, for example, a PDU set with an SN of the new PDU set or an SN of a later PDU set arrives, wherein
   the PDU set is also understood as data or a data packet corresponding to the PDU set; and the PDU is also understood as the data or the data packet corresponding to the PDU.
(i) Data satisfying a third condition is present. The third condition is as follows.
   i. A PDB is less than a threshold.
   ii. A remaining transmission latency is less than a threshold.
   iii. An available time for data in buffer is greater than or equal to a threshold.
   iv. A data volume is greater than a threshold, and the data volume is specific to the first object (for example, a PDU set or a data burst).
   v. A to-be-transmitted or remaining data volume is greater than a threshold, and the to-be-transmitted or remaining data volume is specific to the first object (for example, a PDU set or a data burst).
(k) The first report can trigger a MAC CE, an SR, CG-UCI, or PUSCH-UCI.

(1) The first report can be at least one of a BSR, an enhanced BSR, an SR, CG-UCI, or PUSCH-UCI.
   i. For example, the first report triggers the SR, the CG-UCI, or the PUSCH-UCI, and can be used for carrying the identifier of the first object and/or the content of the first report in the UCI. In some embodiments, content of one or more first objects is included.
   ii. For example, the first report triggers the SR, and different SRs may be triggered based on the data volume and/or the latency information (a latency that has been used for waiting, a remaining latency, or the like) and/or the data priority/importance. In some embodiments, different SRs correspond to different SR configurations, such as different SchedulingRequestId, SchedulingRequestResourceId, and different PUCCH resource locations. In some embodiments, each SR includes the content of the one or more first objects. In some embodiments, in the case of a transmission resource conflict, the SR is preferentially transmitted, or the priority of the SR is considered high.
   iii. For example, the first report is a BSR or an enhanced BSR, and accordingly, a BSR may be added or modified. In some embodiments, one triggered BSR is a regular BSR, an enhanced regular BSR, or a dedicated BSR. In some embodiments, content of one or more first objects is included.
   iv. In some embodiments, in the case that a BSR (for example, a regular BSR, a dedicated BSR, or a periodic BSR) is triggered, or in the case that an enhanced BSR (for example, an enhanced regular BSR, a dedicated BSR, or an enhanced periodic BSR) is triggered, when more than one LCH/LCG has available data in the case of generating a MAC PDU that includes a BSR, a long BSR is reported; otherwise, a short BSR or an extended short BSR is reported. In some embodiments, in the case that the short BSR is reported, the length of 8 bits is used in a buffer size field.
   v. In some embodiments, in the case that the first report (correspondingly the first MAC CE, that is, a new MAC CE) or an enhanced BSR (for example, an enhanced regular BSR, a dedicated BSR, or an enhanced periodic BSR) is triggered, the first MAC CE or an enhanced BSR MAC CE carries the identifier of the first object and/or the content of the first report. In some embodiments, the MAC CE includes the content of the one or more first objects. Accordingly, an extended LCID may be used to identify the MAC CE. In some embodiments, an existing 8-bit buffer size level table, a 5-bit buffer size level table, or a new buffer size level table is used in the buffer size field. The new buffer size level table is mainly specific to a large data volume, for example, a data volume greater than 77,284 bits, 107,669 bits, or 150,000 bits.

In some embodiments, a buffer size level table to be used in the buffer size field is determined based on the following principles (further, the following condition may be added: the foregoing condition for triggering the first report is satisfied, or the first report has been triggered):
the new buffer size level table (the new table may also be 8 bits, or 16 bits, or bits between 8 to 16) is used all long;
the 8-bit buffer size level table is used all long;
the 8-bit buffer size level table is used in the case that a data volume is less than M; otherwise, the new buffer size level table is used;
the 5-bit buffer size level table is used in the case that a data volume is less than M; otherwise, the 8-bit buffer size level table is used;
the 5-bit buffer size level table is used in the case that a data volume is less than M; otherwise, the new buffer size level table is used;
the 5-bit buffer size level table is used in the case that a data volume is less than M; the 8-bit buffer size level table is used in the case that a data volume is greater than M and less than N; and the new buffer size level table is used in the case that a data volume is greater than N.

**In process 2,** the UE generates the first MAC CE, the enhanced BSR MAC CE, the BSR MAC CE, the SR, or the PUSCH-UCI/CG-UCI.
(a) For example, the BSR MAC CE may be generated in the case that at least one BSR is triggered and not deleted, and a UL-SCH resource for new transmission may carry the BSR MAC CE and a subheader thereof.
(b) For example, the enhanced BSR MAC CE may be generated in the case that at least one enhanced BSR is triggered and not deleted, and a UL-SCH resource for new transmission may carry the enhanced BSR MAC CE and a subheader thereof. In some embodiments, an enhanced periodic timer and/or a retransmission timer is started or restarted.
(c) For example, an enhanced MAC CE for the first report may be generated in the case that at least one first report is triggered and not deleted, and a UL-SCH resource for new transmission may carry the enhanced MAC CE for the first report and a subheader thereof. In some embodiments, an enhanced periodic timer and/or a retransmission timer is started or restarted.
(d) For example, in the case that the first report is triggered, the SR corresponding to the first report is triggered. An SR resource or configuration used for the SR triggering may be related to the data volume and/or the latency information (the latency that has been used for waiting, the remaining latency, or the like) and/or the data priority/importance. In some embodiments, different SRs correspond to different SR configurations, such as different SchedulingRequestId, SchedulingRequestResourceId, and different PUCCH resource locations. In some embodiments, each SR includes the content of the one or more first objects. In some embodiments, in the case of a transmission resource conflict, the SR is preferentially transmitted, or the priority of the SR is considered high.

In some embodiments, the UE reports an accurate data volume and/or remaining latency of a finer granularity unit (for example, an LCH or a PDU set). Accordingly, new report triggering criteria is introduced, for example:
(1) a report is triggered in the case that a new PDU set is available; and
(2) a report is triggered in the case that the latency of a PDU set buffered at a MAC layer approaches a PDSB.

### Solution 3: Content related to the timer

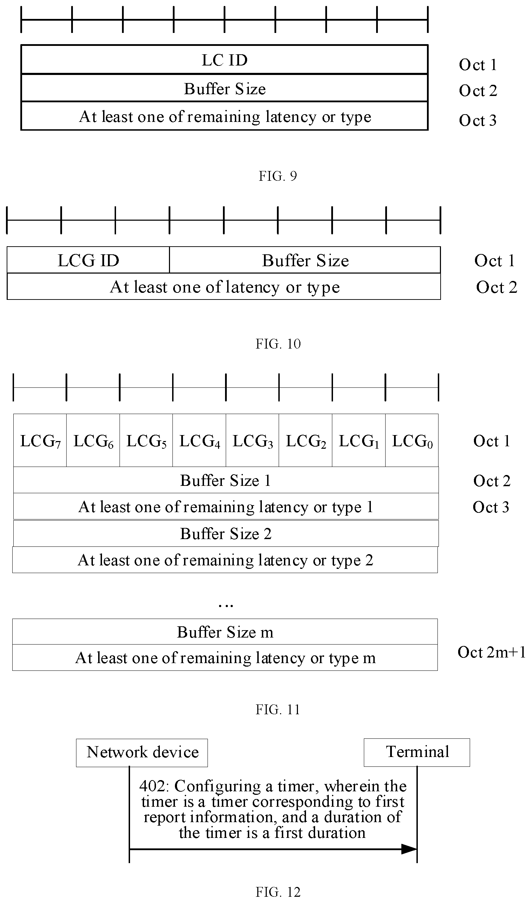

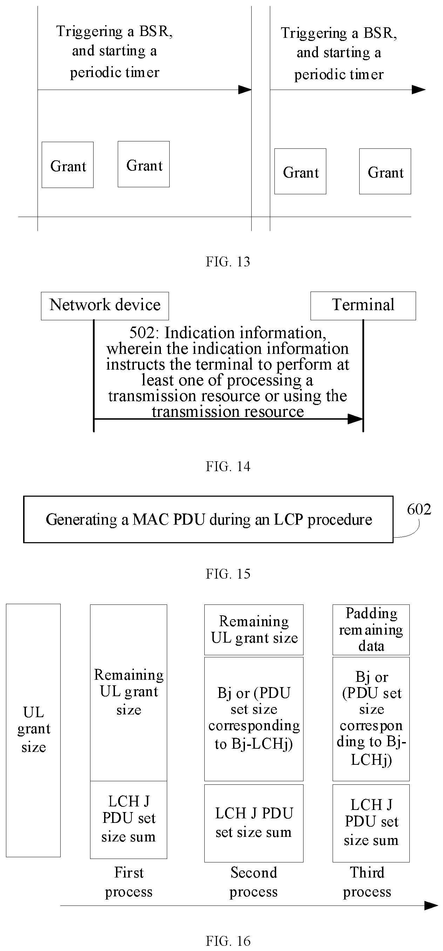

FIG. 12 illustrates a method for configuring a timer according to some embodiments of the present disclosure, and FIG. 13 illustrates a schematic diagram of using a timer according to some embodiments of the present disclosure. The method is applicable to a terminal, and includes the following processes.

**In process 402,** a network device configures a configuration of a timer for a terminal.

In some embodiments, the timer is a timer corresponding to first report information, and a duration of a first timer includes a first duration. For the related description of the first report information, reference may be made to the foregoing content. The details are not described herein any further. For example, the first report information is a BSR.

The timer is a periodic timer or a retransmission timer. In some embodiments, the timer is specific to one of: a MAC entity; a terminal; an LCH; an LCH pair; an LCG; a PDU set; a PDU; or a data burst.

In some embodiments, the first duration is a duration matching a service period or a data rate corresponding to the terminal. In some embodiments, the first duration is an integer duration, or the first duration is a non-integer duration. For example, the first duration is 16.67 ms at 60 fps.

After the first duration configured by the terminal for the timer is received, the terminal configures the timer.

In some embodiments, the method for configuring a timer according to the embodiments of the present disclosure further includes at least one of the following processes.

Optional process 1: The first report information is periodically triggered for reporting in the case that the periodic timer expires.

Optional process 2: The first report information is triggered for reporting in the case that the periodic timer expires, and a second condition is satisfied.

In some embodiments, the first report information is periodic first report information.

Optional process 3: The first report information is triggered for reporting in the case that the retransmission timer expires, and a second condition is satisfied.

Optional process 4: Triggering of another piece of report information in at least one piece of report information is canceled in the case that the at least one piece of report information specific to the same LCG is triggered, and a first MAC CE corresponding to the first report information is generated based on the first report information in the at least one piece of report information.

In some embodiments, the first MAC CE is not multiplexed or the timer is not restarted in the case that the timer is running, and an available UL-SCH is present.

Optional process 5: In the case that the timer is specific to an LCH, an LCH pair, or an LCG, and in the case that the timer expires, first report information corresponding to the LCH, the LCH pair, or the LCG is triggered, or first report information corresponding to the terminal is triggered, or first report information corresponding to a MAC entity is triggered, or first report information corresponding to an LCH, an LCH pair, or an LCG of to-be-transmitted data is triggered.

Optional process 6: The first MAC CE is generated in the case that the first report information is triggered, and a UL-SCH resource carried in the first report information for new transmission bears the first MAC CE and a subheader thereof.

In some embodiments, the terminal further starts or restarts the timer.

Optional process 7: The first MAC CE is generated in the case that the first report information is triggered, a UL-SCH resource carried in the first report information for new transmission bears the first MAC CE and a subheader thereof, and the UL-SCH resource is one of at least one transmission resource.

In some embodiments, the first MAC CE is multiplexed into the UL-SCH resource.

In some embodiments, another transmission resource, other than the UL-SCH resource, in the at least one transmission resource is not used for generating a MAC CE, and/or the another transmission resource is not used for multiplexing a MAC CE, and/or the timer is not started or restarted.

In some embodiments, the terminal further starts or restarts the timer.

In some embodiments, the at least one transmission resource is a resource scheduled or pre-configured by the network device; or the at least one transmission resource is a resource that is scheduled or pre-configured by the network device and that corresponds to a first period or the first duration, or the at least one transmission resource is scheduled or pre-configured by the network device and is a resource within a first period or the first duration.

Optional process 8: SR information corresponding to the first report information is triggered for reporting in the case that the first report information is triggered, and/or no UL-SCH resource for carrying the first report information or no UL-SCH resource for new transmission, and/or the network device configures a dedicated SR resource for the terminal.

In some embodiments, in the case that a transmission resource conflict is present, the SR information is preferentially transmitted, or the transmission priority of the SR information is considered a high priority.

Optional process 9: In the case that the second condition is satisfied, a padding buffer status report (BSR) is not triggered or supported, or padding first report information is not triggered or supported.

For the related description of the second condition, reference may be made to the foregoing content. The details are not described herein any further.

Optional process 10: The format of a BSR to be reported is determined based on a padding bit in the case that a padding BSR is triggered, and the second condition is satisfied.

For the related description of the second condition, reference may be made to the foregoing content. The details are not described herein any further.

In some embodiments, in the case that a BSR MAC CE is generated, an 8-bit buffer size level table is used or a new buffer size level table is added in a buffer size field in the BSR MAC CE.

In some embodiments, the padding BSR is the padding first report information.

In optional process 10, the terminal may determine the format of the BSR to be reported in the following manners.
<1> If the number of padding bits is equal to or greater than the size of an extended short BSR plus a subheader thereof, but is less than the size of a long BSR plus a subheader thereof:
<2> if more than one LCG has data available for transmission when the BSR is to be built:
<3> if the number of padding bits is less than the size of a long truncated BSR with a zero buffer size field plus a subheader thereof:
<4> an extended short truncated BSR of an LCG of a logical channel of a highest priority and data available for transmission are reported.
<3> Else:
<4> A long truncated BSR of the LCG is reported, wherein the logical channel has data available for transmission, following a decreasing order from a logical channel of a highest priority (with or without data available for transmission) in each of LCGs, and in the case of equal priority, in an ascending order of LCGIDs.
<2> Else:
<3> The extended short BSR is reported (report Extended Short BSR).
<1> Else, if the number of padding bits is equal to or greater than the size of a long BSR plus a subheader thereof:
<2> the long BSR is reported for all LCGs having data available for transmission.

It should be understood that, the processes at the terminal side and the network device side can be separately implemented as one embodiment of the method for configuring a timer. For specific description, reference may be made to the foregoing content. The details are not described herein any further.

In summary, in the method for configuring a timer according to the embodiments of the present disclosure, the first duration of the timer is configured by the network device, such that the terminal is capable of modifying a configuration of a BSR and/or a multiplexing condition of a MAC CE, thereby satisfying the transmission requirement of an XR service.

The method for configuring a timer according to the embodiments of the present disclosure may be applied alone, or may be applied in combination with the plurality of information transmission methods provided in the foregoing content, which is not limited herein.

In some embodiments, the method for configuring a timer according to the embodiments of the present disclosure is implemented as follows.

**In process 1,** the network configures a timer with a specific duration for the first report (i.e., the first report information).
(a) The first report may be a BSR.
(b) The timer may be a periodic timer.
i. The timer is specific to one of a MAC entity, UE, an LCH, an LCH pair, or an LCG.
(c) The timer may be a retransmission timer.
i. The timer is specific to one of a MAC entity, UE, an LCH, an LCH pair, or an LCG.
(d) The specific duration may be a duration matching a service period or a data rate, for example, a non-integer duration, such as 16.67 ms at 60 fps.

**In process 2,** the UE receives a network configuration and performs the related procedure. For example, at least one of the following is included.
(a) A periodic first report is triggered in the case that the periodic timer expires.
(b) The first report is triggered in the case that the periodic timer expires, and at least one condition included in the second condition is satisfied. In some embodiments, the first report is the periodic first report.
(c) The first report is triggered in the case that the retransmission timer expires, and at least one condition included in the second condition is satisfied, or in the case that the retransmission timer expires, and at least one condition included in the second condition is satisfied.
(d) In the case that a plurality of first reports specific to the same LCG are triggered and one of the first reports generates a first report MAC CE, triggering of another first report is canceled.
(e) In the case that a plurality of first reports specific to the same LCG are triggered and one of the first reports generates a first report MAC CE, if the timer is running and an available UL-SCH is present, a MAC CE is triggered by a first report that not multiplexed with the LCG or the timer is not restarted.
(f) In the case that the periodic timer is specific to the LCH, the LCH pair, and the LCG, when the periodic timer for the LCH, the LCH pair, and the LCG expires, a first report for the LCH, the LCH pair, and the LCG is triggered, or a first report for the UE/MAC entity is triggered, or a first report for an LCH/LCG/LCH pair having to-be-transmitted data is triggered.
(g) In the case that the retransmission timer is specific to the LCH, the LCH pair, and the LCG, when the retransmission timer for the LCH, the LCH pair, and the LCG expires, a first report for the LCH, the LCH pair, and the LCG is triggered, or a first report for the UE/MAC entity is triggered, or a first report for an LCH/LCG/LCH pair having to-be-transmitted data is triggered.
(h) In the case that the first report is triggered, if a UL-SCH for carrying new transmission can bear a MAC CE for the first report and a subheader thereof, the MAC CE for the first report is generated (further, the MAC CE is multiplexed into the UL-SCH). Further, the timer is started or restarted.
(i) In the case that the first report is triggered, if a UL-SCH for carrying new transmission can bear a MAC CE for the first report and a subheader thereof, and the UL-SCH corresponds to one of a plurality of resources scheduled or pre-configured by the network, the MAC CE for the first report is generated (further, the MAC CE is multiplexed into the UL-SCH). Further, the timer is started or restarted. In some embodiments, another resource of the plurality of resources is not used for generating the MAC CE, and/or multiplexing the MAC CE, and/or starting the timer.
(j) In the case that the first report is triggered, if a UL-SCH for carrying new transmission can bear a MAC CE for the first report and a subheader thereof, and the UL-SCH corresponds to one of a plurality of resources, within a specific period or duration, scheduled or pre-configured by the network, the MAC CE for the first report is generated (further, the MAC CE is multiplexed into the UL-SCH). Further, the timer is started or restarted. In some embodiments, another resource of the plurality of resources is not used for generating the MAC CE, and/or multiplexing the MAC CE, and/or starting the timer.
(k) An SR corresponding to the first report is triggered in the case that the first report is triggered, and/or in the case that no UL-SCH for carrying new transmission can bear the MAC CE of the first report and a subheader thereof, and/or in the case that a dedicated SR is configured. (In some embodiments, in the case of a transmission resource conflict, the SR is preferentially transmitted, or the priority of the SR is considered high).
(l) In the case that at least one condition included in the second condition is satisfied, a padding BSR is not triggered or supported, or a padding first report is not triggered or supported.
(m) In the case that a padding BSR is triggered, and at least one condition included in the second condition is satisfied, the MAC entity determines the format of a BR to be reported based on the bit.

In some embodiments, a buffer size field in a BSR MAC CE uses an existing 8-bit buffer size level table, or uses a new buffer size level table involved in the foregoing embodiments.

In some embodiments, the padding BSR is extended to the padding first report, and the corresponding MAC CE format and/or content of the padding first report multiplexes an existing BSR MAC CE format, or a modification is made on an existing BSR MAC CE format. For example, content of some fields is modified. For example, the LCG is changed into an LC ID or a PDU set identifier; or some new content, such as latency information, is added.

In some embodiments, the UE reports an accurate data volume and/or remaining latency of a finer granularity unit (for example, an LCH or a PDU set). Accordingly, new report triggering criteria is introduced, for example:
(1) a report is triggered in the case that a new PDU set is available; and
(2) a report is triggered in the case that the latency of a PDU set buffered at a MAC layer approaches a PDSB.

### Solution 4: Uplink/downlink transmission, or efficient uplink/downlink transmission, or interaction in the case of uplink/downlink transmission.

FIG. 14 illustrates a method for transmitting information according to some embodiments of the present disclosure. The method includes the following processes.

**In process 502,** a network device transmits indication information to a terminal.

For example, the indication information instructs a terminal to perform at least one of processing a transmission resource or using the transmission resource.

A plurality of optional implementations of process 502 are provided hereinafter.

### 1. In the case of downlink transmission, there are following several optional implementations.

### Implementation 1:

In the case that at least one SPS resource is configured, second indication information is transmitted on a first resource in the at least one SPS resource; or
in the case that at least one SPS resource is configured within one SPS resource period, second indication information is transmitted on a first resource in the at least one SPS resource; or
in the case that at least one SPS resource is configured or at least one SPS resource is configured within one SPS resource period, second indication information is carried in DCI configured when SPS is activated.

The second indication information instructs the terminal to perform at least one of: skipping an SPS resource or a configuration of the SPS resource in the at least one SPS resource; modifying an SPS resource or a configuration of the SPS resource in the at least one SPS resource; skipping an SPS resource or a configuration of the SPS resource within a service or data transmission period; modifying an SPS resource or a configuration of the SPS resource within a service or data transmission period; or adding a new SPS resource or a new configuration of an SPS resource.

### Implementation 2:

In the case that one SPS resource configuration includes a resource location of at least one SPS resource, third indication information is transmitted at a first resource location in the resource location of the at least one SPS resource; or
in the case that one period of one SPS resource configuration includes a resource location of at least one SPS resource, third indication information is transmitted at a first resource location in the resource location of the at least one SPS resource; or
third indication information is carried in DCI configured when SPS is activated.

The third indication information instructs the terminal to perform at least one of: skipping an SPS resource or a configuration of the SPS resource in the at least one SPS resource; modifying an SPS resource or a configuration of the SPS resource within a service or data transmission period; or adding a new SPS resource or a new configuration of an SPS resource.

### Implementation 3:

In the case that at least one PDSCH resource is scheduled over DCI, fourth indication information is transmitted in the DCI or at a second resource location in a resource location of the at least one PDSCH resource; or
in the case that at least one PDSCH resource is scheduled over one piece of DCI, fourth indication information is transmitted in the piece of DCI or at a second resource location in a resource location of the at least one PDSCH resource.

The fourth indication information instructs the terminal to perform at least one of: skipping a PDSCH resource or a configuration of the PDSCH resource in the at least one PDSCH resource; modifying a PDSCH resource or a configuration of the PDSCH resource in the at least one PDSCH resource; skipping a PDSCH resource or a configuration of the PDSCH resource within a service or data transmission period; modifying a PDSCH resource or a configuration of the PDSCH resource within a service or data transmission period; or adding a new PDSCH resource or a new configuration of a PDSCH resource.

### Implementation 4:

In the case that one PDSCH resource is scheduled over DCI, fifth indication information is transmitted in the DCI or at a second resource location in a resource location of the at least one PDSCH resource; or
in the case that one PDSCH resource is scheduled over one piece of DCI, fifth indication information is transmitted in the piece of DCI or at a second resource location in a resource location of the at least one PDSCH resource; or
in the case that one PDSCH resource is periodically scheduled over DCI, fifth indication information is transmitted in the DCI or at a second resource location in a resource location of the at least one PDSCH resource.

The fifth indication information indicates a resource location and/or a resource configuration after one or more PDSCH resources.

In some embodiments, the second indication information, the third indication information, the fourth indication information, or the fifth indication information is one of: DCI indication information dedicated to the terminal; grant indication information dedicated to the terminal; indication information corresponding to an assistance information reporting process; DCI indication information corresponding to a serving cell or a terminal group; or indication information for assistance information reporting and corresponding to the serving cell or the terminal group.

For at least one of the foregoing information, in the case of downlink transmission, the indication information is from the network device, or the network device indicates the corresponding indication information based on the terminal or core network information.

### 2. In the case of uplink transmission, there are following several optional implementations.

### Implementation 1:

In the case that at least one CG resource is configured, at least one of sixth indication information, assistance information, a MAC CE corresponding to the first report information, or CG-UCI corresponding to the first report information is received on a first resource in the at least one CG resource, or at least one of an SR corresponding to the first report information or UCI corresponding to the first report information is received at a location associated with the first resource; or
in the case that at least one CG resource is configured within one CG resource period, at least one of sixth indication information, assistance information, a MAC CE corresponding to the first report information, or CG-UCI corresponding to the first report information is received on a first resource in the at least one CG resource, or at least one of an SR corresponding to the first report information or UCI corresponding to the first report information is received at a location associated with the first resource.

In some embodiments, the terminal is indicated, in DCI configured when a CG is activated, to report at least one of the sixth indication information, the assistance information, the MAC CE corresponding to the first report information, the CG-UCI corresponding to the first report information, the SR corresponding to the first report information, or the UCI corresponding to the first report information.

In some embodiments, the sixth indication information instructs the terminal to perform at least one of: skipping a CG resource or a configuration of the CG resource in the at least one CG resource; modifying a CG resource or a configuration of the CG resource in the at least one CG resource; skipping a CG resource or a configuration of the CG resource within a service or data transmission period; modifying a CG resource or a configuration of the CG resource within a service or data transmission period; or adding a new CG resource or a new configuration of a CG resource.

### Implementation 2:

In the case that one CG configuration includes a resource location of at least one CG resource, at least one of seventh indication information, assistance information, a MAC CE corresponding to the first report information, or CG-UCI corresponding to the first report information is received on a first resource in the at least one CG resource, or at least one of an SR corresponding to the first report information or UCI corresponding to the first report information is received at a location associated with the first resource; or
in the case that one period of one CG resource configuration includes a resource location of at least one CG resource, at least one of seventh indication information, assistance information, a MAC CE corresponding to the first report information, or CG-UCI corresponding to the first report information is received on a first resource in the at least one CG resource, or at least one of an SR corresponding to the first report information or UCI corresponding to the first report information is received at a location associated with the first resource.

In some embodiments, the terminal is indicated, in DCI configured when a CG is activated, to report at least one of the seventh indication information, the assistance information, the MAC CE corresponding to the first report information, the CG-UCI corresponding to the first report information, the SR corresponding to the first report information, or the UCI corresponding to the first report information.

In some embodiments, the seventh indication information instructs the terminal to perform at least one of: skipping a CG resource or a configuration of the CG resource in the at least one CG resource; modifying a CG resource or a configuration of the CG resource in the at least one CG resource; skipping a CG resource or a configuration of the CG resource within a service or data transmission period; modifying a CG resource or a configuration of the CG resource within a service or data transmission period; or adding a new CG resource or a new configuration of a CG resource.

### Implementation 3:

In the case that at least one PUSCH resource is scheduled over DCI, at least one of eighth indication information, assistance information, a MAC CE corresponding to the first report information, or CG-UCI corresponding to the first report information is received on a second resource in the at least one PUSCH resource, or at least one of an SR corresponding to the first report information or UCI corresponding to the first report information is received at a location associated with the second resource; or
in the case that at least one PUSCH resource is scheduled over one piece of DCI, at least one of eighth indication information, assistance information, a MAC CE corresponding to the first report information, or CG-UCI corresponding to the first report information is received on a second resource in the at least one PUSCH resource, or at least one of an SR corresponding to the first report information or UCI corresponding to the first report information is received at a location associated with the second resource.

In some embodiments, the terminal is indicated, in the DCI, to report at least one of the eighth indication information, the assistance information, the MAC CE corresponding to the first report information, the CG-UCI corresponding to the first report information, the SR corresponding to the first report information, or the UCI corresponding to the first report information.

In some embodiments, the eighth indication information instructs the terminal to perform at least one of: skipping a PUSCH resource or a configuration of the PUSCH resource in the at least one PUSCH resource; modifying a PUSCH resource or a configuration of the PUSCH resource in the at least one PUSCH resource; skipping a PUSCH resource or a configuration of the PUSCH resource within a service or data transmission period; modifying a PUSCH resource or a configuration of the PUSCH resource within a service or data transmission period; or adding a new PUSCH resource or a new configuration of a PUSCH resource.

### Implementation 4:

In the case that one PUSCH resource is scheduled over DCI, at least one of ninth indication information, assistance information, a MAC CE corresponding to the first report information, or CG-UCI corresponding to the first report information is received in the DCI or on a second resource in the at least one PUSCH resource, or at least one of an SR corresponding to the first report information or UCI corresponding to the first report information is received at a location associated with the second resource; or
in the case that one PUSCH resource is scheduled over one piece of DCI, at least one of ninth indication information, assistance information, a MAC CE corresponding to the first report information, or CG-UCI corresponding to the first report information is received in the piece of DCI or on a second resource in the at least one PUSCH resource, or at least one of an SR corresponding to the first report information or UCI corresponding to the first report information is received at a location associated with the second resource; or
in the case that one PUSCH resource is periodically scheduled over one piece of DCI, at least one of ninth indication information, assistance information, a MAC CE corresponding to the first report information, or CG-UCI corresponding to the first report information is received in the piece of DCI or on a second resource in the at least one PUSCH resource, or at least one of an SR corresponding to the first report information or UCI corresponding to the first report information is received at a location associated with the second resource.

In some embodiments, the terminal is indicated, in the DCI, to report at least one of the ninth indication information, the assistance information, the MAC CE corresponding to the first report information, the CG-UCI corresponding to the first report information, the SR corresponding to the first report information, or the UCI corresponding to the first report information.

In some embodiments, the ninth indication information indicates information of to-be-transmitted data, or the ninth indication information is used to request for allocation of a PUSCH resource.

For at least one of the foregoing information, in the case of uplink transmission, indication information carried in downlink signaling or channel is from the network device, or the network device indicates the corresponding indication information based on the terminal or core network information. Alternatively/further, for UL, indication information carried in uplink signaling or channel is from the terminal, or the terminal indicates the corresponding indication information based on the network device or core network information.

In some embodiments, the method for transmitting information according to the embodiments of the present disclosure further includes:
allocating a PUSCH resource to the terminal.

For example, the PUSCH resource is used for transmitting at least one of to-be-transmitted data, data of an importance higher than a threshold, data with a transmission latency lower than a threshold, data with a remaining PDB lower than a threshold, data with a PSDB lower than a threshold, data with a remaining transmission latency lower than a threshold, or data with a remaining PSDB lower than a threshold.

In the embodiments of the present disclosure, at least one of the PSDB, the transmission latency, the remaining PSDB, or the remaining transmission latency is determined by MAC or a PDCP through statistics. The MAC or the PDCP determines at least one of the PSDB, the transmission latency, the remaining PSDB, or the remaining latency based on a first duration or a first timer.

In some embodiments, the first duration or the first timer is started in the case that a data packet or a data packet of a PDU set arrives, is stored, or is available. For example, the first duration or the first timer is started in the case that the data packet or the data packet of the PDU set (for example, the first data packet, where for example, whether the PDU set or not is determined based on an SN of the PDU set) arrives, is stored, or is available.

In some embodiments, the transmission latency/remaining transmission latency/PSDB/remaining PSDB/duration is determined in the case that the first report information is triggered, or a MAC CE corresponding to the first report information is generated, or a BSR is triggered, or a BSR MAC CE is generated, or a MAC PDU is packaged.

In some embodiments, the PSDB, the transmission latency, the remaining PSDB, the remaining transmission latency, and the duration are determined in the MAC or the PDCP. For example, the PSDB, the transmission latency, the remaining PSDB, the remaining transmission latency, and the duration are interacted to the MAC by another layer (for example, the PDCP layer).

In some embodiments, whether a data packet belongs to the PDU set is determined by the MAC based on a higher layer packet header, or is determined based on inter-layer interaction, or is determined based on a control PDU.

For descriptions related to the latency in the embodiments of the present disclosure, reference may be made to the foregoing content. The details are not described herein any further.

In some embodiments, the method for transmitting information according to the embodiments of the present disclosure further includes:
generating the MAC CE corresponding to the first report information in the case that at least one of the assistance information, the MAC CE corresponding to the first report information, the SR corresponding to the first report information, or the UCI corresponding to the first report information is triggered, and an available UL-SCH is present; and
triggering the SR corresponding to the first report information in the case that at least one of the assistance information, the MAC CE corresponding to the first report information, the SR corresponding to the first report information, or the UCI corresponding to the first report information is triggered, and no available UL-SCH is present.

In some embodiments, the available UL-SCH multiplexes the first MAC CE.

In some embodiments, the assistance information or the first report information is triggered for reporting in the case that an SR resource dedicated to the terminal is available or a PUCCH resource for an SR dedicated to the terminal is available.

In the plurality of optional implementations described above, for the related description of the assistance information and the first report information, reference may be made to the foregoing content. The details are not described herein any further. It should be understood that, the processes at the terminal side and the network device side can be separately implemented as one embodiment of the method for transmitting information. For specific description, reference may be made to the foregoing content. The details are not described herein any further.

In summary, the method for transmitting information according to the embodiments of the present disclosure provides a plurality of optional implementations respectively for uplink transmission and downlink transmission. It should be understood that, the embodiments of the present disclosure are merely examples of the foregoing embodiments, and for content that is not described in detail in the embodiments of the present disclosure, reference may be made to the description in the foregoing content; in addition, other implementations based on the combination of the foregoing embodiments shall fall within protection scope of the present disclosure. The details are not described herein any further.

In some embodiments, the method for transmitting information according to the embodiments of the present disclosure may be implemented as follows.

### 1. DL.

(a) A plurality of SPS configurations are configured, or a plurality of SPS configurations are configured within one period, and the network transmits the first indication information on a resource for a specific SPS configuration in the plurality of SPS configurations. For example, the first indication information is transmitted on the first SPS, SPS with a small index, or at least one of the first M SPSs.
   Alternatively, the indication information is carried by the network in DCI configured when SPS is activated. The indication information instructs the UE to skip another SPS configuration/resource; or instructs the UE to skip another SPS configuration/resource within the period; or instructs the UE to modify another SPS configuration/resource; or instructs the UE to modify another SPS configuration/resource within the period.
(b) One configured SPS configuration includes a plurality of SPS resource locations, or one period of one configured SPS configuration includes a plurality of SPS resource locations, and the network transmits the first indication information at a specific SPS resource location in the plurality of SPS resource locations in one SPS configuration. For example, the first indication information is transmitted at a first SPS location, an SPS location with a small index, or at least one of the first M SPS locations.
   Alternatively, the indication information is carried by the network in DCI configured when SPS is activated. The indication information instructs the UE to skip another SPS configuration/resource; or instructs the UE to skip another SPS configuration/resource within the period.
(c) In the case that a plurality of PDSCH resources are scheduled over DCI, or in the case that a plurality of PDSCH resources are scheduled over one piece of DCI, the indication information is transmitted in the DCI or at a specific PDSCH resource location in a plurality of PDSCH resource locations.
   The specific PDSCH resource location is at least one of the first PDSCH location, a PDSCH location with a small index, or the first M PDSCH locations. The transmitted indication information instructs the UE to skip another PDSCH configuration/resource; or instructs the UE to skip another PDSCH configuration/resource within the period; or instructs the UE to modify another PDSCH configuration/resource; or instructs the UE to modify another PDSCH configuration/resource within the period.
(d) In the case that one PDSCH resource is scheduled over DCI, or one PDSCH resource is scheduled over one piece of DCI, or one PDSCH resource is periodically scheduled over DCI, or in the case that one PDSCH resource is scheduled over one piece of periodic DCI, the indication information is transmitted in the DCI or at a specific PDSCH resource location in a plurality of PDSCH resource locations.
   The specific PDSCH resource location is at least one of the first PDSCH location, a PDSCH location with a small index, or the first M PDSCH locations. The transmitted indication information indicates a resource location/configuration of a subsequent PDSCH. In some embodiments, in the case that a PDSCH resource currently scheduled over DCI is sufficient, the network does not need to carry the indication information.

### 2. UL.

(a) A plurality of CG configurations are configured, or a plurality of CG configurations are configured within one period, and the UE transmits the first indication information on a resource for a specific CG configuration in the plurality of CG configurations. For example, the first indication information, the assistance information (refer to the foregoing content), or the MAC CE/SR/UCI of the first report (refer to the foregoing content) is transmitted on the first CG, CG with a small index, or at least one of the first M CGs.
   In some embodiments, the UE is indicated, in DCI configured when CG is activated, by the network to report the first indication information, the assistance information, or the MAC CE/SR/UCI of the first report. The first indication information instructs the UE to skip another CG configuration/resource, or skip another CG configuration/resource within the period; or instructs to modify a parameter or a parameter value of another CG configuration/resource; or instructs to modify a parameter or a parameter value of another CG configuration/resource within the period.
(b) One configured CG configuration includes a plurality of CG resource locations, or one period of one configured CG configuration includes a plurality of CG resource locations, and the UE transmits the first indication information at a specific CG resource location in the plurality of CG resource locations in one CG configuration. For example, the first indication information, the assistance information (refer to the foregoing content), or the MAC CE/SR/UCI of the first report (refer to the foregoing content) is transmitted at a first CG location, a CG location with a small index, or at least one of the first M CG locations.
   In some embodiments, the UE is indicated, in DCI configured when CG is activated, by the network to report the first indication information, the assistance information, or the MAC CE/SR/UCI of the first report. The first indication information instructs the UE to skip another CG configuration/resource, or skip another CG configuration/resource within the period; or instructs to modify a parameter or a parameter value of another CG configuration/resource; or instructs to modify a parameter or a parameter value of another CG configuration/resource within the period.
(c) In the case that a plurality of PUSCH resources are scheduled over DCI, or in the case that a plurality of PUSCH resources are scheduled over one piece of DCI, the first indication information, the assistance information (refer to the foregoing content), or the MAC CE/SR/UCI of the first report (refer to the foregoing content) is transmitted at a specific PUSCH resource location in a plurality of PUSCH resource locations.
   In some embodiments, the UE is indicated, in the DCI, by the network to report the first indication information, the assistance information, or the MAC CE/SR/UCI of the first report. The specific PDSCH resource location is at least one of the first PUSCH location, a PUSCH location with a small index, or the first M PUSCH locations. The first indication information instructs the UE to skip another CG configuration/resource, or skip another CG configuration/resource within the period; or instructs to modify a parameter or a parameter value of another CG configuration/resource; or instructs to modify a parameter or a parameter value of another CG configuration/resource within the period.
(d) In the case that one PUSCH resource is scheduled over DCI, or one PUSCH resource is scheduled over one piece of DCI, or one PUSCH resource is periodically scheduled over DCI, or in the case that one PUSCH resource is scheduled over one piece of periodic DCI, the second indication information, the assistance information (refer to the foregoing content), or the MAC CE/SR/UCI of the first report (refer to the foregoing content) is transmitted at a specific PUSCH resource location in a plurality of PUSCH resource locations.
   In some embodiments, the UE is indicated, in the DCI, by the network to report the second indication information, the assistance information, or the MAC CE/SR/UCI of the first report. The specific PUSCH resource location is at least one of the first PUSCH location, a PUSCH location with a small index, or the first M PUSCH locations. The second indication information indicates information of to-be-transmitted data, or request for allocation of more PUSCH resources/more PUSCH resources within a current period. In some embodiments, the network allocates, based on the report, more PUSCH resources to transmit remaining data, or transmit important data, or transmit data with a high transmission latency requirement/a small remaining PDB/a short remaining latency. In some embodiments, in the case that a PUSCH resource currently scheduled over DCI is sufficient, the UE does not need to trigger and/or report the information.
(e) In the case that the assistance information or the MAC CE/SR/UCI of the first report is triggered, if an available UL-SCH is present, a corresponding MAC CE is generated (using the UL-SCH to multiplex the MAC CE); otherwise, a corresponding SR is triggered.
(f) The assistance information or the first report is triggered in the case that a dedicated SR resource or a PUCCH resource of a dedicated SR is available. The assistance information or content of the first report is related to the dedicated SR. Accordingly, the dedicated SR is triggered.

### Solution 5: Content related to an LCP procedure.

In NR, the terminal needs to determine, based on an uplink transmission resource configured by the network device, a transmitted data volume on each logical channel in a MAC PDU for initial transmission. In some embodiments, the terminal further needs to allocate a resource to a MAC CE. To achieve multiplexing of an uplink logical channel, a priority needs to be assigned to each uplink logical channel.

FIG. 15 illustrates a method for transmitting information according to some embodiments of the present disclosure. The method is applicable to a terminal, and includes the following processes.

**In process 602,** a MAC PDU is generated during an LCP procedure.

In some embodiments, before the LCP procedure is performed, the terminal needs to receive an uplink grant (UL grant), for new transmission, from a network device.

The terminal performs the LCP procedure based on information of different PDUs or PDU sets and/or a mapping relationship between a PDU or a PDU set and a QoS flow/LCH.

In some embodiments, the method for transmitting information according to the embodiments of the present disclosure further includes:
performing the LCP procedure based on at least one of information of a data packet or a PDU, information of a PDU set, a first mapping relationship between the PDU and a quality of service (QoS) flow, a second mapping relationship between the PDU and a LCH, a third mapping relationship between the PDU set and the QoS flow, or a fourth mapping relationship between the PDU set and the LCH.

In some embodiments, the method for transmitting information according to the embodiments of the present disclosure further includes:
determining at least one of the information of the data packet or the PDU, the information of the PDU set, the first mapping relationship, the second mapping relationship, the third mapping relationship, or the fourth mapping relationship based on at least one of an RLC packet header, a PDCP packet header, a Service Data Adaptation Protocol (SDAP) packet header, or a higher layer control PDU; or
determining at least one of the information of the data packet or the PDU, the information of the PDU set, the first mapping relationship, the second mapping relationship, the third mapping relationship, or the fourth mapping relationship based on inter-layer interaction of the terminal; or
determining at least one of the first mapping relationship, the second mapping relationship, the third mapping relationship, or the fourth mapping relationship based on a radio resource control (RRC) configuration; and determining the information of the data packet or the PDU, and/or the PDU set based on at least one of a higher layer packet header, inter-layer interaction of the terminal, or a higher layer control PDU.

In some embodiments, in the LCP procedure, a first PDU is prioritized, or a first PDU set is prioritized, or an LCH priority is prioritized. Specific implementations are as follows.

In the LCP procedure, the first PDU is prioritized, or an LCH corresponding to the first PDU is prioritized, or data corresponding to the first PDU is preferentially put into the MAC PDU, or the priority of an LCH or an LCH group corresponding to the first PDU is adjusted to a high priority, or the first PDU set is prioritized, or an LCH corresponding to the first PDU set is prioritized, or data corresponding to the first PDU set is preferentially put into the MAC PDU, or the priority of an LCH in the MAC PDU or the LCP procedure is adjusted, or the priority of an LCH or an LCH group corresponding to the first PDU set is adjusted to a high priority.

Alternatively, in the LCP procedure, the first PDU is assigned a secondary priority, or an LCH of the first PDU is assigned a secondary priority, or a secondary priority is assigned to putting data corresponding to the first PDU into the MAC PDU, or the priority of an LCH or an LCH group corresponding to the first PDU is adjusted to a secondary high priority, or the first PDU set is assigned a secondary priority, or an LCH corresponding to the first PDU set is assigned a secondary priority, or a secondary priority is assigned to putting data corresponding to the first PDU set into the MAC PDU, or the priority of an LCH or an LCH group corresponding to the first PDU set is adjusted to a secondary high priority.

The first PDU set is a specified PDU set and/or an associated PDU set; and the first PDU is a specified PDU or a specified data packet. In some embodiments, the specified PDU set is a data packet with a third identifier, or the specified PDU set is a first data packet; or the specified PDU is a data packet with a third identifier, or the specified PDU is a first data packet. The third identifier is one of an importance identifier, a priority identifier, or a latency value.

In some embodiments, the first data packet is one of: a data packet of importance higher than a threshold; a data packet of a priority higher than a threshold; a data packet with a latency requirement higher than a threshold; a data packet with a PSDB less than a threshold; a data packet with a latency less than a threshold; a data packet with a remaining latency less than a threshold; a data packet with the latency higher than a first threshold and lower than a second threshold; a data packet that does not satisfy a PSDB requirement; a data packet that does not satisfy the PSDB requirement after a first time; or a data packet that does not satisfy the PSDB requirement within the first duration.

For example, the first data packet is a specific data packet. The specific data packet is one of data packets of importance or prioritization, data packets with a high latency requirement, with a small PSDB, with a latency or a remaining latency less than a threshold, with a small latency or a remaining latency(less than others, other LCHs, or other LCHs of the same priority), with a small PSDB or a PSDB less than a threshold, with a latency greater than a threshold 1 and less than a threshold 2, or data packets that do not satisfy or are about to fail satisfying the PSDB requirement.

In the embodiments of the present disclosure, at least one of a PSDB, a latency, a remaining PSDB, or a remaining latency is determined by MAC or a PDCP through statistics. The MAC or the PDCP determines at least one of the PSDB, the latency, the remaining PSDB, or the remaining latency based on a first duration or a first timer.

In some embodiments, the first duration or the first timer is started in the case that a data packet or a data packet of a PDU set arrives, is stored, or is available. For example, the first duration or the first timer is started in the case that the data packet or the data packet of the PDU set (for example, the first data packet, where for example, whether the PDU set or not is determined based on an SN of the PDU set) arrives, is stored, or is available.

In some embodiments, the latency/remaining latency/PSDB/remaining PSDB/duration is determined in the LCP procedure or in the case that a MAC PDU is packaged.

In some embodiments, the PSDB, the latency, the remaining PSDB, the remaining latency, and the duration are determined in the MAC or the PDCP. For example, the PSDB, the latency, the remaining PSDB, the remaining latency, and the duration are interacted to the MAC by another layer (for example, the PDCP layer).

In some embodiments, whether a data packet belongs to the PDU set is determined by the MAC based on a higher layer packet header, or is determined based on inter-layer interaction, or is determined based on a control PDU.

For descriptions related to the latency in the embodiments of the present disclosure, reference may be made to the foregoing content. The details are not described herein any further.

In some embodiments, in the LCP procedure, a quantity of available tokens in a token bucket corresponding to a logical channel further needs to be considered, specifically as follows.

In the LCP procedure, the size of a PDU set corresponding to a first logical channel is prioritized before a first variable is subtracted from the size of the MAC PDU, or the size of a first associated PDU set corresponding to a first logical channel is prioritized before a first variable is subtracted from the size of the MAC PDU; or
in the LCP procedure, the size of a PDU set corresponding to a first logical channel is considered after a first variable is subtracted from the size of the MAC PDU, or the size of a first associated PDU set is considered after a first variable is subtracted from the size of the MAC PDU; or
in the LCP procedure, the size of a PDU set corresponding to a second logical channel is prioritized before a second variable is subtracted from the size of the MAC PDU, or the size of a second associated PDU set corresponding to a second logical channel is prioritized before a second variable is subtracted from the size of the MAC PDU; or
in the LCP procedure, the size of a PDU set corresponding to a second logical channel is considered after a second variable is subtracted from the size of the MAC PDU, or the size of a second associated PDU set is considered after a second variable is subtracted from the size of the MAC PDU; or
in the LCP procedure, the size of a PDU set corresponding to a first logical channel and a second logical channel having an association relationship is prioritized before a first variable and a second variable are subtracted from the size of the MAC PDU, or the size of a third associated PDU set corresponding to a first logical channel and a second logical channel having an association relationship is prioritized before a first variable and a second variable are subtracted from the size of the MAC PDU; or
in the LCP procedure, the size of an associated PDU set corresponding to a first logical channel and a second logical channel having an association relationship is prioritized after a first variable and a second variable are subtracted from the size of the MAC PDU, or the remaining size of a third associated PDU set is prioritized after a first variable and a second variable are subtracted from the size of the MAC PDU.

The first variable indicates the quantity of available tokens in a token bucket corresponding to the first logical channel, the second variable indicates the quantity of available tokens in a token bucket corresponding to the second logical channel, the first logical channel is a logical channel corresponding to a specified PDU set, and the second logical channel is a logical channel corresponding to an associated PDU set.

In some embodiments, the association relationship between the first logical channel and the second logical channel is determined based on at least one of an RRC configuration, an RRC packet header, a data packet header, the inter-layer interaction of the terminal, or the higher layer control PDU.

In some embodiments, in the LCP procedure or in a MAC PDU packaging process, the MAC PDU carries indication information, wherein the indication information is used to request the network device to allocate a transmission resource.

The indication information is carried in the case that one of the following conditions is satisfied: a specified PDU is present; an associated PDU is present; the associated PDU set is present and part of or all data in the associated PDU set is unable to be carried in the MAC PDU; a specified PDU set is present; all or part of data in the specified PDU set is not carried in the MAC PDU; or all or part of data in the specified PDU is not carried in the MAC PDU.

In some embodiments, the indication information is one of a request indication, assistance information, or first report information. For the related description of the assistance information and the first report information, reference may be made to the foregoing content. The details are not described herein any further.

In some embodiments, the indication information is one of a MAC CE, an SR, UCI, CG-UCI, or PUSCH-UCI corresponding to the first report information.

In some embodiments, in the LCP procedure, in the case that a remaining resource is present in the MAC PDU, a first PDU is prioritized, or data or remaining data in the first PDU is preferentially put into the MAC PDU, or a first PDU set is prioritized, or data or remaining data in the first PDU set is preferentially put into the MAC PDU, wherein the first PDU set is a specified PDU set and/or an associated PDU set.

With reference to FIG. 16, the embodiments of the present disclosure provide two optional processing manners for a logical channel priority.

### Processing manner 1:

In some embodiments, the method for transmitting information according to the embodiments of the present disclosure further includes:
determining the size of remaining data in a PDU or a PDU set in a third logical channel in the case that data in the PDU or the PDU set in the third logical channel is multiplexed into the size of MAC PDU; and
subtracting the size of the remaining data in the PDU or the PDU set in the third logical channel from a third variable, wherein
the third variable indicates the quantity of available tokens in a token bucket corresponding to the third logical channel.

Based on the foregoing content, taking a logical channel j as an example, in the case that an uplink grant indicating new transmission is received, the terminal performs logical channel prioritization processing based on the following processes.

Process 1: For all logical channels with Bj>0, resources are allocated in a descending priority order from high to low, wherein a resource allocated to each logical channel can only satisfy a PBR requirement, that is, the resource is allocated to the logical channel based on a quantity of tokens in a PBR token bucket corresponding to the logical channel. In the case that a PBR of a specific logical channel is set to infinity, only when a resource requirement of the logical channel is satisfied, a logical channel of a lower priority than the logical channel is considered.

Process 2: The size of all MAC SDUs multiplexed into a MAC PDU in process 1 of the logical channel j is subtracted from Bj.

Process 3: The size of data, in a PDU set in the logical channel j, multiplexed into the MAC PDU is determined, and the size of remaining data in the PDU set in the logical channel j is determined. The size of the remaining data in the PDU set in the logical channel j is subtracted from Bj.

Process 4: In the case that there are remaining uplink resources after processes 1 to 3 are performed, the remaining resources are sequentially allocated to each logical channel in a descending logical channel priority order from high to low regardless of the size of Bj. Only in the case that data on a logical channel of a high priority is all transmitted and the uplink grant is not exhausted, the logical channel with lower priority can be served. That is, in this case, the terminal maximizes data transmission for the logical channel of a high priority.

### Processing manner 2:

In some embodiments, the method for transmitting information according to the embodiments of the present disclosure further includes:
allocating a resource to at least one logical channel based on the size of a PDU or a PDU set corresponding to the at least one logical channel.

In some embodiments, the size of a MAC service data unit (MAC SDU) multiplexed into the MAC PDU in a fourth logical channel is subtracted from a fourth variable.

In some embodiments, the resource is allocated to the at least one logical channel based on a result acquired by subtracting the size of a PDU or a PDU set that has been allocated to a logical channel from the quantity of tokens in a token bucket corresponding to the logical channel.

Based on the foregoing content, still taking a logical channel j as an example, in the case that an uplink grant indicating new transmission is received, the terminal performs logical channel prioritization processing based on the following processes.

Process 1: For all logical channels with Bj>0, resources are allocated in a descending priority order from high to low, wherein a resource allocated to each logical channel can only satisfy a PDU set requirement, that is, the resource is allocated to the logical channel based on the size of a PDU set corresponding to the logical channel. The size of all MAC SDUs multiplexed into a MAC PDU in this process of the logical channel j is subtracted from Bj.

Process 2: For all logical channels with Bj>0, resources are allocated in a descending priority order from high to low, wherein a resource allocated to each logical channel can only satisfy a PBR requirement, that is, the resource is allocated to the logical channel based on the quantity of tokens in a PBR token bucket corresponding to the logical channel, or the resource is allocated to the logical channel based on a result acquired by subtracting the size of the PDU set allocated to the logical channel in process 1 from the quantity of tokens in a PBR token bucket corresponding to the logical channel. In the case that a PBR of a specific logical channel is set to infinity, only when a resource requirement of the logical channel is satisfied, a logical channel of a lower priority than the logical channel is considered.

Process 3: The size of all MAC SDUs multiplexed into a MAC PDU in process 2 of the logical channel j is subtracted from Bj.

Process 4: In the case that there are remaining uplink resources after processes 1 to 3 are performed, the remaining resources are sequentially allocated to each logical channel in a descending logical channel priority order from high to low regardless of the size of Bj. Only in the case that data on a logical channel of a high priority is all transmitted and the uplink grant is not exhausted, the logical channel with lower priority can be served. That is, in this case, the terminal maximizes data transmission for the logical channel of a high priority.

In summary, in the method according to the embodiments of the present disclosure, by enhancing the LCP procedure, differentiated processing between different PDUs or PDU sets mapped to the same LCH or QoS flow is ensured. It should be understood that, the method according to the embodiments of the present disclosure may be implemented in combination with the foregoing embodiments. The details are not described herein any further.

In some embodiments, taking a PDU set as an example, the method according to the embodiments of the present disclosure may be implemented as follows.

**In process 1,** UE receives an uplink grant that can be used for new transmission.

**In process 2,** the UE generates a MAC PDU for transmission by performing an LCP procedure.

In some embodiments, the UE performs the LCP procedure based on information of different PDUs and/or a mapping relationship between a PDU set and a QoS flow/LCH. The LCP procedure includes at least one of the following processes.
(a) The UE determines the information of different PDU sets and/or the mapping relationship between a PDU set and a QoS flow/LCH based on an RLC/PDCP/SDAP packet header or a higher layer control PDU; or the UE determines the information of different PDU sets and/or the mapping relationship between a PDU set and a QoS flow/LCH based on inter-layer interaction inside the UE; or the UE determines the mapping relationship between a PDU set and a QoS flow/LCH based on an RRC configuration, and determines the information of different PDU sets based on a higher layer packet header/inter-layer interaction/higher layer control PDU.
(b) In the LCP procedure, the UE prioritizes a specific PDU set, or preferentially puts data in a specific PDU set into the MAC PDU, or adjusts an LCH priority in the MAC PDU or a current LCP procedure, or adjusts the priority of an LCH/LCH group corresponding to a specific PDU set to be high or highest. The specific PDU set is a data packet with a specific identifier, or an associated PDU set; and the specific identifier may be importance, a priority, a latency value, or the like.
(c) In the LCP procedure, the UE prioritizes a specific PDU set, or preferentially puts data in a specific PDU set into the MAC PDU, or prioritizes the size of a specific PDU set corresponding to an LCH J before Bj (specific to the LCH j) is subtracted from the size of the MAC PDU. Alternatively, in the LCP procedure, the UE gives a lower priority to a specific PDU set, or gives a lower priority to putting data in a specific PDU set into the MAC PDU, or considers the size of a specific PDU set (or the remaining size of the PDU set) corresponding to an LCH J after Bj (specific to the LCH j) is subtracted from the size of the MAC PDU. The specific PDU set is a data packet with a specific identifier, or an associated PDU set; and the specific identifier may be importance, a priority, a latency value, or the like.
(d) In the LCP procedure, the UE prioritizes an associated PDU set, or preferentially puts data in an associated PDU set into the MAC PDU, or prioritizes sizes of associated PDU sets corresponding to associated LCHs j and k before Bj (specific to the LCH j) and Bk (specific to the LCH k) are subtracted from the size of the MAC PDU. Alternatively, in the LCP procedure, the UE gives a lower priority to an associated PDU set, or gives a lower priority to putting data in an associated PDU set into the MAC PDU, or considers sizes of specific PDU sets corresponding to an LCH j and an LCH k (or the remaining size of the PDU set) after Bj (specific to the LCH j) and Bk (specific to the LCH k) are subtracted from the size of the MAC PDU. In some embodiments, an association relationship between the LCHs j and k is determined based on an RRC configuration, or is determined based on a packet header, or is determined based on inter-layer interaction of the UE, or is determined based on a higher layer control PDU.
(e) In the LCP procedure or the MAC PDU packaging process, the UE carries indication information in the MAC PDU in the case that the UE finds that the associated PDU set is present, or finds that the associated PDU set is present and the data in the associated PDU set cannot all be carried in the MAC PDU, or finds that the associated PDU set is present and part of the data in the associated PDU set cannot be carried in the MAC PDU, or finds that the specific PDU set is present, or finds that the data in the specific PDU set cannot all be carried in the MAC PDU. The indication information is used to request the network device to allocate a transmission resource. In some embodiments, the indication information is a request indication of several bits (for example, 1 bit); or the indication information is the assistance information (refer to the foregoing content); or the indication information is the MAC CE/SR/UCI corresponding to the first report information (refer to the foregoing content).
(f) In the LCP procedure, in the case that there is still a remaining resource after the current process 1/2 is performed, the UE prioritizes the specific PDU set (or remaining data in the PDU set), or preferentially puts the data in the specific PDU set (or remaining data in the PDU set) into the MAC PDU, or prioritizes the associated PDU set (or remaining data in the PDU set), or preferentially puts the data in the associated PDU set (or remaining data in the PDU set) into the MAC PDU.

In some embodiments, in the LCP procedure, the UE takes a remaining latency of a PDU set/LCH/LCG into account; or
in the LCP procedure, the UE takes a remaining latency of a PDU set/LCH/LCG into account based on an indication/enabler/parameter.

The indication/enabler/parameter may be from a gNB or pre-configured at the UE.

Solution 6: Content related to data packet processing.

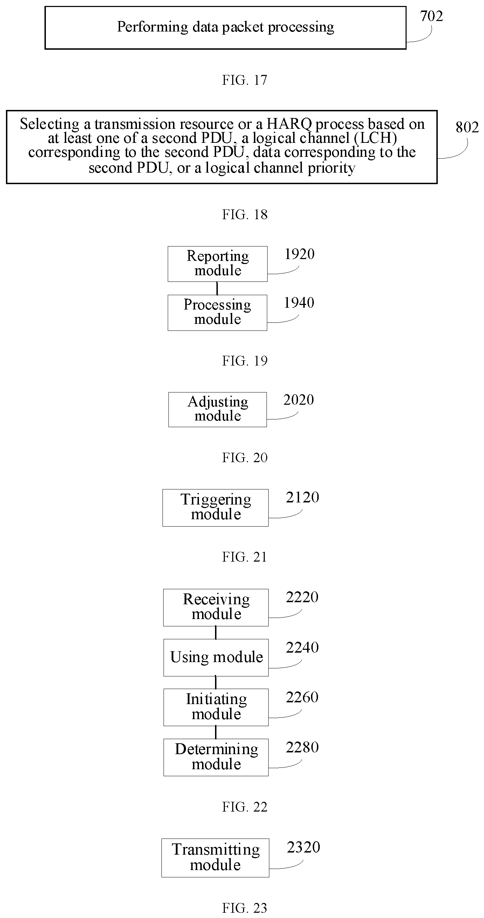

FIG. 17 illustrates a method for processing a data packet according to some embodiments of the present disclosure. The method includes the following processes.

**In process 702,** data packet processing is performed.

In some embodiments, the data packet processing is performed by a receiver and/or a transmitter. The receiver may be a terminal or a network device, and the transmitter may also be a terminal or a network device.

In some embodiments, the data packet processing includes at least one of: determining to perform the data packet processing; determining a manner of performing the data packet processing; determining to perform packet discarding processing; or determining a manner of performing the packet discarding processing. The packet discarding processing includes discarding an SDU and/or discarding a PDU corresponding to the SDU.

For example, the network device and/or the terminal determines whether to perform the data packet processing; for another example, the network device and/or terminal determines how to perform the data packet processing; for still another example, the network device and/or the terminal determines whether to perform the packet discarding processing; and for yet another example, the network device and/or the terminal determines how to perform the packet discarding processing.

In some embodiments, process 702 is implemented as follows.

The transmitter discovers or determines a data packet, and instructs the receiver to process the data packet; or
the receiver discovers or determines a data packet, and instructs the transmitter to process the data packet; or
·the transmitter discovers or determines a data packet, and the transmitter processes the data packet; or
·the receiver discovers or determines a data packet, and the receiver processes the data packet; or
·the transmitter discovers or determines a data packet, and the transmitter and the receiver process the data packet; or
·the receiver discovers or determines a data packet, and the transmitter and the receiver process the data packet.

For example, the data packet processing is discovered/determined by the transmitter that instructs the receiver for processing; for another example, the data packet processing is discovered/determined by the receiver that instructs the transmitter for processing; for still another example, the data packet processing is discovered/determined by the transmitter, and the transmitter and the receiver both perform processing; and for yet another example, the data packet processing is discovered/determined by the receiver, and the transmitter and the receiver both perform processing.

In some embodiments, process 702 is implemented as:
determining that the data packet processing is to be performed and/or performing the data packet processing in the case that a fourth condition is satisfied; or
determining that the packet discarding processing is to be performed and/or performing the packet discarding processing in the case that a fourth condition is satisfied.

The fourth condition includes at least one of:
at least one data packet in an associated PDU set is lost;
a data packet at a first location in the associated PDU set is lost;
a first data packet in the associated PDU set is lost;
the associated PDU set exceeds a first PSDB requirement;
a transmission duration, a reception duration, or a storage duration of the associated PDU set is not less than a packet discarding duration of a PDU set;
the transmission duration, the reception duration, or the storage duration of the associated PDU set is not less than a second PSDB requirement;
at least one PDU in the associated PDU set is confirmed to have been not needed;
a received PDU is used to decode or recover a PDU set or a part of a PDU set;
a part of data packets in the associated PDU set is discovered or confirmed;
a part of data packets in the associated PDU set is discovered or confirmed to have been lost;
N associated PDUs or data packets are transmitted or successfully transmitted;
N associated PDUs or data packets are received;
a PSDB duration is reached;
the packet discarding duration is reached;
an application layer or the network device configures the data packet processing to be enabled;
the application layer or the network device configures the quantity corresponding to data packets; or
·the application layer or the network device configures to second indication information or a first operation to be enabled.

Descriptions related to the first operation are provided hereinafter.

In some embodiments, a data packet for performing the data packet processing includes at least one of: a data packet in a corresponding PDU set; a data packet without a data packet SN in the corresponding PDU set; a data packet without a PDCP SN in the corresponding PDU set; a data packet, in the corresponding PDU set, not submitted to a lower layer; a data packet, in the corresponding PDU set, not transmitted or not successfully transmitted; a data packet, in the corresponding PDU set, confirmed to have been unsuccessfully transmitted; a data packet corresponding to an SN carried in the second indication information; or a data packet associated with the SN.

In some embodiments, process 702 is implemented as follows.

The transmitter considers that a SDU with an indicated SN or an associated SN is successful, ended, or not needed; or
the transmitter indicates to a higher layer that a PDU with an indicated SN or an associated SN is successful, ended, or not needed; or
the receiver considers that an SDU with an indicated SN or an associated SN is placed in a buffer; or
the receiver considers that an SDU with an indicated SN or an associated SN is received, ended, or not needed; or
the receiver considers that an SDU with an indicated SN or an associated SN is submitted to a higher layer; or
the transmitter performs packet discarding processing for a PDU corresponding to an SDU/SDU with an indicated SN or an associated SN; or
the receiver performs packet discarding processing for a PDU corresponding to an SDU/SDU with an indicated SN or an associated SN.

In some embodiments, in the case that the method according to the embodiments of the present disclosure is applicable to the transmitter, process 702 is implemented as:
transmitting the second indication information to the receiver, wherein the second indication information instructs the receiver to perform the first operation.

In some embodiments, the second indication information includes at least one of: data packet processing indication information; packet discarding indication information; an SN; or indication information carrying the SN.

Accordingly, transmitting the second indication information to the receiver is implemented as: triggering a status report; or transmitting the data packet processing indication information to the receiver; or transmitting the packet discarding indication information to the receiver.

In some embodiments, the status report is triggered in the case that the fourth condition is satisfied.

For the related description of the fourth condition, reference may be made to the foregoing content. The details are not described herein any further.

In some embodiments, the status report carries data packet transmission information of an associated PDU set; or the status report carries an SN and/or a status of a data packet.

In some embodiments, in the case that the method according to the embodiments of the present disclosure is applicable to the receiver, process 702 is implemented as:

performing the first operation based on the second indication information from the transmitter.

The first operation includes at least one of:
considering that an SDU with an indicated SN or an associated SN is successful, ended, or not needed;
notifying a higher layer that a PDU with an indicated SN or an associated SN is successful, ended, or not needed;
considering that an SDU with an indicated SN or an associated SN is placed in a buffer;
considering that an SDU with an indicated SN or an associated SN is submitted to a higher layer; or
performing packet discarding processing for an PDU corresponding to an SDU/SDU with an indicated SN or an associated SN.

In some other embodiments, process 702 is further implemented as at least one of:
performing packet discarding processing on a second data packet that is not transmitted, not needed, and/or not successfully transmitted;
performing packet discarding processing on an RLC SDU and/or an RLC SDU segment that is not transmitted or submitted to a lower layer;
performing packet discarding processing on a PDCP SDU and/or a PDCP PDU that is not transmitted or submitted to a lower layer; or
skipping performing packet discarding processing on an RLC SDU and/or an RLC SDU segment that is transmitted or submitted to a lower layer.

The second data packet is at least one of the following cases. The second data packet is a data packet in an associated PDU set; the second data packet is a PDU, in the PDU set, not transmitted, not needed, and/or not successfully transmitted; or the second data packet is a PDU set not successfully transmitted; or the second packet is a PDU set that exceeds a PSDB requirement and is not transmitted; or the second data packet is a PDU set that exceeds a PSDB requirement and is not successfully transmitted; or the second data packet is a PDU set that exceeds a packet discarding duration of the PDU set and is not transmitted; or the second data packet is a PDU set that exceeds a packet discarding duration of the PDU set and is not successfully transmitted.

In summary, the method for processing a data packet provided in the embodiments of the present disclosure is a new method for processing a data packet.

In some embodiments, the method may be implemented as follows.

The receiver or the transmitter performs the data packet processing. For example, the UE or a base station performs the data packet processing.

For example, the base station and/or the UE determines whether to perform the data packet processing, and/or how to perform the data packet processing; and for example, the base station and/or the UE determines whether to perform the packet discarding processing and/or how to perform the packet discarding processing.
(a) In some embodiments, the data packet processing is discovered/determined by the transmitter, and the receiver is instructed to perform the data packet processing; or is discovered/determined by the receiver and the transmitter is instructed to perform the data packet processing; or is discovered/determined by the transmitter, and the transmitter and the receiver both perform the data packet processing; or is discovered/determined by the receiver, and the transmitter and the receiver both perform the data packet processing.
(b) In some embodiments, in the case that a fourth condition is satisfied, the data packet processing is determined to be performed and/or the data packet processing is performed, or the packet discarding processing is determined to be performed and/or the packet discarding processing is performed.
   The fourth condition includes at least one of: at least one data packet in the associated PDU set is lost; a data packet at a specific location of the associated PDU set is lost; a data packet/a specific data packet, in the associated PDU set, at least considered important is lost; the associated PDU set exceeds a PSDB requirement; a transmission/reception/storage duration of the associated PDU set is greater than or equal to a packet discarding duration of the PDU set; the transmission/reception/storage duration of the associated PDU set is greater than or equal to a PSDB requirement; at least one PDU in the associated PDU set is considered not needed (or a received PDU is considered capable of recovering the PDU set or a part of the PDU set); a part of data packets in the associated PDU set is discovered or determined; a part of data packets in the associated PDU set is discovered or confirmed to have been lost; a PSDB duration is reached; the packet discarding duration is reached; an application layer or the network configures the data packet processing to be enabled; or the application layer or the network configures a first indication (that is, the second indication information in the embodiments of the present disclosure) or a first operation to be enabled.
(c) In some embodiments, the packet or the data packet includes at least one of: a data packet in a corresponding PDU set; a PDU, in the corresponding PDU set, not transmitted or not successfully transmitted; a data packet corresponding to an SN carried in the first indication or an indication for an peer-terminal to perform the first operation (a PDU or a PDU set, where for example, in the case that it is indicated that a packet with SN=1 is discarded, no longer needed, or considered as received, the receiver considers that the packet with SN=1, or the packet with SN=1 and another packet, associated with the packet, in the corresponding PDU set is discarded, no longer needed, or considered as received), or a data packet associated with the SN carried in the first indication or the indication for the peer-terminal to perform the first operation (a PDU or a PDU set, where for example, in the case that it is indicated that SN = 1, the receiver considers, based on an association, that packets with SN=1 and/or SN=2 are discarded, no longer needed, or considered as received, or a packet with SN=1 and another packet, associated with the packet, in the corresponding PDU set is discarded, no longer needed, or considered as received).
(d) In some embodiments, the data packet processing is performed, or the packet discarding processing includes at least one of the following cases. The transmitter considers that an SDU with an indicated SN or an associated SN is successful, ended, or not needed; or the transmitter indicates to a higher layer that a PDU with an indicated SN or an associated SN is successful, ended, or not needed; or the receiver considers that an SDU with an indicated SN or an associated SN is placed in a buffer; or the receiver considers that an SDU with an indicated SN or an associated SN is received, ended, or not needed; or the receiver considers that an SDU with an indicated SN or an associated SN is submitted to a higher layer; or the transmitter performs packet discarding processing for a PDU corresponding to an SDU/SDU with an indicated SN or an associated SN; or the receiver performs packet discarding processing for a PDU corresponding to an SDU/SDU with an indicated SN or an associated SN.
(e) In some embodiments, the data packet processing is performed, or the packet discarding processing includes at least one of: transmitting the first indication to the peer-terminal, and indicating the peer-terminal to perform the first operation; or performing, by the peer-terminal, the first operation based on the first indication. For example:
   i. transmitting the first indication to the peer-terminal, and/or and indicating the peer-terminal to perform the first operation includes at least one of: triggering a status report, transmitting the first indication information to the peer-terminal, transmitting an indication related to the data packet processing to the peer-terminal, or transmitting information related to packet discarding to the peer-terminal.

For example, the status report is triggered by the receiver (for example, a PDCP receiver) in the case that the fourth condition is satisfied, and the status report includes the data packet transmission information of an associated PDU set. For example, in the status report, an indication corresponding to an SN of the PDCP PDU/SDU of the associated PDU set is an ACK, or in the status report, it is indicated that a data packet in the PDU set/associated PDU set is lost, no longer needed, or received.

For example, the transmitter or the receiver triggers the status report in the case that the fourth condition is satisfied, and the status report includes an SN of a data packet and/or a status of the data packet (the status includes packet discarded, not needed, considered as received, lost, or the like).

ii. transmitting the first indication to the peer-terminal, and/or indicating the peer-terminal to perform the first operation includes at least one of: a data packet processing indication or a packet discarding indication (at least the peer-terminal processes a data packet or discards a data packet, or a local-terminal is indicated that a data packet is processed or discarded), an SN, an indication that a data packet with a specific SN is discarded/received/not needed, or an indication that a data packet with an indicated SN is considered discarded/received/not needed.

iii. In some embodiments, the first operation includes at least one of the following operations. The transmitter considers that the SDU with the indicated SN or the associated SN is successful, ended, or not needed; or the transmitter notifies the higher layer that the PDU with the indicated SN or the associated SN is successful, ended, or not needed; or the receiver considers that the SDU with the indicated SN or the associated SN is placed in a buffer; or the receiver considers that the SDU with the indicated SN or the associated SN is received, ended, or not needed; or the receiver considers that the SDU with the indicated SN or the associated SN is submitted to the higher layer; or the transmitter performs the packet discarding processing for the PDU corresponding to the SDU/SDU with the indicated SN or the associated SN; or the receiver performs the packet discarding processing for the PDU corresponding to the SDU/SDU with the indicated SN or the associated SN.

iv. The packet discarding processing includes: discarding an SDU and/or discarding a PDU corresponding to the SDU.

v. The data packet processing or the packet discarding processing includes: discarding a data packet in at least one of the following cases that the data packet is not transmitted, not needed, or not successfully transmitted. The data packet is a PDU, in the associated PDU set, in at least one of the following cases that the PDU is not transmitted, not needed, or not successfully transmitted; or the data packet is at least one of a PDU set not successfully transmitted, a PDU set that exceeds the PSDB requirement and is not transmitted/not successfully transmitted, or a PDU set that exceeds the packet discarding duration of the PDU set and is not transmitted/not successfully transmitted.

The following are several illustrative examples.

Example 1 (UM RLC receiver): In the case that the fourth condition is satisfied, or in the case that the data packet processing needs to be performed; or in the case that it is considered that an associated PDU is lost, a remaining PDU is not needed, a PDU in a PDU set is lost, a PDU set cannot be decoded, or a remaining PDU is no longer useful or no longer needs to be transmitted; or in the case that the first indication by the peer-terminal is received or the first operation is indicated, the UM RLC receiver performs at least one of:
- considering that a UMD PDU with SN=X(s) corresponding to the PDU set is put in reception buffer;
- skipping performing a reassembly operation and/or skipping submitting a data packet to a higher layer in the case of SN=X(s) corresponding to the PDU set; or
- considering that the reassembly operation has been performed on the data packet and/or the data packet has been submitted to the higher layer in the case of SN=X(s) corresponding to the PDU set.

Example 2 (AM RLC receiver): In the case that the fourth condition is satisfied, or in the case that the data packet processing needs to be performed; or in the case that it is considered that an associated PDU is lost, a remaining PDU is not needed, a PDU in a PDU set is lost, a PDU set cannot be decoded, or a remaining PDU is no longer useful or no longer needs to be transmitted; or in the case that the first indication by the peer-terminal is received or the first operation is indicated, the AM RLC transmitter performs at least one of:
- considering that an ACK is indicated, an ACK is not needed, or an RLC SDU with an SN is received; or considering that an ACK is indicated, an ACK is not needed, or RLC SDUs with all SNs of a related PDU set with an SN are received; or considering that an ACK is indicated, an ACK is not needed, all RLC SDUs not transmitted of a related PDU set with an SN are received, an RLC SDU is successfully transmitted, an RLC SDU is not needed, or an RLC SDU is received;
- notifying a higher layer that the RLC SDU is successfully transmitted, or the RLC SDU is not needed, or the RLC SDU is received; or
- setting TX_Next_Ack equal to an SN of the RLC SDU with the smallest SN, whose SN falls within a range of TX_Next_Ack<=SN<=TX_Next and for which a positive acknowledgment has not been received or not included in the first indication.

Example 3 (AM RLC receiver): In the case that the fourth condition is satisfied, or in the case that the data packet processing needs to be performed; or in the case that it is considered that an associated PDU is lost, a remaining PDU is not needed, a PDU in a PDU set is lost, a PDU set cannot be decoded, or a remaining PDU is no longer useful or no longer needs to be transmitted; or in the case that the first indication by the peer-terminal is received or the first operation is indicated, the AM RLC receiver performs at least one of:
- considering that a UMD PDU with SN=X(s) corresponding to the PDU set is put in reception buffer;
- skipping performing a reassembly operation and/or skipping submitting a data packet to a higher layer in the case of SN=X(s) corresponding to the PDU set; or
- considering that the reassembly operation has been performed on the data packet and/or the data packet has been submitted to the higher layer in the case of SN=X(s) corresponding to the PDU set.

Example 4 (PDCP reception entity): In the case that the fourth condition is satisfied, or in the case that the data packet processing needs to be performed; or in the case that it is considered that an associated PDU is lost, a remaining PDU is not needed, a PDU in a PDU set is lost, a PDU set cannot be decoded, or a remaining PDU is no longer useful or no longer needs to be transmitted; or in the case that the first indication by the peer-terminal is received or the first operation is indicated, the status report is triggered. The status report indicates that states corresponding to SNs of all associated PDUs in a PDU set are ACKs, or states corresponding to SNs of all remaining PDUs in a PDU set are ACKs.

Example 5 (PDCP reception entity): In the case that the fourth condition is satisfied, or in the case that the data packet processing needs to be performed; or in the case that it is considered that an associated PDU is lost, a remaining PDU is not needed, a PDU in a PDU set is lost, a PDU set cannot be decoded, or a remaining PDU is no longer useful or no longer needs to be transmitted; or in the case that the first indication by the peer-terminal is received or the first operation is indicated, the entity performs at least one of:
- considering that an SDU with SN=X(s) corresponding to the PDU set is submitted to a higher layer;
- considering that the SDU with SN=X(s) corresponding to the PDU set is not fixed to the higher layer;
- considering that an SDU of a remaining PDU or a PDU with an indicated SN is submitted to the higher layer; or
- considering that the SDU of the remaining PDU or the PDU with the indicated SN is received.

In some embodiments, several cases/criteria for discarding a PDU set include:
(1) Part of correlated PDUs remains in the case that the PSDB exceeds.
   - In this case, the PDU set (or at least a remaining PDU) may need to be discarded in the case that a discard method is enabled.
(2) Part of the correlated PDUs remains, but there is no opportunity to recover the PDU set.
   - In this case, the PDU set (or at least a remaining PDU) may need to be discarded in the case that a discard method is enabled.
(3) Part of the correlated PDUs remains, but is considered not needed.
   - In this case, the remaining PDU may need to be discarded in the case that the discard method is enabled.

For PDU or PDU set discarding:

UE, a UE PDCP, a transmitting PDCP, or a receiving PDCP considers at least one of: a PDU set-related parameter, a PDU set-related characteristic, or a PDU set-related discarding mechanism.

In some embodiments, a gNB, the PDCP transmission entity, the PDCP reception entity, or a DL PDCP transmission entity discards the remaining PDU of the PDU set or the PDU set; or a gNB, the PDCP transmission entity, the PDCP reception entity, or a DL PDCP transmission entity discards the remaining PDU of the PDU set or the PDU set based on a received, stored, or acquired PDU set-related QoS parameter/indication.

In some embodiments, the UE, the PDCP transmission entity, the PDCP reception entity, or a UL PDCP transmission entity discards the remaining PDU of the PDU set or the PDU set; or the gNB, the PDCP transmission entity, the PDCP reception entity, or a UL PDCP transmission entity discards the remaining PDU of the PDU set or the PDU set based on a received, stored, or acquired parameter/indication from a network or an application layer.

Solution 7: Content related to resource selection.

In some embodiments, the resource selection is transmission resource selection, or is HARQ process or resource selection.

FIG. 18 illustrates a method for selecting a resource according to some embodiments of the present disclosure. The method is applicable to a terminal, and includes the following processes.

**In process 802,** a transmission resource or a hybrid automatic repeat request (HARQ) process is selected based on at least one of a second PDU, an LCH corresponding to the second PDU, data corresponding to the second PDU, or a logical channel priority.

In some embodiments, the method for selecting a resource according to the embodiments of the present disclosure further includes: prioritizing the logical channel priority; or prioritizing the second PDU; or prioritizing the LCH corresponding to the second PDU; or prioritizing the data corresponding to the second PDU.

In some embodiments, the method for selecting a resource according to the embodiments of the present disclosure further includes at least one of:
·prioritizing the logical channel priority, and then considering the second PDU, the LCH corresponding to the second PDU, or the data corresponding to the second PDU;
·prioritizing the second PDU, the LCH corresponding to the second PDU, or the data corresponding to the second PDU, and then considering the logical channel priority;
·prioritizing the LCH corresponding to the second PDU;
·preferentially transmitting a HARQ or resource for data on an LCH corresponding to a second PDU set;
·prioritizing the second PDU;
·preferentially transmitting a HARQ or resource for the data on the LCH corresponding to the second PDU;
·adjusting the logical channel priority; or
·adjusting a priority of the LCH corresponding to the second PDU to a high priority.

In the embodiments of the present disclosure, the second PDU is a specified PDU or a specified data packet. In some embodiments, the specified PDU is a data packet with a third identifier, or the specified PDU is a first data packet. The third identifier is one of an importance identifier, a priority identifier, or a latency value.

In some embodiments, the first data packet is one of: a data packet of importance higher than a threshold; a data packet of a priority higher than a threshold; a data packet with a latency requirement higher than a threshold; a data packet with a PSDB less than a threshold; a data packet with a latency less than a threshold; a data packet with a remaining latency less than a threshold; a data packet with the latency higher than a first threshold and lower than a second threshold; a data packet that does not satisfy a PSDB requirement; a data packet that does not satisfy the PSDB requirement after a first time; or a data packet that does not satisfy the PSDB requirement within the first duration.

For example, the first data packet is a specific data packet. The specific data packet is one of data packets of importance or prioritization, data packets with a high latency requirement, with a small PSDB, with a latency or a remaining latency less than a threshold, with a small latency or a remaining latency(less than others, other LCHs, or other LCHs of the same priority), with a small PSDB or a PSDB less than a threshold, with a latency greater than a threshold 1 and less than a threshold 2, or data packets that do not satisfy or are about to fail satisfying the PSDB requirement.

In the embodiments of the present disclosure, at least one of a PSDB, a latency, a remaining PSDB, or a remaining latency is determined by MAC or a PDCP through statistics. The MAC or the PDCP determines at least one of the PSDB, the latency, the remaining PSDB, or the remaining latency based on a first duration or a first timer.

In some embodiments, the first duration or the first timer is started in the case that a data packet or a data packet of a PDU set arrives, is stored, or is available. For example, the first duration or the first timer is started in the case that the data packet or the data packet of the PDU set (for example, the first data packet, where for example, whether the PDU set or not is determined based on an SN of the PDU set) arrives, is stored, or is available.

In some embodiments, the latency/remaining latency/PSDB/remaining PSDB/duration is determined in the resource selection process.

In some embodiments, the PSDB, the latency, the remaining PSDB, the remaining latency, and the duration are determined in the MAC or the PDCP. For example, the PSDB, the latency, the remaining PSDB, the remaining latency, and the duration are interacted to the MAC by another layer (for example, the PDCP layer).

In some embodiments, whether a data packet belongs to the PDU set is determined by the MAC based on a higher layer packet header, or is determined based on inter-layer interaction, or is determined based on a control PDU.

For descriptions related to the latency in the embodiments of the present disclosure, reference may be made to the foregoing content. The details are not described herein any further.

In summary, a new method for selecting a resource is provided in the embodiments of the present disclosure.

In some embodiments, the resource selection method is implemented as follows.

In the case of resource conflict, or in the case of selection of a resource for preferential transmission, or in a HARQ selection process, a specific PDU or an LCH/data of a specific PDU is used as one of the factors for the selection, or the selection is performed based on an LCH priority and/or a specific PDU or an LCH/data of a specific PDU.

In some embodiments, in the resource selection process, the LCH priority is prioritized, or the specific PDU or the LCH/data of the specific PDU is prioritized. For example, a HARQ or a grant for an LCH of a high priority is preferentially transmitted, or a HARQ or a grant including the specific PDU or the LCH/data of the specific PDU is preferentially transmitted.

In some embodiments, in the resource selection process, the LCH priority is prioritized, and the specific PDU or the LCH/data of the specific PDU is then considered. For example, in HARQ/grant selection for LCHs of the same priority, the specific PDU or the LCH/data of the specific PDU is prioritized.

In some embodiments, in the resource selection process, the specific PDU or the LCH/data of the specific PDU is prioritized, and the LCH priority is then considered. For example, in the case that all HARQs/grants include the specific PDU or the LCH/data of the specific PDU, one of a higher LCH priority is selected.

In some embodiments, in the resource selection process, an LCH corresponding to the specific PDU is prioritized, or a HARQ/resource for data of an LCH corresponding to a specific PDU set is preferentially transmitted, or the specific PDU is prioritized, or a HARQ/resource for data of a specific PDU is preferentially transmitted, or an LCH priority during the current selection is adjusted, or a priority of an LCH/LCH corresponding to the specific PDU is adjusted to a high or highest priority.

In some embodiments, the specific PDU is a PDU, a PDU set, or a data packet.

For example, the specific PDU is a PDU of importance, priority, low-latency, low-PSDB, or the like. Alternatively, the specific PDU is a packet with a specific identifier. The specific identifier includes any one of importance, a priority, a latency value, a PSDB identifier, or the like. Alternatively, the specific PDU is a PDU with a latency, a remaining latency, a remaining PDB, or a remaining PSDB less than a threshold; or the specific PDU is a PDU with a small latency, remaining latency, remaining PDB, or remaining PSDB (less than others, other LCHs, or other LCHs of the same priority); or the specific PDU is one of a PDU with a small PSDB or a PSDB less than a threshold, a PDU with a latency greater than a threshold 1 and less than a threshold 2, a PDU that does not satisfy or is about to fail satisfying a PDB/PSDB requirement, or an associated PDU.

In some embodiments, in a prioritization procedure or HARQ process selection, the UE takes latency information (for example, a remaining duration for waiting) of a PDU set/LCH/LCG/LCH pair into account;
in a prioritization procedure or HARQ process selection, the UE takes latency information (for example, a remaining duration for waiting) of a PDU set/LCH/LCG/LCH pair into account to select a prioritized resource; or
in a prioritization procedure or HARQ process selection, the UE takes latency information (for example, a remaining duration for waiting) of a PDU set/LCH/LCG/LCH pair into account based on an indication/enabler/parameter, or takes latency information into account.

The indication/enabler/parameter may be from the network side (for example, the gNB or a core network), or the indication/enabler/parameter may be from the application layer or an application server, or the indication/enabler/parameter may be pre-configured to the UE.
In some embodiments, solution 1, solution 2, and solution 3 are implemented separately, or are implemented in any combination.

In some embodiments, at least one of solution 1, solution 2, or solution 3 is implemented in any combination with at least one of solution 4 to solution 7.

In some embodiments, for one or more types of information related to solution 1, solution 2, and solution 3, in the case that a network device allocates a transmission resource or allocates a UL transmission resource based on a report, the UL transmission resource carries an indication, wherein the indication indicates a resource type. In some embodiments, the resource type indicates data or an LCH that can be multiplexed onto the UL transmission resource. For the UE, only data or an LCH of a corresponding resource type can be multiplexed onto the UL transmission resource.

In some embodiments, for one or more types of information related to solution 1, solution 2, and solution 3, in the case that a network device allocates a transmission resource or allocates a UL transmission resource based on a report, the UL transmission resource carries an indication, wherein the indication indicates a resource type or a resource indication. In some embodiments, the resource type or the resource indication indicates data or an LCH that can be multiplexed onto the UL transmission resource, or indicates use of a first LCP (LCP enhancement in solution 5) or a first HARQ selection or prioritization procedure (the HARQ selection or priority selection enhancement in solution 7). For the UE, only data or an LCH of a corresponding resource type can be multiplexed onto the UL transmission resource, or the UE performs packaging or resource transmission using a solution corresponding to the resource indication (for example, the LCP, the HARQ selection, or the priority selection).

In some embodiments, in the case that a network device allocates a transmission resource or allocates a UL transmission resource, the UL transmission resource carries an indication, wherein the indication indicates a resource type. In some embodiments, the resource type indicates data or an LCH that can be multiplexed onto the UL transmission resource. For the UE, only data or an LCH of a corresponding resource type can be multiplexed onto the UL transmission resource.

In some embodiments, in the case that a network device allocates a transmission resource or allocates a UL transmission resource, the UL transmission resource carries an indication, wherein the indication indicates a resource type or a resource indication. In some embodiments, the resource type or the resource indication indicates data or an LCH that can be multiplexed onto the UL transmission resource, or indicates use of a first LCP (LCP enhancement in solution 5) or a first HARQ selection or prioritization procedure (the HARQ selection or priority selection enhancement in solution 7). For the UE, only data or an LCH of a corresponding resource type can be multiplexed onto the UL transmission resource, or the UE performs packaging or resource transmission using a solution corresponding to the resource indication (for example, the LCP, the HARQ selection, or the priority selection).

In some other embodiments, the packaging, the resource selection, or the resource transmission is performed based on specific information.

In some embodiments, specific indication information is configured for an LCH, RLC, or a DRB, to indicate a resource type corresponding to the LCH, the RLC, or the DRB. In some embodiments, in the case that the resource type matches (for example, is the same as) a resource type configured or scheduled by the network, the LCH, the RLC, or the DRB is transmitted using a resource configured or scheduled by the network, or is borne/multiplexed on a resource configured or scheduled by the network. In some embodiments, specific information is configured for an LCH, RLC, or a DRB, to indicate a data type corresponding to the LCH, the RLC, or the DRB. In some embodiments, the data type corresponds to information of a PDU set or a data burst, or is information (for example, attributes) of a PDU set or a data burst; or the data type is an identifier supported by a PDU set or a data burst. Alternatively, the data type may be a specific identifier.

In some embodiments, the specific indication information or the specific information is pre-configured, determined by the UE, or configured by RRC.

It should be understood that, in the foregoing embodiments, a plurality of implementations of the method for transmitting information, the method for configuring a timer, the method for processing a data packet, and the method for selecting a resource are provided, and the plurality of implementations described above may be used separately, or performed in a combination of one or more implementations of any one or more of the methods. It can also be understood that, the plurality of implementations may be performed through at least two combinations of the plurality of implementations corresponding to the plurality of methods described above. The separate implementation solution and the combined implementation solutions formed based on at least one implementation provided in the foregoing embodiments both fall within the protection scope of the present disclosure, and are not limited in the present disclosure. The details are not described herein any further.

The following are the apparatus embodiments of the present disclosure. For details not described in the apparatus embodiments, reference may be made to the corresponding descriptions in the foregoing method embodiments. The details are not described herein any further.

FIG. 19 is a schematic diagram of an apparatus for transmitting information according to some embodiments of the present disclosure. The apparatus includes: a reporting module 1920.

The reporting module 1920 is configured to report assistance information, wherein the assistance information indicates service information of a terminal.

In some embodiments, the service information includes at least one of: a service characteristic of the terminal; a service pattern of the terminal; remaining service information of the terminal; or remaining data information of the terminal.

In some embodiments, the reporting module 1920 is configured to report the assistance information in the case that a first condition is satisfied.

In some embodiments, the first condition includes at least one of the following options: a new piece of information is present or arrives; a new piece of information is present or arrives, and a latency of the new piece of information is less than a first value; a piece of information is present in buffer, and a latency of the piece of information is less than a second value; a network device instructs the terminal to report the assistance information; a network device instructs the terminal to report the type of the assistance information; the terminal has a capability of reporting the assistance information; the terminal reports the capability of reporting to the network device; the terminal supports a specified service; the terminal supports a session corresponding to the specified service; the terminal has not reported the assistance information; the assistance information is changed as compared with a history report or a history tendency; the assistance information is changed as compared with information or a tendency before the first condition is satisfied; an SR resource dedicated to the terminal is present; a PUCCH resource for an SR dedicated to the terminal is present; the SR resource dedicated to the terminal is available; or the PUCCH resource for the SR dedicated to the terminal is available.

In some embodiments, the type of the assistance information is one of a service characteristic of the terminal; a service pattern of the terminal; remaining service information of the terminal; or remaining data information of the terminal.

In some embodiments, the specified service is one of an XR service, a media service, a video service, a service with a variable service characteristic, or a service including service flows between which an association relationship is present.

In some embodiments, the SR resource or the PUCCH resource corresponds to at least one of: an LCH; a DRB; a QoS flow; a PDU session; a PDU set; a PDU; a data burst; or a MAC entity.

In some embodiments, the SR resource or the PUCCH resource is associated with at least one of a latency, a remaining latency, a data volume, a remaining data volume, or a service association.

In some embodiments, the assistance information includes at least one of: direction information of a data packet; direction information of a QoS flow; direction information of a data flow; an arrival time of the data packet; an arrival interval of the data packet; an arrival period of the data packet; an arrival pattern of the data packet; a size of the data packet; a size pattern of the data packet; latency tolerance information of the data packet; a QoS flow corresponding to the terminal; a QoS flow corresponding to the data packet; a data flow corresponding to the terminal; a data flow corresponding to the data packet; indication information of the specified service; a remaining data volume; information of a to-be-transmitted volume; latency information of remaining data; latency information of the to-be-transmitted volume; latency information of the data packet; a transmission latency in uplink transmission and/or downlink transmission; or a transmission time difference between a plurality of data flows or a plurality of QoS flows.

In some embodiments, the direction information of the data packet, the direction information of the QoS flow, or the direction information of the data flow indicates uplink transmission corresponding to the data packet, the QoS flow, or the data flow; and/or the direction information of the data packet, the direction information of the QoS flow, or the direction information of the data flow indicates the downlink transmission corresponding to the data packet, the QoS flow, or the data flow.

In some embodiments, the arrival time of the data packet includes at least one of: a starting arrival time of the data packet; an ending arrival time of the data packet; an arrival time of the first data packet in associated data packets; an arrival time of the last data packet in the associated data packets; an arrival time of the first packet within one data burst; or an arrival time of the last packet within one data burst.

In some embodiments, the latency tolerance information includes at least one of: a latency value pre-configured by the network device for the terminal; a latency value required by the terminal; at least one of total latency information, time consumed, waiting time consumed, or remaining latency information; a maximum value in the total latency information, the time consumed, the waiting time consumed, and the remaining latency information; a minimum value in the total latency information, the time consumed, the waiting time consumed, and the remaining latency information; a mean value in the total latency information, the time consumed, the waiting time consumed, and the remaining latency information; a remaining latency of data of a highest priority; a maximum value of the remaining latency of the data of the highest priority; a mean value of the remaining latency of the data of the highest priority; a minimum value of the remaining latency of the data of the highest priority; a remaining latency of data of a lowest priority; a maximum value of the remaining latency of the data of the lowest priority; a mean value of the remaining latency of the data of the lowest priority; a minimum value of the remaining latency of the data of the lowest priority; a remaining latency of data of a highest importance; a maximum value of the remaining latency of the data of the highest importance; a mean value of the remaining latency of the data of the highest importance; a minimum value of the remaining latency of the data of the highest importance; a remaining latency of data of a lowest importance; a maximum value of the remaining latency of the data of the lowest importance; a mean value of the remaining latency of the data of the lowest importance; a minimum value of the remaining latency of the data of the lowest importance; a latency level; a latency grade index; an identifier indicating that a latency is higher than a first latency threshold; or an identifier indicating that a latency is lower than a second latency threshold.

In some embodiments, the latency tolerance information, the remaining data volume, the information of the to-be-transmitted volume, or the latency information of the remaining data is information specific to at least one of: an LCH; a DRB; a QoS flow; a PDU session; a PDU set; a PDU; or a data burst.

In some embodiments, the specified service is one of an XR service, a media service, a video service, a service with a variable service characteristic, or a service including service flows between which an association relationship is present.

In some embodiments, the information of the to-be-transmitted volume is at least one of: a data volume level; a data volume grade index; an identifier indicating that a data volume is higher than a first data volume threshold; or an identifier indicating that a data volume is lower than a second data volume threshold.

In some embodiments, the latency information of the remaining data includes at least one of: at least one of total latency information, time consumed, waiting time consumed, or remaining latency information; a maximum value in the total latency information, the time consumed, the waiting time consumed, and the remaining latency information; a minimum value in the total latency information, the time consumed, the waiting time consumed, and the remaining latency information; a mean value in the total latency information, the time consumed, the waiting time consumed, and the remaining latency information; a remaining latency of data of a highest priority; a maximum value of the remaining latency of the data of the highest priority; a mean value of the remaining latency of the data of the highest priority; a minimum value of the remaining latency of the data of the highest priority; a remaining latency of data of a lowest priority; a maximum value of the remaining latency of the data of the lowest priority; a mean value of the remaining latency of the data of the lowest priority; a minimum value of the remaining latency of the data of the lowest priority; a remaining latency of data of a highest importance; a maximum value of the remaining latency of the data of the highest importance; a mean value of the remaining latency of the data of the highest importance; a minimum value of the remaining latency of the data of the highest importance; a remaining latency of data of a lowest importance; a maximum value of the remaining latency of the data of the lowest importance; a mean value of the remaining latency of the data of the lowest importance; a minimum value of the remaining latency of the data of the lowest importance; a latency level; a latency grade index; an identifier indicating that a latency is higher than a first latency threshold; or an identifier indicating that a latency is lower than a second latency threshold.

In some embodiments, the data packet indicates a data packet corresponding to one of: a PDU set; a PDU; or a data burst.

In some embodiments, the assistance information is reported in one of the following manners: reporting the assistance information over an assistance information reporting process of the terminal; reporting the assistance information by carrying the same in terminal assistance information; reporting the assistance information over a MAC CE; reporting the assistance information over RRC information dedicated to the terminal; reporting the assistance information over UCI dedicated to the terminal; reporting the assistance information periodically; or changing the reporting of the assistance information.

In some embodiments, the MAC CE includes one of: a first MAC CE; a MAC CE used by a BSR; or an enhanced MAC CE.

In some embodiments, in the case that a pre-configured or dynamically scheduled uplink resource includes at least one available resource, or in the case that at least one PDSCH occasion is present, the assistance information is transmitted over one or more transmission resources in first i transmission resources, wherein i is a positive integer greater than 0.

In some embodiments, the assistance information is transmitted on the first transmission resource.

In some embodiments, the reporting module 1920 is further configured to transmit data packet characteristic information when the assistance information is transmitted.

In some embodiments, the data packet characteristic information includes at least one of: an attribute characteristic; an importance characteristic; an association characteristic; a latency characteristic; or a serial number or sequence in a PDU set or a data burst.

In some embodiments, the data packet characteristic information is carried in the assistance information; and the data packet characteristic information is carried in a data packet data unit packet header or a control packet data unit packet header.

In some embodiments, the reporting module 1920 is configured to transmit the assistance information in the case that at least one CG resource or SPS resource is configured.

In some embodiments, the assistance information is transmitted over a first resource in the at least one CG resource or SPS resource.

In some embodiments, the first resource is one of: the first CG resource or SPS resource; a CG resource or SPS resource with an index lower than a preset value; or at least one of the first j CG resources or SPS resources, wherein j is a positive integer greater than 0.

In some embodiments, the assistance information is reported over a dynamically scheduled uplink grant; or the assistance information is reported over one of UCI, a PUCCH resource, or an SR resource.

In some embodiments, the reporting module 1920 is configured to transmit the assistance information in the case that at least one CG resource or SPS resource is configured within one CG resource or SPS resource period.

In some embodiments, the assistance information is transmitted over a first resource location in a resource location of the at least one CG resource or SPS resource.

In some embodiments, the first resource location is one of: a resource location of the first CG resource or SPS resource; or a resource location of at least one resource of the first k CG resources or SPS resources, wherein k is a positive integer greater than 0.

In some embodiments, the assistance information is reported over a dynamically scheduled uplink grant; or the assistance information is reported over one of UCI, a PUCCH resource, or an SR resource.

In some embodiments, the reporting module 1920 is configured to transmit the assistance information in the case that at least one PUSCH resource or PDSCH resource is scheduled over DCI.

In some embodiments, the assistance information is transmitted over a second resource location in the resource locations of the at least one PUSCH resource or PDSCH resource.

In some embodiments, the second resource location is one of: a resource location of the first PUSCH resource or PDSCH resource; or at least one resource location of the first m PUSCH resources or PDSCH resources, wherein m is a positive integer greater than 0.

In some embodiments, the DCI carries first indication information, wherein the first indication information instructs the terminal to report the assistance information.

In some embodiments, the reporting module 1920 is configured to transmit the assistance information in the case that one PUSCH resource or PDSCH resource is scheduled over the DCI, or in the case that one PUSCH resource or PDSCH resource is scheduled over one piece of DCI, or in the case that one PUSCH resource or PDSCH resource is periodically scheduled over the DCI; or the assistance information is transmitted on one PUSCH resource or PDSCH resource in the case that one PUSCH resource or PDSCH resource is scheduled over DCI, or in the case that one PUSCH resource or PDSCH resource is scheduled over one piece of DCI, or in the case that one PUSCH resource or PDSCH resource is periodically scheduled over DCI.

In some embodiments, the DCI carries first indication information, wherein the first indication information instructs the terminal to report the assistance information.

In some embodiments, the apparatus further includes a processing module 1940, configured to: in the case that at least one PDSCH resource is scheduled over DCI, or in the case that at least one PDSCH resource is scheduled over one piece of DCI, or in the case that at least one PDSCH resource is scheduled periodically over DCI, receive indication information delivered by the network device, wherein the indication information indicates whether the terminal skips n PDSCH resources, n being a positive integer greater than 0.

In some embodiments, the n PDSCH resources are at least one of PDSCH resources indicated by the DCI; or the n PDSCH resources are PDSCH resources after the first PDSCH resource.

In some embodiments, the processing module 1940 is further configured to skip the n PDSCH resources based on the indication information.

FIG. 20 is a schematic diagram of an apparatus for transmitting information according to some embodiments of the present disclosure. The apparatus includes: an adjusting module 2020.

The adjusting module 2020 is configured to adjust a transmission resource or a configuration of the transmission resource.

In some embodiments, the adjusting module 2020 is configured to adjust the transmission resource or the configuration of the transmission resource based on the assistance information reported by the terminal, wherein the assistance information indicates the service information of the terminal.

In some embodiments, the adjusting module 2020 is configured to: allocate or schedule the transmission resource; or configure or adjust a configuration parameter or an RRC configuration parameter of the transmission resource; or allocate or schedule the transmission resource based on the assistance information reported by the terminal; or configure or adjust a configuration parameter or an RRC configuration parameter of the transmission resource based on the assistance information.

In some embodiments, the adjusting module 2020 is configured to: in the case that at least one CG resource or SPS resource is configured, adjust a configuration parameter of the at least one CG resource or SPS resource, and/or activate or deactivate, or use or skip using the at least one CG resource or SPS resource; or in the case that at least one CG resource or SPS resource is configured, based on the assistance information, adjust a configuration parameter of the at least one CG resource or SPS resource reported by the terminal, and/or activate or deactivate, or use or skip using the at least one CG resource or SPS resource.

In some embodiments, the assistance information is transmitted over a first resource in the at least one CG resource or SPS resource.

In some embodiments, the first resource is one of: the first CG resource or SPS resource; a CG resource or SPS resource with an index lower than a preset value; or at least one of the first j CG resources or SPS resources, wherein j is a positive integer greater than 0.

In some embodiments, the assistance information is reported over a dynamically scheduled uplink grant; or the assistance information is reported over one of a MAC CE, UCI, a PUCCH resource, or an SR resource.

In some embodiments, the adjusting module 2020 is configured to: in the case that at least one CG resource or SPS resource is configured within one CG resource or SPS resource period, adjust a configuration parameter or a resource use parameter of a resource location of the at least one CG resource or SPS resource, and/or activate or deactivate, or use or skip using the resource location of the at least one CG resource or SPS resource; or in the case that at least one CG resource or SPS resource is configured within one CG resource or SPS resource period, based on the assistance information reported by the terminal, adjust a configuration parameter or a resource use parameter of a resource location of the at least one CG resource or SPS resource, and/or activate or deactivate, or use or skip using the resource location of the at least one CG resource or SPS resource.

In some embodiments, the assistance information is transmitted over a first resource location in a resource location of the at least one CG resource or SPS resource.

In some embodiments, the first resource location is one of: a resource location of the first CG resource or SPS resource; or a resource location of at least one resource of the first k CG resources or SPS resources, wherein k is a positive integer greater than 0.

In some embodiments, the assistance information is reported over a dynamically scheduled uplink grant; or the assistance information is reported over one of a MAC CE, UCI, a PUCCH resource, or an SR resource.

In some embodiments, the adjusting module 2020 is configured to: in the case that at least one PUSCH resource or PDSCH resource is scheduled over DCI, adjust a configuration parameter or a resource use parameter of the at least one PUSCH resource or PDSCH resource, and/or activate or deactivate, or use or skip using the at least one PUSCH resource or PDSCH resource; or in the case that at least one PUSCH resource or PDSCH resource is scheduled over DCI, based on the assistance information reported by the terminal, adjust a configuration parameter or a resource use parameter of the at least one PUSCH resource or PDSCH resource, and/or activate or deactivate, or use or skip using the at least one PUSCH resource or PDSCH resource.

In some embodiments, the assistance information is transmitted over a second resource location in the resource locations of the at least one PUSCH resource or PDSCH resource.

In some embodiments, the second resource location is one of: a resource location of the first PUSCH resource or PDSCH resource; or at least one resource location of the first m PUSCH resources or PDSCH resources, wherein m is a positive integer greater than 0.

In some embodiments, the DCI carries first indication information, wherein the first indication information instructs the terminal to report the assistance information.

In some embodiments, the adjusting module 2020 is configured to: determine whether to increase a scheduled grant, a PUSCH resource, or a PDSCH resource in the case that one PUSCH resource or PDSCH resource is scheduled over the DCI, or in the case that one PUSCH resource or PDSCH resource is scheduled over one piece of DCI, or in the case that one PUSCH resource or PDSCH resource is periodically scheduled over the DCI; or determine whether to increase a scheduled grant, a PUSCH resource, or a PDSCH resource based on the assistance information reported by the terminal in the case that one PUSCH resource or PDSCH resource is scheduled over the DCI, or in the case that one PUSCH resource or PDSCH resource is scheduled over one piece of DCI, or in the case that one PUSCH resource or PDSCH resource is periodically scheduled over the DCI.

In some embodiments, the DCI carries first indication information, wherein the first indication information instructs the terminal to report the assistance information.

In some embodiments, the adjusting module 2020 is configured to: in the case that at least one PDSCH resource is scheduled over the DCI, or in the case that at least one PDSCH resource is scheduled over one piece of DCI, or in the case that at least one PDSCH resource is scheduled periodically over the DCI, indicate whether the terminal skips n PDSCH resources on the DCI or a first PDSCH resource in the at least one PDSCH resource, wherein n is a positive integer greater than 0; or in the case that at least one PDSCH resource is scheduled over the DCI, or in the case that at least one PDSCH resource is scheduled over one piece of DCI, or in the case that at least one PDSCH resource is scheduled periodically over the DCI, indicate, based on the assistance information reported by the terminal, whether the terminal skips n PDSCH resources on the DCI or a first PDSCH resource in the at least one PDSCH resource, wherein n is a positive integer greater than 0.

In some embodiments, the n PDSCH resources are at least one of PDSCH resources indicated by the DCI; or the n PDSCH resources are PDSCH resources after the first PDSCH resource.

FIG. 21 is a schematic diagram of an apparatus for transmitting information according to some embodiments of the present disclosure. The apparatus includes: a triggering module 2120.

The triggering module 2120 is configured to trigger or generate first report information, wherein the first report information is used to trigger a network device to perform at least one of resource allocation, resource adjustment, resource scheduling, parameter adjustment, or parameter configuration.

In some embodiments, the first report information is used to trigger one of: a MAC CE; an SR; CG-UCI; or PUSCH-UCI.

In some embodiments, the triggering module 2120 is configured to trigger or generate the first report information in the case that a second condition is satisfied.

In some embodiments, the second condition includes at least one of the following options: a new piece of information is present or arrives; a new piece of information is present or arrives, and a latency of the new piece of information is less than a first value; a piece of information is present in buffer, and a latency of the piece of information is less than a second value; the network device instructs or triggers the terminal to report the first report information; the terminal receives a command or information carrying a first identifier; an SR resource dedicated to the terminal is present; a PUCCH resource for an SR dedicated to the terminal is present; the SR resource dedicated to the terminal is available; the PUCCH resource for the SR dedicated to the terminal is available; the terminal receives data of a first LCH; the data of the first LCH is available; the terminal receives a service or data corresponding to a first characteristic; the service or data corresponding to the first characteristic is available; the terminal receives data carrying a second identifier; the data carrying the second identifier is available; the terminal receives first data; the first data arrives; data satisfying a third condition is present; or the first report information is used to trigger one of a MAC CE, an SR, CG-UCI, or PUSCH-UCI.

In some embodiments, the network device indicates or triggers the terminal to report the first report information over at least one of: DCI; a MAC CE; RRC; or PDSCH-DCI.

In some embodiments, the command or information carrying the first identifier received by the terminal includes at least one of: DCI; a downlink MAC CE; downlink RRC; or PDSCH-DCI.

In some embodiments, the SR resource or the PUCCH resource corresponds to one of: an LCH; a DRB; a QoS flow; a PDU session; a PDU set; a PDU; or a data burst.

In some embodiments, the SR resource or the PUCCH resource is associated with at least one of a latency, a remaining latency, a data volume, or a remaining data volume.

In some embodiments, the service or data corresponding to the first characteristic includes at least one of: a service, an LCH, or a flow with a first period or a first data rate; an LCH carrying a first identifier; an LCH carrying a first priority; an LCH bearing a specified service; an LCH bearing a first session; an LCH bearing a first QoS flow; a service or data carrying a first frame rate; a service with a PDU set characteristic, information, or requirement; or data or an LCH with a PDU characteristic, information, or requirement.

In some embodiments, the specified service is one of an XR service, a media service, a video service, a service with a variable service characteristic, or a service including service flows between which an association relationship is present.

In some embodiments, the service or data corresponding to the first characteristic includes the service or data carrying the first frame rate, and/or the service or data corresponding to the first characteristic includes the data or LCH with corresponding PDU set information or characteristic, and/or the service or data carrying the first frame rate has the first period. In some embodiments, the triggering module 2120 is configured for a data burst or a PDU set to arrive or to be available; or the terminal periodically reports the first report information in the case that the service or data transmitted within the first period is available; or the terminal periodically reports the first report information in the case that the service or data transmitted within the first period is available, and a periodic timer corresponding to a periodic BSR expires or is not running; or the terminal periodically reports the first report information in the case that the service or data transmitted within the first period is received, and a periodic timer corresponding to a periodic BSR expires or is not running; or the terminal periodically reports the first report information in the case that a period time point of the first period is reached, and a periodic timer corresponding to a periodic BSR expires or is not running; or the terminal periodically reports the first report information in the case that the service or data transmitted within the first period is received; or the terminal periodically reports the first report information in the case that a period time point of the first period is reached; or the terminal periodically reports the first report information within each first period; or the terminal periodically reports the first report information within each first period in the case that a periodic timer corresponding to a periodic BSR expires or is not running; or the terminal periodically reports the first report information in the case that the service or data transmitted within the first period is received, and a periodic timer corresponding to a periodic BSR expires or is not running; or the terminal periodically reports the first report information as a periodic service arrives; or the terminal periodically reports the first report information in the case that a periodic service arrives and a periodic timer corresponding to a periodic BSR expires or is not running; or the terminal periodically reports the first report information in the case that a resource for the service or data corresponding to the first characteristic within the first period is available; or the terminal periodically reports the first report information in the case that a resource for the service or data corresponding to the first characteristic within the first period is available, and a periodic timer corresponding to a periodic BSR expires or is not running.

In some embodiments, the first report information periodically reported is periodic first report information, a periodic BSR, or an enhanced periodic BSR.

In some embodiments, the data carrying the second identifier is a PDU or a PDU set.

In some embodiments, the second identifier is one of an importance identifier, a priority identifier, an identifier of being dependent, or an I-frame identifier.

In some embodiments, the first data is one of: at least one PDU that has arrived early in a PDU set; a PDU that has first arrived in the PDU set; a PDU that has last arrived in the PDU set; a specified PDU that has arrived in the PDU set; at least one PDU that has last arrived in the PDU set; or a new PDU set.

In some embodiments, the third condition includes at least one of: a PDB is less than a threshold; a remaining transmission latency is less than a latency threshold; an available duration for data in buffer is not less than a duration threshold; a data volume is greater than a third data volume threshold; a to-be-transmitted data volume is greater than a fourth data volume threshold; or a remaining data volume is greater than a fifth data volume threshold.

In some embodiments, the data volume, the to-be-transmitted data volume, or the remaining data volume is specific to a first object.

In some embodiments, the first object is a PDU set, a data burst, or an LCH.

In some embodiments, the second condition is specific to the terminal, a MAC entity, or the first object.

In some embodiments, the MAC entity is any one MAC entity; or the MAC entity is a MAC entity corresponding to the terminal.

In some embodiments, the first report information is triggered by the terminal or the MAC entity.

In some embodiments, the first report information is specific to the first object.

In some embodiments, the first report information carries an identifier of the first object.

In some embodiments, the identifier of the first object is an identifier or an index identifier.

In some embodiments, the first object is one of: an LCH; an LCH pair; an LCG; a DRB; a QoS flow; a PDU session; a PDU set; a PDU; or a data burst.

In some embodiments, the terminal is a terminal having a specified capability; or the terminal is a terminal for bearing a specified service.

In some embodiments, the specified service is one of an XR service, a media service, a video service, a service with a variable service characteristic, or a service including service flows between which an association relationship is present.

In some embodiments, the first report information carries at least one of: a remaining data volume, information of a to-be-transmitted data volume; latency information; a priority of a transmission object; importance of the transmission object; the type of the transmission object; or a data volume associated with the first object.

In some embodiments, the latency information includes at least one of: a total latency; a remaining latency; a waiting time consumed; a latency upon entering buffer; or a latency associated with the first object.

In some embodiments, the latency information is at least one of a latency value, a latency level, a latency grade index, an identifier indicating that a latency is higher than a first latency threshold, or an identifier indicating that a latency is lower than a second latency threshold.

In some embodiments, the importance of the transmission object is at least one of an importance value, an importance level, an importance grade index, an identifier indicating that the importance is higher than a first importance threshold, or an identifier indicating that the importance is lower than the first importance threshold.

In some embodiments, the type of the transmission object is an I-frame, a P-frame, or a B-frame.

In some embodiments, the first report information is at least one of newly defined report information, a BSR, an enhanced BSR, an SR, CG-UCI, or PUSCH-UCI.

In some embodiments, the triggering module 2120 is configured to carry the identifier of the first object and/or the first report information in the SR or the UCI in the case that the SR, the CG-UCI, or the PUSCH-UCI is triggered.

In some embodiments, information carried in the first report information includes related information of at least one first object.

In some embodiments, the triggering module 2120 is configured to trigger different SR information based on at least one of the size of a to-be-transmitted data volume, latency information, a data priority, or data importance in the case that the SR is triggered.

In some embodiments, the different SR information corresponds to different SR configurations.

In some embodiments, the SR configurations include at least one of a scheduling request identifier, a scheduling request resource identifier, or a resource location of a PDCCH resource.

In some embodiments, each piece of the SR information carries related information of at least one first object.

In some embodiments, in the case that a transmission resource conflict is present, the SR information is preferentially transmitted, or the transmission priority of the SR information is considered a high priority.

In some embodiments, the terminal uses a new or modified BSR in the case that the first report information is a BSR or an enhanced BSR.

In some embodiments, the new or modified BSR is one of a regular BSR, an enhanced regular BSR, or a BSR dedicated to the terminal.

In some embodiments, the new or modified BSR carries related information of at least one first object.

In some embodiments, the triggering module 2120 is further configured to: report a long BSR in the case that the BSR is triggered, a MAC PDU including the BSR is generated, and at least one LCH or LCG has to-be-transmitted data; report a long BSR in the case that the enhanced BSR is triggered, a MAC PDU including the enhanced BSR is generated, and at least one LCH or LCG has to-be-transmitted data; report a short BSR or an extended short BSR in the case that the BSR is triggered, a MAC PDU including the BSR is generated, and one LCH or LCG has to-be-transmitted data; and report a short BSR or an extended short BSR in the case that the enhanced BSR is triggered, a MAC PDU including the enhanced BSR is generated, and one LCH or LCG has to-be-transmitted data.

In some embodiments, the BSR or the enhanced BSR is one of a regular BSR, an enhanced regular BSR, a BSR dedicated to the terminal, a periodic BSR, or an enhanced periodic BSR.

In some embodiments, in the case that a short BSR is reported, a length of 8 bits is used in a buffer size field.

In some embodiments, the triggering module 2120 is configured to carry the identifier of the first object and/or the first report information in the first MAC CE or a MAC CE corresponding to the enhanced BSR in the case that the first MAC CE or the enhanced BSR is triggered.

In some embodiments, information carried in the first MAC CE or the MAC CE corresponding to the enhanced BSR includes the related information of the at least one first object.

In some embodiments, in the case that the first MAC CE or the MAC CE corresponding to the enhanced BSR carries the information of the at least one first object, the information of the first object is carried in a bitmap manner, or the information of the first object is carried using a displayed identifier of the first object.

In some embodiments, the first MAC CE or the MAC CE corresponding to the enhanced BSR is identified using an extended LCID.

In some embodiments, in the case that the first MAC CE carries data volume-related information, a 5-bit or 8-bit buffer size level table is used in a buffer size field in the enhanced BSR; or a 8-bit buffer size level table is used in a buffer size field; or a 5-bit buffer size level table is used in a buffer size field; or a new buffer size level table is added in a buffer size field.

In some embodiments, the buffer size field is determined based on at least one of the following principles. The new buffer size level table is used; the 8-bit buffer size level table is used; the 8-bit buffer size level table is used in the case that a data volume is less than a, and the new buffer size level table is used in the case that the data volume is not less than a; the 5-bit buffer size level table is used in the case that a data volume is less than a, and the 8-bit buffer size level table is used in the case that the data volume is not less than a; the 5-bit buffer size level table is used in the case that a data volume is less than a, and the new buffer size level table is used in the case that the data volume is not less than a; or the 5-bit buffer size level table is used in the case that a data volume is less than a, and the new buffer size level table is used in the case that the data volume is not less than a and is less than b.

In some embodiments, the triggering module 2120 is configured to generate one of the first MAC CE, the enhanced BSR, the BSR MAC CE, the SR, the PUSCH-UCI, or the CG-UCI in the case that the second condition is satisfied.

In some embodiments, the triggering module 2120 is configured to: generate a BSR MAC CE in the case that at least one BSR is triggered and the at least one BSR is not deleted, and a UL-SCH resource for new transmission carries the BSR MAC CE and a subheader thereof; or generate an enhanced BSR MAC CE in the case that at least one enhanced BSR is triggered and the at least one enhanced BSR is not deleted, and a UL-SCH resource for new transmission carries the enhanced BSR MAC CE and a subheader thereof; or generate the first MAC CE in the case that at least one piece of first report information is triggered, at least one piece of identification information is not deleted, and a UL-SCH resource for new transmission carries the first MAC CE and a subheader thereof or carries an enhanced first MAC CE and a subheader thereof; or trigger an SR corresponding to the first report information in the case that the first report information is triggered.

In some embodiments, the triggering module 2120 is further configured to start or restart an enhanced timer in the case that the enhanced BSR MAC CE or the first MAC CE is generated, wherein the enhanced timer is a periodic timer and/or a retransmission timer corresponding to the enhanced BSR or the first MAC CE.

In some embodiments, one MAC PDU carries one BSR MAC CE and one MAC CE; or one MAC PDU carries a BSR MAC CE or a MAC CE; or one MAC PDU does not simultaneously include a BSR MAC CE and a MAC CE; or one MAC PDU does not simultaneously include two or more MAC CEs related to a data volume or data buffering. Alternatively, one MAC PDU does not simultaneously include two or more MAC CEs specific to the same object; or one MAC PDU does not simultaneously include two or more MAC CEs specific to the same object and related to a data volume or data buffering.

In some embodiments, the BSR MAC CE and the MAC CE are of the same priority.

In some embodiments, the BSR MAC CE and/or the MAC CE are of a priority not lower than that of an extended BSR.

In some embodiments, at least one of a PSDB, a latency, a remaining PSDB, or a remaining latency is determined by MAC or a PDCP through statistics.

In some embodiments, the MAC or the PDCP determines at least one of the PSDB, the latency, the remaining PSDB, or the remaining latency based on a first duration or a first timer.

FIG. 22 is a schematic diagram of an apparatus for configuring a timer according to some embodiments of the present disclosure. The apparatus includes: a receiving module 2220.

The receiving module 2220 is configured to receive a timer configuration configured by a network device.

The timer is a timer corresponding to first report information, and a duration of the timer is a first duration.

In some embodiments, the timer is a periodic timer or a retransmission timer.

In some embodiments, the timer is specific to one of: a MAC entity; a terminal; an LCH; an LCH pair; an LCG; a PDU set; or a PDU.

In some embodiments, the first report information is a BSR.

In some embodiments, the first duration is a duration matching a service period or a data rate corresponding to the terminal.

In some embodiments, the first duration is an integer duration, or the first duration is a non-integer duration.

In some embodiments, the apparatus further includes a using module 2240, configured to periodically trigger reporting of the first report information in the case that the periodic timer expires.

In some embodiments, the apparatus further includes a using module 2240, configured to trigger reporting of the first report information in the case that the periodic timer expires, and a second condition is satisfied.

In some embodiments, the first report information is periodic first report information.

In some embodiments, the apparatus further includes a using module 2240, configured to trigger reporting of the first report information in the case that the retransmission timer expires, and a second condition is satisfied.

In some embodiments, the apparatus further includes a using module 2240, configured to cancel triggering of another piece of report information in at least one piece of report information in the case that the at least one piece of report information specific to the same LCG is triggered, and a first MAC CE corresponding to the first report information is generated based on the first report information in the at least one piece of report information.

In some embodiments, the first MAC CE is not multiplexed or the timer is not restarted in the case that the timer is running, and an available UL-SCH is present.

In some embodiments, the apparatus further includes a using module 2240, configured to: in the case that the timer is specific to an LCH, an LCH pair, or an LCG, and the timer expires, trigger first report information corresponding to the LCH, the LCH pair, or the LCG; or trigger first report information corresponding to the terminal; or trigger first report information corresponding to the MAC entity; or trigger first report information corresponding to an LCH, an LCH pair, or an LCG of to-be-transmitted data.

In some embodiments, the apparatus further includes a using module 2240, configured to generate the first MAC CE in the case that the first report information is triggered, and a UL-SCH resource carried in the first report information for new transmission bears the first MAC CE and a subheader thereof.

In some embodiments, the apparatus further includes an initiating module 2260, configured to start or restart the timer.

In some embodiments, the apparatus further includes a using module 2240, configured to generate the first MAC CE in the case that the first report information is triggered, a UL-SCH resource carried in the first report information for new transmission bears the first MAC CE and a subheader thereof, and the UL-SCH resource is one of at least one transmission resource.

In some embodiments, the first MAC CE is multiplexed into the UL-SCH resource.

In some embodiments, another transmission resource, other than the UL-SCH resource, in the at least one transmission resource is not used for generating a MAC CE, and/or the another transmission resource is not multiplexed with a MAC CE, and/or the timer is not started or restarted.

In some embodiments, the apparatus further includes an initiating module 2260, configured to start or restart the timer.

In some embodiments, the at least one transmission resource is a resource scheduled or pre-configured by the network device; or the at least one transmission resource is a resource that is scheduled or pre-configured by the network device and that corresponds to a first period or the first duration; or the at least one transmission resource is scheduled or pre-configured by the network device and is a resource within a first period or the first duration.

In some embodiments, the apparatus further includes a using module 2240, configured to trigger reporting of SR information corresponding to the first report information in the case that the first report information is triggered, and/or no UL-SCH resource for carrying the first report information or no UL-SCH resource for new transmission, and/or the network device configures a dedicated SR resource for the terminal.

In some embodiments, in the case that a transmission resource conflict is present, the SR information is preferentially transmitted, or the transmission priority of the SR information is considered a high priority.

In some embodiments, in the case that the second condition is satisfied, a padding BSR is not triggered or supported, or padding first report information is not triggered or supported.

In some embodiments, the apparatus further includes a determining module 2280, configured to determine, based on a padding bit, the format of a BSR to be reported in the case that a padding BSR is triggered, and the second condition is satisfied.

In some embodiments, in the case that a BSR MAC CE is generated, an 8-bit buffer size level table is used or a new buffer size level table is added in a buffer size field in the BSR MAC CE.

In some embodiments, the padding BSR is the padding first report information.

FIG. 23 is a schematic diagram of an apparatus for transmitting information according to some embodiments of the present disclosure. The apparatus includes: a transmitting module 2320.

The transmitting module 2320 is configured to transmit indication information, wherein the indication information instructs a terminal to perform at least one of processing a transmission resource or using the transmission resource.

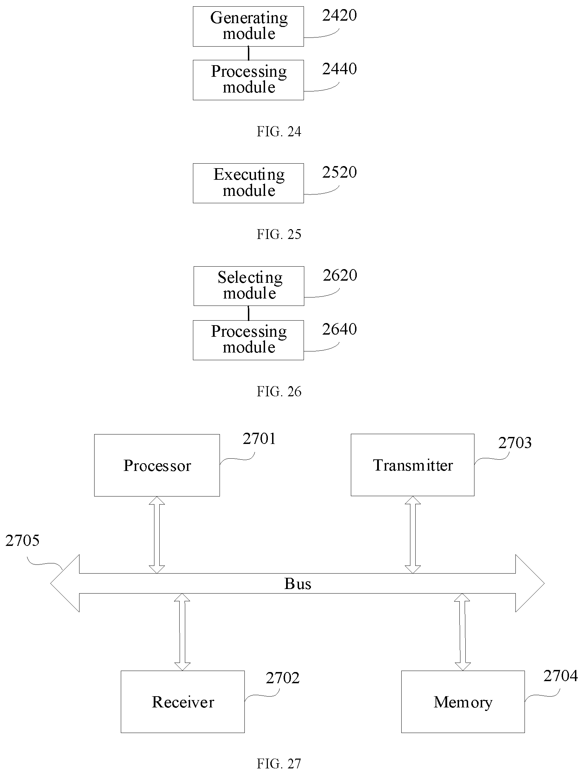

FIG. 24 is a schematic diagram of an apparatus for transmitting information according to some embodiments of the present disclosure. The apparatus includes: a generating module 2420.

The generating module 2420 is configured to generate a MAC PDU during a LCP procedure.

In some embodiments, the apparatus further includes a processing module 2440, configured to perform the LCP procedure based on at least one of information of a data packet or a PDU, information of a PDU set, a first mapping relationship between the PDU and a QoS flow, a second mapping relationship between the PDU and a LCH, a third mapping relationship between the PDU set and the QoS flow, or a fourth mapping relationship between the PDU set and the LCH.

In some embodiments, the apparatus further includes a processing module 2440, configured to: determine at least one of the information of the data packet or the PDU, the information of the PDU set, the first mapping relationship, the second mapping relationship, the third mapping relationship, or the fourth mapping relationship based on at least one of an RLC packet header, a PDCP packet header, an SDAP packet header, or a higher layer control PDU; or determine at least one of the information of the data packet or the PDU, the information of the PDU set, the first mapping relationship, the second mapping relationship, the third mapping relationship, or the fourth mapping relationship based on inter-layer interaction of the terminal; or determine at least one of the first mapping relationship, the second mapping relationship, the third mapping relationship, or the fourth mapping relationship based on an RRC configuration; or determine the information of the data packet or the PDU and/or the PDU set based on at least one of a higher layer packet header, inter-layer interaction of the terminal, or a higher layer control PDU.

In some embodiments, in the LCP procedure, a first PDU is prioritized, or a first PDU set is prioritized, or a LCH priority is prioritized.

In some embodiments, in the LCP procedure, the first PDU is prioritized, or an LCH corresponding to the first PDU is prioritized, or data corresponding to the first PDU is preferentially put into the MAC PDU, or the priority of an LCH or an LCH group corresponding to the first PDU is adjusted to a high priority, or the first PDU set is prioritized, or an LCH corresponding to the first PDU set is prioritized, or data corresponding to the first PDU set is preferentially put into the MAC PDU, or the priority of an LCH in the MAC PDU or the LCP procedure is adjusted, or the priority of an LCH or an LCH group corresponding to the first PDU set is adjusted to a high priority; or in the LCP procedure, the first PDU is assigned a secondary priority, or an LCH of the first PDU is assigned a secondary priority, or a secondary priority is assigned to putting data corresponding to the first PDU into the MAC PDU, or the priority of an LCH or an LCH group corresponding to the first PDU is adjusted to a secondary high priority, or the first PDU set is assigned a secondary priority, or an LCH corresponding to the first PDU set is assigned a secondary priority, or a secondary priority is assigned to putting data corresponding to the first PDU set into the MAC PDU, or the priority of an LCH or an LCH group corresponding to the first PDU set is adjusted to a secondary high priority.

In some embodiments, the first PDU set is at least one of a specified PDU set or an associated PDU set; and the first PDU is a specified PDU or a specified data packet.

In some embodiments, the specified PDU set is a data packet with a third identifier, or the specified PDU set is a first data packet; and the specified PDU is a data packet with a third identifier, or the specified PDU is a first data packet.

In some embodiments, the third identifier is one of an importance identifier, a priority identifier, or a latency value.

In some embodiments, the first data packet is one of: a data packet of importance higher than a threshold; a data packet of a priority higher than a threshold; a data packet with a latency requirement higher than a threshold; a data packet with a PSDB less than a threshold; a data packet with a latency less than a threshold; a data packet with a remaining latency less than a threshold; a data packet with the latency higher than a first threshold and lower than a second threshold; a data packet that does not satisfy a PSDB requirement; a data packet that does not satisfy the PSDB requirement after a first time; or a data packet that does not satisfy the PSDB requirement within the first duration.

In some embodiments, at least one of a PSDB, a latency, a remaining PSDB, or a remaining latency is determined by MAC or a PDCP through statistics.

In some embodiments, the MAC or the PDCP determines at least one of the PSDB, the latency, the remaining PSDB, or the remaining latency based on a first duration or a first timer.

In some embodiments, in the LCP procedure, the size of a PDU set corresponding to a first logical channel is prioritized before a first variable is subtracted from the size of the MAC PDU, or the size of a first associated PDU set corresponding to a first logical channel is prioritized before a first variable is subtracted from the size of the MAC PDU; or in the LCP procedure, the size of a PDU set corresponding to a first logical channel is considered after a first variable is subtracted from the size of the MAC PDU, or the size of a first associated PDU set is considered after a first variable is subtracted from the size of the MAC PDU; or in the LCP procedure, the size of a PDU set corresponding to a second logical channel is prioritized before a second variable is subtracted from the size of the MAC PDU, or the size of a second associated PDU set corresponding to a second logical channel is prioritized before a second variable is subtracted from the size of the MAC PDU; or in the LCP procedure, the size of a PDU set corresponding to a second logical channel is considered after a second variable is subtracted from the size of the MAC PDU, or the size of a second associated PDU set is considered after a second variable is subtracted from the size of the MAC PDU; or in the LCP procedure, the size of a PDU set corresponding to a first logical channel and a second logical channel having an association relationship is prioritized before a first variable and a second variable are subtracted from the size of the MAC PDU, or the size of a third associated PDU set corresponding to a first logical channel and a second logical channel having an association relationship is prioritized before a first variable and a second variable are subtracted from the size of the MAC PDU; or in the LCP procedure, the size of an associated PDU set corresponding to a first logical channel and a second logical channel having an association relationship is prioritized after a first variable and a second variable are subtracted from the size of the MAC PDU, or the remaining size of a third associated PDU set is prioritized after a first variable and a second variable are subtracted from the size of the MAC PDU. The first variable indicates the quantity of available tokens in a token bucket corresponding to the first logical channel, the second variable indicates the quantity of available tokens in a token bucket corresponding to the second logical channel, the first logical channel is a logical channel corresponding to a specified PDU set, and the second logical channel is a logical channel corresponding to an associated PDU set.

In some embodiments, the association relationship between the first logical channel and the second logical channel is determined based on at least one of an RRC configuration, an RRC packet header, a data packet header, the inter-layer interaction of the terminal, or the higher layer control PDU.

In some embodiments, in the LCP procedure or in a MAC PDU packaging process, the MAC PDU carries indication information, wherein the indication information is used to request the network device to allocate a transmission resource. The indication information is carried in the case that one of the following conditions is satisfied. A specified PDU is present; an associated PDU is present; the associated PDU set is present and part of or all data in the associated PDU set is unable to be carried in the MAC PDU; a specified PDU set is present; all or part of data in the specified PDU set is not carried in the MAC PDU; or all or part of data in the specified PDU is not carried in the MAC PDU.

In some embodiments, the indication information is one of request indication information, assistance information, or first report information.

In some embodiments, the indication information is one of a MAC CE, an SR, UCI, CG-UCI, or PUSCH-UCI corresponding to the first report information.

In some embodiments, in the LCP procedure, in the case that a remaining resource is present in the MAC PDU, a first PDU is prioritized, or data or remaining data in the first PDU is preferentially put into the MAC PDU, or a first PDU set is prioritized, or data or remaining data in the first PDU set is preferentially put into the MAC PDU, wherein the first PDU set is at least one of a specified PDU set or an associated PDU set.

In some embodiments, the apparatus further includes a processing module 2440, configured to: determine the size of remaining data in a PDU or a PDU set in a third logical channel in the case that data in the PDU or the PDU set in the third logical channel is multiplexed into the size of the MAC PDU is determined; and subtract the size of the remaining data in the PDU or PDU set in the third logical channel from a third variable, wherein the third variable indicates the quantity of available tokens in a token bucket corresponding to the third logical channel.

In some embodiments, the apparatus further includes a processing module 2440, configured to allocate a resource to at least one logical channel based on the size of a PDU or a PDU set corresponding to the at least one logical channel.

In some embodiments, the apparatus further includes a processing module 2440, configured to subtract the size of a MAC SDU multiplexed into the MAC PDU of a fourth logical channel from a fourth variable.

In some embodiments, the apparatus further includes a processing module 2440, configured to allocate the resource to the at least one logical channel based on a result acquired by subtracting the size of a PDU or a PDU set that has been allocated to a logical channel from the quantity of tokens in a token bucket corresponding to the logical channel.

In some embodiments, the apparatus further includes a processing module 2440, configured to receive an uplink grant for new transmission from the network device.

FIG. 25 is a schematic diagram of an apparatus for processing a data packet according to some embodiments of the present disclosure. The apparatus includes: an executing module 2520.

The executing module 2520 is configured to perform data packet processing.

In some embodiments, the data packet processing includes at least one of: determining to perform the data packet processing; determining a manner of performing the data packet processing; determining to perform packet discarding processing; or determining a manner of performing the packet discarding processing.

In some embodiments, the executing module 2520 is configured to: discover or determine, by the transmitter, a data packet, and instruct, by the transmitter, the receiver to process the data packet; or discover or determine, by the receiver, a data packet, and instruct, by the receiver, the transmitter to process the data packet; or discover or determine, by the transmitter, a data packet, where the transmitter processes the data packet; or discover or determine, by the receiver, a data packet, where the receiver processes the data packet; or discover or determine, by the transmitter, a data packet, where the transmitter and the receiver process the data packet; or discover or determine, by the receiver, a data packet, where the transmitter and the receiver process the data packet.

In some embodiments, the executing module 2520 is configured to: in the case that a fourth condition is satisfied, determine to perform the data packet processing and/or perform the data packet processing; or in the case that a fourth condition is satisfied, determine to perform the packet discarding processing and/or perform the packet discarding processing.

In some embodiments, the fourth condition includes at least one of: at least one data packet in an associated PDU set is lost; a data packet at a first location in the associated PDU set is lost; a first data packet in the associated PDU set is lost; the associated PDU set exceeds a first PSDB requirement; a transmission duration, a reception duration, or a storage duration of the associated PDU set is not less than a packet discarding duration of the PDU set; the transmission duration, the reception duration, or the storage duration of the associated PDU set is not less than a second PSDB requirement; at least one PDU in the associated PDU set is confirmed to have been not needed; a received PDU is used to decode or recover a PDU set or a part of a PDU set; a part of data packets in the associated PDU set is discovered or confirmed; a part of data packets in the associated PDU set is discovered or confirmed to have been lost; N associated PDUs or data packets are transmitted or successfully transmitted; the N associated PDUs or data packets are received; a PSDB duration is reached; the packet discarding duration is reached; an application layer or the network device configures the data packet processing to be enabled; the application layer or the network device configures the quantity corresponding to data packets; or the application layer or the network device configures second indication information or a first operation to be enabled.

In some embodiments, a data packet for performing the data packet processing includes at least one of: a data packet in a corresponding PDU set; a data packet without a data packet SN in the corresponding PDU set; a data packet without a PDCP SN in the corresponding PDU set; a data packet, in the corresponding PDU set, not submitted to a lower layer; a data packet, in the corresponding PDU set, not transmitted or not successfully transmitted; a data packet, in the corresponding PDU set, confirmed to have been unsuccessfully transmitted; a data packet corresponding to an SN carried in the second indication information; or a data packet associated with the SN.

In some embodiments, the executing module 2520 is configured to: consider, by the transmitter, that an SDU with an indicated SN or an associated SN is successful, ended, or not needed; or indicate, by the transmitter, to a higher layer that a PDU with an indicated SN or an associated SN is successful, ended, or not needed; or consider, by the receiver, that the SDU with the indicated SN or the associated SN is placed in a buffer; or consider, by the receiver, that the SDU with the indicated SN or the associated SN is received, ended, or not needed; or consider, by the receiver, that the SDU with the indicated SN or the associated SN is submitted to the higher layer; or perform, by the transmitter, packet discarding processing for the PDU corresponding to the SDU/SDU with the indicated SN or the associated SN; or perform, by the receiver, packet discarding processing for the PDU corresponding to the SDU/SDU with the indicated SN or the associated SN.

In some embodiments, the executing module 2520 is configured to transmit the second indication information to the receiver, wherein the second indication information instructs the receiver to perform the first operation.

In some embodiments, the executing module 2520 is configured to: trigger a status report; transmit the data packet processing indication information to the receiver; or transmit the packet discarding indication information to the receiver.

In some embodiments, the executing module 2520 is configured to trigger the status report in the case that the fourth condition is satisfied.

In some embodiments, the status report carries data packet transmission information of an associated PDU set; or the status report carries an SN and/or a status of a data packet.

In some embodiments, the second indication information includes at least one of: data packet processing indication information; packet discarding indication information; an SN; or indication information carrying the SN.

In some embodiments, the executing module 2520 is configured to perform the first operation based on the second indication information from the transmitter.

In some embodiments, the first operation includes at least one of: considering that an SDU with an indicated SN or an associated SN is successful, ended, or not needed; notifying a higher layer that a PDU with an indicated SN or an associated SN is successful, ended, or not needed; considering that the SDU with the indicated SN or the associated SN is placed in a buffer; considering that the SDU with the indicated SN or the associated SN is submitted to the higher layer; or performing packet discarding processing for the PDU corresponding to the SDU/SDU with the indicated SN or the associated SN.

In some embodiments, the packet discarding processing includes discarding an SDU and/or discarding a PDU corresponding to the SDU.

In some embodiments, the executing module 2520 is configured to: perform packet discarding processing on a second data packet that is not transmitted, and/or not needed, and/or not successfully transmitted; and/or perform packet discarding processing on a unit RLC SDU and/or RLC SDU segment that is not transmitted or submitted to a lower layer; and/or perform packet discarding processing on a PDCP SDU and/or a PDCP PDU that is not transmitted or submitted to a lower layer; and/or skip performing packet discarding processing on an RLC SDU and/or an RLC SDU segment that is transmitted or submitted to the lower layer.

In some embodiments, the second data packet is at least one of the following cases. The second data packet is a data packet in an associated PDU set; the second data packet is a PDU, in the PDU set, not transmitted, not needed, and/or not successfully transmitted; or the second data packet is a PDU set not successfully transmitted; or the second packet is a PDU set that exceeds a PSDB requirement and is not transmitted; or the second data packet is a PDU set that exceeds a PSDB requirement and is not successfully transmitted; or the second data packet is a PDU set that exceeds a packet discarding duration of the PDU set and is not transmitted; or the second data packet is a PDU set that exceeds a packet discarding duration of the PDU set and is not successfully transmitted.

FIG. 26 is a schematic diagram of an apparatus for selecting a resource according to some embodiments of the present disclosure. The apparatus includes: a selecting module 2620.

The selection module 2620 is configured to select a transmission resource or a HARQ process based on at least one of a second PDU, a LCH corresponding to the second PDU, data corresponding to the second PDU, or a logical channel priority.

In some embodiments, the apparatus further includes a processing module 2640, configured to: prioritize the logical channel priority; or prioritize the second PDU; or prioritize the LCH corresponding to the second PDU; or prioritize the data corresponding to the second PDU.

In some embodiments, the apparatus further includes a processing module 2640, configured to perform at least one of: prioritizing the logical channel priority, and then considering the second PDU, the LCH corresponding to the second PDU, or the data corresponding to the second PDU; or prioritizing the second PDU, the LCH corresponding to the second PDU, or the data corresponding to the second PDU, and then considering the logical channel priority; or prioritizing the LCH corresponding to the second PDU; or preferentially transmitting a HARQ or resource for data on an LCH corresponding to a second PDU set; or prioritizing the second PDU; or preferentially transmitting a HARQ or resource for the data on the LCH corresponding to the second PDU; or adjusting the logical channel priority; or adjusting the priority of the LCH corresponding to the second PDU to a high priority.

FIG. 27 is a schematic structural diagram of a communication device (a terminal or a network device) according to some embodiments of the present disclosure. The communication device includes: a processor 2701, a receiver 2702, a transmitter 2703, a memory 2704, and a bus 2705.

The processor 2701 includes one or more processing cores, and the processor 2701 executes various functional applications and performs information processing by running software programs and modules.

The receiver 2702 and the transmitter 2703 may be implemented as a communication assembly, wherein the communication assembly may be a communication chip.

The memory 2704 is connected to the processor 2701 over the bus 2705.

The memory 2704 may be configured to store at least one instruction, and the processor 2701, when loading and executing the at least one instruction, is caused to perform the processes in the method for determining an RAR receiving window described in the foregoing method embodiments.

In addition, the memory 2704 may be implemented by any type or combination of volatile or non-volatile storage devices including, but not limited to: magnetic or optical disks, electrically-erasable programmable read-only memories (EEPROMs), erasable programmable read-only memories (EPROMs), static random access memories (SRAMs), read-only memories (ROMs), magnetic memories, flash memories, and programmable read-only memories (PROMs).

A terminal is further provided in the present disclosure. The terminal includes a memory and a processor; and the memory stores at least one program code, and the processor is configured to load and execute the at least one program code, to cause the terminal to perform the method for transmitting information, the method for configuring a timer, the method for processing a data packet, or the method for selecting a resource as described above.

A network device is further provided in the present disclosure. The network device includes a memory and a processor; and the memory stores at least one program code, and the processor is configured to load and execute the at least one program code, to cause the network device to perform the method for transmitting information, the method for configuring a timer, the method for processing a data packet, or the method for selecting a resource as described above.

A computer-readable storage medium is further provided in the present disclosure. The storage medium stores one or more computer programs, and the processor is configured to load and run the one or more computer programs, to cause the processor to perform the method for transmitting information, the method for configuring a timer, the method for processing a data packet, or the method for selecting a resource as described above.

A chip is further provided in the present disclosure. The chip includes one or more programmable logic circuits and/or program instructions, and an electronic device equipped with the chip, when executing the one or more programmable logic circuits and/or program instructions, is caused to perform the method for transmitting information, the method for configuring a timer, the method for processing a data packet, or the method for selecting a resource as described above.

A computer program product is further provided in the present disclosure. The computer program product includes one or more computer instructions stored in a computer-readable storage medium, wherein a processor, when reading and executing the one or more computer instructions from the computer-readable storage medium, is caused to perform the method for transmitting information, the method for configuring a timer, the method for processing a data packet, or the method for selecting a resource as described above.

Described above are merely optional embodiments of the present disclosure and are not intended to limit the present disclosure. Any modifications, equivalent substitutions, improvements, and the like, made within the spirit and principle of the present disclosure should fall within the protection scope of the present disclosure.

## Claims

1. A method for transmitting information, applicable to a terminal, the method comprising:
reporting assistance information, wherein the assistance information indicates service information of the terminal.

2. The method according to claim 1, wherein the service information comprises at least one of:
a service characteristic of the terminal;
a service pattern of the terminal;
remaining service information of the terminal; or
remaining data information of the terminal.

3. The method according to claim 1 or 2, wherein reporting the assistance information comprises:
reporting the assistance information in a case that a first condition is satisfied.

4. The method according to claim 3, wherein the first condition comprises at least one of the following options:
a new piece of information is present or arrives;
a new piece of information is present or arrives, and a latency of the new piece of information is less than a first value;
a piece of information is present in buffer, and a latency of the piece of information is less than a second value;
a network device instructs the terminal to report the assistance information;
the network device instructs the terminal to report a type of the assistance information;
the terminal has a capability of reporting the assistance information;
the terminal reports a capability of reporting to the network device;
the terminal supports a specified service;
the terminal supports a session corresponding to the specified service;
the terminal has not reported the assistance information;
the assistance information is changed as compared with a history report or a history tendency;
the assistance information is changed as compared with information or a tendency before the first condition is satisfied;
a scheduling request (SR) resource dedicated to the terminal is present;
a physical uplink control channel (PUCCH) resource for an SR dedicated to the terminal is present;
the SR resource dedicated to the terminal is available; or
the PUCCH resource for the SR dedicated to the terminal is available.

5. The method according to claim 4, wherein the type of the assistance information is one of a service characteristic of the terminal, a service pattern of the terminal, remaining service information of the terminal, or remaining data information of the terminal.

6. The method according to claim 4, wherein the specified service is one of an extended reality (XR) service, a media service, a video service, a service with a variable service characteristic, or a service comprising service flows between which an association relationship is present.

7. The method according to claim 4, wherein the SR resource or the PUCCH resource corresponds to at least one of:
a logical channel (LCH);
a user data radio bearer (DRB);
a quality of service (QoS) flow;
a packet data unit (PDU) session;
a PDU set;
a PDU;
a data burst; or
a medium access control (MAC) entity.

8. The method according to claim 4, wherein the SR resource or the PUCCH resource is associated with at least one of a latency, a remaining latency, a data volume, a remaining data volume, or a service association.

9. The method according to any one of claims 1 to 8, wherein the assistance information comprises at least one of:
direction information of a data packet;
direction information of a quality of service (QoS) flow;
direction information of a data flow;
an arrival time of a data packet;
an arrival interval of a data packet;
an arrival period of a data packet;
an arrival pattern of a data packet;
a size of a data packet;
a size pattern of a data packet;
latency tolerance information of a data packet;
a QoS flow corresponding to the terminal;
a QoS flow corresponding to a data packet;
a data flow corresponding to the terminal;
a data flow corresponding to a data packet;
indication information of a specified service;
a remaining data volume;
information of a to-be-transmitted volume;
latency information of remaining data;
latency information of a to-be-transmitted volume;
latency information of a data packet;
a transmission latency of at least one of uplink transmission or downlink transmission; or
a transmission time difference between a plurality of data flows or a plurality of QoS flows.

10. The method according to claim 9, wherein
the direction information of the data packet, the direction information of the QoS flow, or the direction information of the data flow indicates uplink transmission corresponding to the data packet, the QoS flow, or the data flow; and/or
the direction information of the data packet, the direction information of the QoS flow, or the direction information of the data flow indicates downlink transmission corresponding to the data packet, the QoS flow, or the data flow.

11. The method according to claim 9, wherein the arrival time of the data packet comprises at least one of:
a starting arrival time of the data packet;
an ending arrival time of the data packet;
an arrival time of a first data packet in associated data packets;
an arrival time of a last data packet in the associated data packets;
an arrival time of a first data packet within one data burst; or
an arrival time of a last data packet within one data burst.

12. The method according to claim 9, wherein the latency tolerance information comprises at least one of:
a latency value pre-configured by the network device for the terminal;
a latency value required by the terminal;
at least one of total latency information, time consumed, waiting time consumed, or remaining latency information;
a maximum value in total latency information, time consumed, waiting time consumed, and remaining latency information;
a minimum value in total latency information, time consumed, waiting time consumed, and remaining latency information;
a mean value in total latency information, time consumed, waiting time consumed, and remaining latency information;
a remaining latency of data of a highest priority;
a maximum value of a remaining latency of data of a highest priority;
a mean value of a remaining latency of data of a highest priority;
a minimum value of a remaining latency of data of a highest priority;
a remaining latency of data of a lowest priority;
a maximum value of the remaining latency of the data of a lowest priority;
a mean value of a remaining latency of data of a lowest priority;
a minimum value of a remaining latency of data of a lowest priority;
a remaining latency of data of a highest importance;
a maximum value of a remaining latency of data of highest importance;
a mean value of a remaining latency of data of highest importance;
a minimum value of a remaining latency of data of highest importance;
a remaining latency of data of a lowest importance;
a maximum value of a remaining latency of data of lowest importance;
a mean value of a remaining latency of data of lowest importance;
a minimum value of a remaining latency of data of lowest importance;
a latency level;
a latency grade index;
an identifier indicating that a latency is higher than a first latency threshold; or
an identifier indicating that a latency is lower than a second latency threshold.

13. The method according to claim 9, wherein the latency tolerance information, the remaining data volume, the information of the to-be-transmitted volume, or the latency information of the remaining data is information specific to at least one of:
a logical channel (LCH);
a user data radio bearer (DRB);
a quality of service (QoS) flow;
a packet data unit (PDU) session;
a PDU set;
a PDU; or
a data burst.

14. The method according to claim 9, wherein the specified service is one of an extended reality (XR) service, a media service, a video service, a service with a variable service characteristic, or a service comprising service flows between which an association relationship is present.

15. The method according to claim 9, wherein the information of the to-be-transmitted volume is at least one of:
a data volume level;
a data volume grade index;
an identifier indicating that a data volume is higher than a first data volume threshold; or
an identifier indicating that a data volume is lower than a second data volume threshold.

16. The method according to claim 9, wherein the latency information of the remaining data comprises at least one of:
at least one of total latency information, time consumed, waiting time consumed, or remaining latency information;
a maximum value in total latency information, time consumed, waiting time consumed, and remaining latency information;
a minimum value in total latency information, time consumed, waiting time consumed, and remaining latency information;
a mean value in total latency information, time consumed, waiting time consumed, and remaining latency information;
a remaining latency of data of a highest priority;
a maximum value of a remaining latency of data of a highest priority;
a mean value of a remaining latency of data of a highest priority;
a minimum value of a remaining latency of data of a highest priority;
a remaining latency of data of a lowest priority;
a maximum value of a remaining latency of data of a lowest priority;
a mean value of a remaining latency of data of a lowest priority;
a minimum value of a remaining latency of data of a lowest priority;
a remaining latency of data of a highest importance;
a maximum value of a remaining latency of data of highest importance;
a mean value of a remaining latency of data of highest importance;
a minimum value of a remaining latency of data of highest importance;
a remaining latency of data of lowest importance;
a maximum value of a remaining latency of data of lowest importance;
a mean value of a remaining latency of data of lowest importance;
a minimum value of a remaining latency of data of lowest importance;
a latency level;
a latency grade index;
an identifier indicating that a latency is higher than a first latency threshold; or
an identifier indicating that a latency is lower than a second latency threshold.

17. The method according to any one of claims 9 to 16, wherein the data packet indicates a data packet corresponding to one of:
a packet data unit (PDU) set;
a PDU; or
a data burst.

18. The method according to any one of claims 1 to 17, wherein the assistance information is reported in one of the following manners:
reporting the assistance information over an assistance information reporting process of the terminal;
reporting the assistance information by carrying the assistance information in terminal assistance information;
reporting the assistance information over a medium access control control element (MAC CE);
reporting the assistance information over radio resource control (RRC) information dedicated to the terminal;
reporting the assistance information over uplink control information (UCI) dedicated to the terminal;
reporting the assistance information periodically; or
reporting the assistance information in response to a change.

19. The method according to claim 18, wherein the MAC CE comprises one of:
a first MAC CE;
a MAC CE used for a buffer status report (BSR); or
an enhanced MAC CE.

20. The method according to any one of claims 1 to 19, wherein in a case that a pre-configured or dynamically scheduled uplink resource comprises at least one available resource, or in a case that at least one physical uplink shared channel (PDSCH) occasion is present, the assistance information is transmitted over one or more transmission resources in first i transmission resources, wherein i is a positive integer greater than 0.

21. The method according to claim 20, wherein the assistance information is transmitted over a first transmission resource.

22. The method according to any one of claims 1 to 17, further comprising:
transmitting data packet characteristic information when the assistance information is transmitted.

23. The method according to claim 22, wherein the data packet characteristic information comprises at least one of:
an attribute characteristic;
an importance characteristic;
an association characteristic;
a latency characteristic; or
a serial number or sequence in a packet data unit (PDU) set or a data burst.

24. The method according to claim 22, wherein
the data packet characteristic information is carried in the assistance information; and
the data packet characteristic information is carried in a data packet data unit packet header or a control packet data unit packet header.

25. The method according to any one of claims 1 to 17, wherein reporting the assistance information comprises:
transmitting the assistance information in a case that at least one pre-configured grant (CG) resource or semi-persistent scheduling (SPS) resource is configured.

26. The method according to claim 25, wherein the assistance information is transmitted over a first resource in the at least one CG resource or SPS resource.

27. The method according to claim 26, wherein the first resource is one of:
a first CG resource or SPS resource;
a CG resource or SPS resource with an index lower than a predetermined value; or
at least one of first j CG resources or SPS resources, wherein j is a positive integer greater than 0.

28. The method according to claim 25, wherein
the assistance information is reported over a dynamically scheduled uplink grant; or
the assistance information is reported over one of uplink control information (UCI), a physical uplink control channel (PUCCH) resource, or a scheduling request (SR) resource.

29. The method according to any one of claims 1 to 17, wherein reporting the assistance information comprises:
transmitting the assistance information in a case that at least one pre-configured grant (CG) resource or semi-persistent scheduling (SPS) resource is configured within one CG resource period or SPS resource period.

30. The method according to claim 29, wherein the assistance information is transmitted over a first resource location in a resource location of the at least one CG resource or SPS resource.

31. The method according to claim 30, wherein the first resource location is one of:
a resource location of a first CG resource or SPS resource; or
a resource location of at least one resource in first k CG resources or SPS resources, wherein k is a positive integer greater than 0.

32. The method according to claim 29, wherein
the assistance information is reported over a dynamically scheduled uplink grant; or
the assistance information is reported over one of uplink control information (UCI), a physical uplink control channel (PUCCH) resource, or a scheduling request (SR) resource.

33. The method according to any one of claims 1 to 17, wherein reporting the assistance information comprises:
transmitting the assistance information in a case that at least one physical uplink shared channel (PUSCH) resource or physical downlink shared channel (PDSCH) resource is scheduled over downlink control information (DCI).

34. The method according to claim 33, wherein the assistance information is transmitted over a second resource location in a resource location of the at least one PUSCH resource or PDSCH resource.

35. The method according to claim 34, wherein the second resource location is one of:
a resource location of a first PUSCH resource or PDSCH resource; or
at least one of first m PUSCH resources or PDSCH resources, wherein m is a positive integer greater than 0.

36. The method according to claim 33, wherein the DCI carries first indication information, wherein the first indication information instructs the terminal to report the assistance information.

37. The method according to any one of claims 1 to 17, wherein reporting the assistance information comprises:
transmitting the assistance information in a case that one physical uplink shared channel (PUSCH) resource or physical downlink shared channel (PDSCH) resource is scheduled over downlink control information (DCI), or in a case that one PUSCH resource or PDSCH resource is scheduled over one piece of DCI, or in a case that one PUSCH resource or PDSCH resource is periodically scheduled over DCI; or
transmitting the assistance information on one PUSCH resource or PDSCH resource in a case that the one PUSCH resource or PDSCH resource is scheduled over DCI, or in a case that the one PUSCH resource or PDSCH resource is scheduled over one piece of DCI, or in a case that the one PUSCH resource or PDSCH resource is periodically scheduled over DCI.

38. The method according to claim 37, wherein the DCI carries first indication information, wherein the first indication information instructs the terminal to report the assistance information.

39. The method according to any one of claims 1 to 17, further comprising:
receiving indication information delivered by the network device in a case that at least one physical uplink shared channel (PDSCH) resource is scheduled over downlink control information (DCI), or in a case that at least one PDSCH resource is scheduled over one piece of DCI, or in a case that at least one PDSCH resource is scheduled periodically over DCI, wherein the indication information indicates whether the terminal skips n PDSCH resources, n being a positive integer greater than 0.

40. The method according to claim 39, wherein
the n PDSCH resources are at least one of PDSCH resources indicated by the DCI; or
the n PDSCH resources are a PDSCH resource after a first PDSCH resource.

41. The method according to claim 39, further comprising:
skipping the n PDSCH resources based on the indication information.

42. A method for transmitting information, applicable to a network device, the method comprising:
adjusting a transmission resource or a configuration of the transmission resource.

43. The method according to claim 42, wherein the transmission resource or the configuration of the transmission resource is adjusted based on assistance information reported by a terminal, wherein the assistance information indicates service information of the terminal.

44. The method according to claim 42, wherein adjusting the transmission resource or the configuration of the transmission resource comprises:
allocating or scheduling the transmission resource; or
configuring or adjusting a configuration parameter or a radio resource control (RRC) configuration parameter of the transmission resource; or
allocating or scheduling the transmission resource based on assistance information reported by a terminal; or
configuring or adjusting a configuration parameter or an RRC configuration parameter of the transmission resource based on the assistance information.

45. The method according to claim 42, wherein adjusting the transmission resource or the configuration of the transmission resource comprises:
in a case that at least one pre-configured grant (CG) resource or semi-persistent scheduling (SPS) resource is configured, adjusting a configuration parameter of the at least one CG resource or SPS resource, and/or activating or deactivating, or using or skipping using the at least one CG resource or SPS resource; or
in a case that at least one CG resource or SPS resource is configured, based on assistance information reported by a terminal, adjusting a configuration parameter of the at least one CG resource or SPS resource, and/or activating or deactivating, or using or skipping using the at least one CG resource or SPS resource.

46. The method according to claim 45, wherein the assistance information is transmitted over a first resource in the at least one CG resource or SPS resource.

47. The method according to claim 46, wherein the first resource is one of:
a first CG resource or SPS resource;
a CG resource or SPS resource with an index lower than a predetermined value; or
at least one of first j CG resources or SPS resources, wherein j is a positive integer greater than 0.

48. The method according to claim 45, wherein
the assistance information is reported over a dynamically scheduled uplink grant; or
the assistance information is reported over one of a medium access control control element (MAC CE), uplink control information (UCI), a physical uplink control channel (PUCCH) resource, or a scheduling request (SR) resource.

49. The method according to claim 42, wherein adjusting the transmission resource or the configuration of the transmission resource comprises:
in a case that at least one pre-configured grant (CG) resource or semi-persistent scheduling (SPS) resource is configured within one CG resource or SPS resource period, adjusting a configuration parameter or a resource use parameter of a resource location of the at least one CG resource or SPS resource, and/or activating or deactivating, or using or skipping using the resource location of the at least one CG resource or SPS resource; or
in a case that at least one CG resource or SPS resource is configured within the one CG resource or SPS resource period, based on assistance information reported by a terminal, adjusting a configuration parameter or a resource use parameter of a resource location of the at least one CG resource or SPS resource, and/or activating or deactivating, or using or skipping using the resource location of the at least one CG resource or SPS resource.

50. The method according to claim 49, wherein the assistance information is transmitted over a first resource location in a resource location of the at least one CG resource or SPS resource.

51. The method according to claim 50, wherein the first resource location is one of:
a resource location of a first CG resource or SPS resource; or
a resource location of at least one resource in first k CG resources or SPS resources, wherein k is a positive integer greater than 0.

52. The method according to claim 49, wherein
the assistance information is reported over a dynamically scheduled uplink grant; or
the assistance information is reported over one of a medium access control control element (MAC CE), uplink control information (UCI), a physical uplink control channel (PUCCH) resource, or a scheduling request (SR) resource.

53. The method according to claim 42, wherein adjusting the transmission resource or the configuration of the transmission resource comprises:
in a case that at least one physical uplink shared channel (PUSCH) resource or physical downlink shared channel (PDSCH) resource is scheduled over downlink control information (DCI), adjusting a configuration parameter or a resource use parameter of the at least one PUSCH resource or PDSCH resource, and/or activating or deactivating, or using or skipping using the at least one PUSCH resource or PDSCH resource; or
in a case that at least one PUSCH resource or PDSCH resource is scheduled over DCI, based on assistance information reported by a terminal, adjusting a configuration parameter or a resource use parameter of the at least one PUSCH resource or PDSCH resource, and/or activating or deactivating, or using or skipping using the at least one PUSCH resource or PDSCH resource.

54. The method according to claim 53, wherein the assistance information is transmitted over a second resource location in a resource location of the at least one PUSCH resource or PDSCH resource.

55. The method according to claim 54, wherein the second resource location is one of:
a resource location of a first PUSCH resource or PDSCH resource; or
at least one of first m PUSCH resources or PDSCH resources, wherein m is a positive integer greater than 0.

56. The method according to claim 53, wherein the DCI carries first indication information, wherein the first indication information instructs the terminal to report the assistance information.

57. The method according to claim 42, wherein adjusting the transmission resource or the configuration of the transmission resource comprises:
determining whether to increase a scheduled grant, a physical uplink shared channel (PUSCH) resource, or a physical downlink shared channel (PDSCH) resource in a case that one PUSCH resource or PDSCH resource is scheduled over downlink control information (DCI), or in a case that one PUSCH resource or PDSCH resource is scheduled over one piece of DCI, or in a case that one PUSCH resource or PDSCH resource is periodically scheduled over DCI; or
determining whether to increase a scheduled grant, a PUSCH resource, or a PDSCH resource based on assistance information reported by a terminal in a case that the one PUSCH resource or PDSCH resource is scheduled over DCI, or in a case that the one PUSCH resource or PDSCH resource is scheduled over one piece of DCI, or in a case that the one PUSCH resource or PDSCH resource is periodically scheduled over DCI.

58. The method according to claim 57, wherein the DCI carries first indication information, wherein the first indication information instructs the terminal to report the assistance information.

59. The method according to claim 42, wherein adjusting the transmission resource or the configuration of the transmission resource comprises:
indicating whether a terminal skips n physical downlink shared channel (PDSCH) resources on downlink control information (DCI) or a first PDSCH resource in at least one PDSCH resource in a case that the at least one PDSCH resource is scheduled over DCI, or in a case that at least one PDSCH resource is scheduled over one piece of DCI, or in a case that at least one PDSCH resource is scheduled periodically over DCI, wherein n is a positive integer greater than 0; or
indicating, based on assistance information reported by a terminal, on DCI or a first PDSCH resource in at least one PDSCH resource, whether the terminal skips n PDSCH resources in a case that the at least one PDSCH resource is scheduled over DCI, or in a case that at least one PDSCH resource is scheduled over one piece of DCI, or in a case that at least one PDSCH resource is scheduled periodically over DCI, wherein n is a positive integer greater than 0.

60. The method according to claim 59, wherein
the n PDSCH resources are at least one of PDSCH resources indicated by the DCI; or
the n PDSCH resources are a PDSCH resource after the first PDSCH resource.

61. A method for transmitting information, applicable to a terminal, the method comprising:
triggering or generating first report information, wherein the first report information is used to trigger a network device to perform at least one of resource allocation, resource adjustment, resource scheduling, parameter adjustment, or parameter configuration.

62. The method according to claim 61, wherein the first report information is used to trigger one of:
a medium access control control element (MAC CE);
a scheduling request (SR);
pre-configured grant-uplink control information (CG-UCI); or
physical uplink shared channel-uplink control information (PUSCH-UCI).

63. The method according to claim 61 or 62, wherein triggering or generating the first report information comprises:
triggering or generating the first report information in a case that a second condition is satisfied.

64. The method according to claim 63, wherein the second condition comprises at least one of the following conditions:
a new piece of information is present or arrives;
a new piece of information is present or arrives, and a latency of the new piece of information is less than a first value;
a piece of information is present in buffer, and a latency of the piece of information is less than a second value;
the network device instructs or triggers the terminal to report the first report information;
the terminal receives a command or information carrying a first identifier;
a scheduling request (SR) resource dedicated to the terminal is present;
a physical uplink control channel (PUCCH) resource for an SR dedicated to the terminal is present;
the SR resource dedicated to the terminal is available;
the PUCCH resource of the SR dedicated to the terminal is available;
the terminal receives data of a first logical channel (LCH);
the data of the first LCH is available;
the terminal receives a service or data corresponding to a first characteristic;
the service or data corresponding to the first characteristic is available;
the terminal receives data carrying a second identifier;
the data carrying the second identifier is available;
the terminal receives first data;
the first data arrives;
data satisfying a third condition is present; or
the first report information is used to trigger one of a medium access control control element (MAC CE), an SR, pre-configured grant-uplink control information (CG-UCI), or physical uplink shared channel-uplink control information (PUSCH-UCI).

65. The method according to claim 64, wherein the network device instructs or triggers the terminal to report the first report information over at least one of:
downlink control information (DCI);
a downlink medium access control control element (MAC CE);
downlink radio resource control (RRC); or
physical downlink shared channel-downlink control information (PDSCH-DCI).

66. The method according to claim 64, wherein the command or information, carrying the first identifier, received by the terminal comprises at least one of:
downlink control information (DCI);
a downlink medium access control control element (MAC CE);
downlink radio resource control (RRC); or
physical downlink shared channel-downlink control information (PDSCH-DCI).

67. The method according to claim 64, wherein the SR resource or the PUCCH resource corresponds to one of:
a logical channel (LCH);
a user data radio bearer (DRB);
a quality of service (QoS) flow;
a packet data unit (PDU) session;
a PDU set;
a PDU; or
a data burst.

68. The method according to claim 64, wherein the SR resource or the PUCCH resource is associated with at least one of a latency, a remaining latency, a data volume, or a remaining data volume.

69. The method according to claim 64, wherein the service or data corresponding to the first characteristic comprises at least one of:
a service, an LCH, or a flow with a first period or a first data rate;
an LCH carrying a first identifier;
an LCH carrying a first priority;
an LCH bearing a specified service;
an LCH bearing a first session;
an LCH bearing a first quality of service (QoS) flow;
a service or data carrying a first frame rate;
a service with a packet data unit (PDU) set characteristic, information, or requirement; or
data or an LCH with the PDU characteristic, information, or requirement.

70. The method according to claim 69, wherein the specified service is one of an extended reality (XR) service, a media service, a video service, a service with a variable service characteristic, or a service comprising service flows between which an association relationship is present.

71. The method according to claim 69, wherein the service or data corresponding to the first characteristic comprises the service or data carrying the first frame rate, and/or the service or data corresponding to the first characteristic comprises data or LCH corresponding to packet data unit (PDU) set information or characteristic, and/or the service or data carrying the first frame rate has the first period; and triggering or generating the first report information in the case that the second condition is satisfied comprises:
a data burst or the PDU set arriving or being available; or
periodically reporting the first report information in a case that a service or data transmitted within the first period is available; or
periodically reporting the first report information in a case that a service or data transmitted within the first period is available, and a periodic timer corresponding to a periodic buffer status report (BSR) expires or is not running; or
periodically reporting the first report information in a case that a service or data transmitted within the first period is received, and a periodic timer corresponding to a periodic BSR expires or is not running; or
periodically reporting the first report information in a case that a period time point of the first period is reached, and a periodic timer corresponding to a periodic BSR expires or is not running; or
periodically reporting the first report information in a case that a service or data transmitted within the first period is received; or
periodically reporting the first report information in a case that a period time point of the first period is reached; or
periodically reporting the first report information within each first period; or
periodically reporting the first report information within each first period in a case that a periodic timer corresponding to a periodic BSR expires or is not running; or
periodically reporting the first report information in a case that a service or data transmitted within the first period is received, and a periodic timer corresponding to a periodic BSR expires or is not running; or
periodically reporting the first report information in a case that a periodic service arrives; or
periodically reporting the first report information in a case that a periodic service arrives and a periodic timer corresponding to a periodic BSR expires or is not running; or
periodically reporting the first report information in a case that a resource for a service or data corresponding to the first characteristic within the first period is available; or
periodically reporting the first report information in a case that a resource for a service or data corresponding to the first characteristic within the first period is available, and a periodic timer corresponding to a periodic BSR expires or is not running.

72. The method according to claim 71, wherein the first report information periodically reported is periodic first report information, a periodic BSR, or an enhanced periodic BSR.

73. The method according to claim 64, wherein the data carrying the second identifier is a packet data unit (PDU) or a PDU set.

74. The method according to claim 73, wherein the second identifier is one of an importance identifier, a priority identifier, an identifier of being dependent, or an I-frame identifier.

75. The method according to claim 64, wherein the first data is one of:
at least one packet data unit (PDU) that has arrived early in a PDU set;
a PDU that has first arrived in the PDU set;
a PDU that has last arrived in the PDU set;
a specified PDU that has arrived in the PDU set;
at least one PDU that has last arrived in the PDU set; or
a new PDU set.

76. The method according to claim 64, wherein the third condition comprises at least one of:
a packet delay budget (PDB) is less than a threshold;
a remaining transmission latency is less than a latency threshold;
an available duration for data in buffer is not less than a duration threshold;
a data volume is greater than a third data volume threshold;
a to-be-transmitted data volume is greater than a fourth data volume threshold; or
a remaining data volume is greater than a fifth data volume threshold.

77. The method according to claim 76, wherein the data volume, the to-be-transmitted data volume, or the remaining data volume is specific to a first object.

78. The method according to claim 64, wherein a first object is a packet data unit (PDU) set, a data burst, or an LCH.

79. The method according to any one of claims 63 to 78, wherein the second condition is specific to the terminal, a medium access control (MAC) entity, or a first object.

80. The method according to claim 79, wherein the MAC entity is any one MAC entity; or the MAC entity is a MAC entity corresponding to the terminal.

81. The method according to any one of claims 61 to 80, wherein the first report information is triggered by the terminal or a medium access control (MAC) entity.

82. The method according to any one of claims 61 to 80, wherein the first report information is specific to a first object.

83. The method according to any one of claims 61 to 80, wherein the first report information carries an identifier of a first object.

84. The method according to claim 83, wherein the identifier of the first object is an identifier or an index identifier.

85. The method according to any one of claims 82 to 84, wherein the first object is one of:
a logical channel (LCH);
an LCH pair;
a logical channel group (LCG);
a user data radio bearer (DRB);
a quality of service (QoS) flow;
a packet data unit (PDU) session;
a PDU set;
a PDU; or
a data burst.

86. The method according to any one of claims 61 to 85, wherein
the terminal is a terminal having a specified capability; or
the terminal is a terminal for bearing a specified service.

87. The method according to claim 86, wherein the specified service is one of an extended reality (XR) service, a media service, a video service, a service with a variable service characteristic, or a service comprising service flows between which an association relationship is present.

88. The method according to any one of claims 61 to 87, wherein the first report information carries at least one of:
a remaining data volume;
information of a to-be-transmitted data volume;
latency information;
a priority of a transmission object;
importance of a transmission object;
a type of a transmission object; or
a data volume associated with a first object.

89. The method according to claim 88, wherein the latency information comprises at least one of:
a total latency;
a remaining latency;
waiting time consumed;
a latency upon entering buffer; or
a latency associated with the first object.

90. The method according to claim 88, wherein the latency information is at least one of a latency value, a latency level, a latency grade index, an identifier indicating that a latency is higher than a first latency threshold, or an identifier indicating that a latency is lower than a second latency threshold.

91. The method according to claim 88, wherein the importance of the transmission object is at least one of an importance value, an importance level, an importance grade index, an identifier indicating that the importance is higher than a first importance threshold, or an identifier indicating that the importance is lower than the first importance threshold.

92. The method according to claim 88, wherein the type of the transmission object is an I-frame, a P-frame, or a B-frame.

93. The method according to any one of claims 61 to 92, wherein the first report information is at least one of newly defined report information, a buffer status report (BSR), an enhanced BSR, a scheduling request (SR), pre-configured grant-uplink control information (CG-UCI), or physical uplink shared channel-uplink control information (PUSCH-UCI).

94. The method according to claim 93, wherein triggering or generating the first report information in the case that the second condition is satisfied comprises:
carrying at least one of an identifier of a first object or the first report information in the SR or the UCI in a case that the SR, the CG-UCI, or the PUSCH-UCI is triggered.

95. The method according to claim 94, wherein information carried in the first report information comprises related information of at least one said first object.

96. The method according to claim 93, wherein triggering or generating the first report information in the case that the second condition is satisfied comprises:
triggering different SR information based on at least one of a size of a to-be-transmitted data volume, latency information, a data priority, or data importance in a case that the SR is triggered.

97. The method according to claim 96, wherein the different SR information corresponds to different SR configurations.

98. The method according to claim 97, wherein the SR configurations comprise at least one of a scheduling request identifier, a scheduling request resource identifier, or a resource location of a physical uplink control channel (PDCCH) resource.

99. The method according to claim 96, wherein each piece of the SR information carries related information of at least one first object.

100. The method according to claim 96, wherein the SR information is preferentially transmitted, or a transmission priority of the SR information is considered a high priority in a case that a transmission resource conflict is present.

101. The method according to claim 93, further comprising:
Using a new or modified BSR in a case that the first report information is the BSR or the enhanced BSR.

102. The method according to claim 101, wherein the new or modified BSR is one of a regular BSR, an enhanced regular BSR, or a BSR dedicated to the terminal.

103. The method according to claim 101, wherein the new or modified BSR carries related information of at least one first object.

104. The method according to claim 93, further comprising at least one of:
reporting a long BSR in a case that the BSR is triggered, a medium access control packet data unit (MAC PDU) comprising the BSR is generated, and at least one logical channel (LCH) or logical channel group (LCG) has to-be-transmitted data;
reporting a long BSR in a case that the enhanced BSR is triggered, a MAC PDU comprising the enhanced BSR is generated, and at least one LCH or LCG has to-be-transmitted data;
reporting a short BSR or an extended short BSR in a case that the BSR is triggered, a MAC PDU comprising the BSR is generated, and one LCH or LCG has to-be-transmitted data; or
reporting a short BSR or an extended short BSR in a case that the enhanced BSR is triggered, a MAC PDU comprising the enhanced BSR is generated, and one LCH or LCG has to-be-transmitted data.

105. The method according to claim 104, wherein the BSR or the enhanced BSR is one of a regular BSR, an enhanced regular BSR, a BSR dedicated to the terminal, a periodic BSR, or an enhanced periodic BSR.

106. The method according to claim 104, wherein in a case that the short BSR is reported, a length of 8 bits is used in a buffer size field.

107. The method according to claim 93, wherein triggering or generating the first report information in the case that the second condition is satisfied comprises:
carrying at least one of an identifier of a first object or the first report information in a first medium access control control element (MAC CE) or a MAC CE corresponding to the enhanced BSR in a case that the first MAC CE or the enhanced BSR is triggered.

108. The method according to claim 107, wherein information carried in the first MAC CE or the MAC CE corresponding to the enhanced BSR comprises related information of at least one first object.

109. The method according to claim 107 or 108, wherein in a case that the first MAC CE or the MAC CE corresponding to the enhanced BSR carries information of at least one first object, the information of the first object is carried in a bitmap manner, or the information of the first object is carried using a displayed identifier of the first object.

110. The method according to any one of claims 107 to 109, wherein the first MAC CE or the MAC CE corresponding to the enhanced BSR is identified using an extended logical channel identifier (LCID).

111. The method according to any one of claims 107 to 109, wherein
a 5-bit or 8-bit buffer size level table is used in a buffer size field in the enhanced BSR in a case that data volume-related information is carried in the first MAC CE; or
an 8-bit buffer size level table is used in a buffer size field in the enhanced BSR; or
a 5-bit buffer size level table is used in a buffer size field in the enhanced BSR; or
a new buffer size level table is added in a buffer size field in the enhanced BSR.

112. The method according to claim 111, wherein the buffer size field is determined based on at least one of the following principles:
the new buffer size level table is used;
the 8-bit buffer size level table is used;
the 8-bit buffer size level table is used in a case that a data volume is less than a, and the new buffer size level table is used in a case that the data volume is not less than a;
the 5-bit buffer size level table is used in a case that a data volume is less than a, and the 8-bit buffer size level table is used in a case that the data volume is not less than a;
the 5-bit buffer size level table is used in a case that a data volume is less than a, and the new buffer size level table is used in a case that the data volume is not less than a; or
the 5-bit buffer size level table is used in a case that a data volume is less than a, and the new buffer size level table is used in a case that the data volume is not less than a and is less than b.

113. The method according to any one of claims 61 to 92, wherein triggering or generating the first report information in the case that the second condition is satisfied comprises:
generating one of a first medium access control control element (MAC CE), an enhanced buffer status report (BSR), a BSR MAC CE, a scheduling request (SR), physical uplink shared channel-uplink control information (PUSCH-UCI), or pre-configured grant-uplink control information (CG-UCI) in a case that the second condition is satisfied.

114. The method according to claim 113, wherein generating one of the first MAC CE, the BSR, the BSR MAC CE, the SR, the PUSCH-UCI, or the CG-UCI in the case that the second condition is satisfied comprises:
generating the BSR MAC CE in a case that at least one BSR is triggered and the at least one BSR is not deleted, and an uplink shared channel (UL-SCH) resource for new transmission carries the BSR MAC CE and a subheader thereof; or
generating the enhanced BSR MAC CE in a case that at least one enhanced BSR is triggered and the at least one enhanced BSR is not deleted, and a UL-SCH resource for new transmission carries the enhanced BSR MAC CE and a subheader thereof; or
generating the first MAC CE in a case that at least one piece of first report information is triggered and at least one piece of identification information is not deleted, and a UL-SCH resource for new transmission carries the first MAC CE and a subheader thereof or carries an enhanced first MAC CE and a subheader thereof; or
triggering an SR corresponding to the first report information in a case that the first report information is triggered.

115. The method according to claim 113, further comprising:
starting or restarting an enhanced timer in a case that the enhanced BSR MAC CE or the first MAC CE is generated, wherein the enhanced timer is at least one of a periodic timer or a retransmission timer corresponding to the enhanced BSR or the first MAC CE.

116. The method according to any one of claims 61 to 115, wherein
one medium access control packet data unit (MAC PDU) carries one buffer status report medium access control control element (BSR MAC CE) and one MAC CE; or
one MAC PDU carries a BSR MAC CE or a MAC CE; or
one MAC PDU does not simultaneously comprise a BSR MAC CE and a MAC CE; or
one MAC PDU does not simultaneously comprise two or more MAC CEs related to a data volume or data buffering; or
one MAC PDU does not simultaneously comprise two or more MAC CEs specific to a same object; or
one MAC PDU does not simultaneously comprise two or more MAC CEs specific to a same object and related to a data volume or data buffering.

117. The method according to claim 116, wherein the BSR MAC CE and the MAC CE are of a same priority.

118. The method according to claim 112, wherein at least one of the BSR MAC CE or the MAC CE is of a priority not lower than a priority of an extended BSR.

119. The method according to any one of claims 61 to 115, wherein at least one of a packet data unit (PDU) set delay budget (PSDB), a latency, a remaining PSDB, or a remaining latency is determined by medium access control (MAC) or a Packet Data Convergence Protocol (PDCP) through statistics.

120. The method according to claim 119, wherein the MAC or the PDCP determines at least one of the PSDB, the latency, the remaining PSDB, or the remaining latency based on a first duration or a first timer.

121. A method for configuring a timer, applicable to a terminal, the method comprising:
receiving a timer configuration configured by a network device, wherein the timer is a timer corresponding to first report information, and a duration of the timer is a first duration.

122. The method according to claim 121, wherein the timer is a periodic timer or a retransmission timer.

123. The method according to claim 122, wherein the timer is specific to one of:
a medium access control (MAC) entity;
the terminal;
a logical channel (LCH);
an LCH pair;
a logical channel group (LCG);
a packet data unit (PDU) set; or
a PDU.

124. The method according to any one of claims 121 to 123, wherein the first report information is a buffer status report (BSR)

125. The method according to any one of claims 121 to 123, wherein the first duration is a duration matching a service period or a data rate corresponding to the terminal.

126. The method according to any one of claims 121 to 123, wherein the first duration is an integer duration, or the first duration is a non-integer duration.

127. The method according to any one of claims 121 to 126, further comprising:
periodically triggering reporting of the first report information in a case that a periodic timer expires.

128. The method according to any one of claims 121 to 126, further comprising:
triggering reporting of the first report information in a case that a periodic timer expires and a second condition is satisfied.

129. The method according to claim 128, wherein the first report information is periodic first report information.

130. The method according to any one of claims 121 to 126, further comprising:
triggering reporting of the first report information in a case that a retransmission timer expires and a second condition is satisfied.

131. The method according to any one of claims 121 to 126, further comprising:
canceling triggering of another piece of report information in at least one piece of report information in a case that the at least one piece of report information specific to a same logical channel group (LCG) is triggered, and a first medium access control control element (MAC CE) corresponding to the first report information is generated based on the first report information in the at least one piece of report information.

132. The method according to any one of claims 121 to 126, wherein a first MAC CE is not multiplexed or the timer is not restarted in a case that the timer is running and an available uplink shared channel (UL-SCH) is present.

133. The method according to any one of claims 121 to 126, further comprising:
triggering first report information corresponding to a logical channel (LCH), an LCH pair, or a logical channel group (LCG), or triggering first report information corresponding to the terminal, or triggering first report information corresponding to a medium access control (MAC) entity, or triggering first report information corresponding to an LCH, an LCH pair, or an LCG of to-be-transmitted data, in a case that the timer is specific to an LCH, an LCH pair, or an LCG, and the timer expires.

134. The method according to any one of claims 121 to 126, further comprising:
generating a first medium access control (MAC) CE in a case that the first report information is triggered and an uplink shared channel (UL-SCH) resource carried in the first report information for new transmission bears the first MAC CE and a subheader thereof.

135. The method according to claim 134, further comprising:
starting or restarting the timer.

136. The method according to any one of claims 121 to 126, further comprising:
generating a first medium access control (MAC) CE in a case that the first report information is triggered, an uplink shared channel (UL-SCH) resource carried in the first report information for new transmission bears the first MAC CE and a subheader thereof, and the UL-SCH resource is one of at least one transmission resource.

137. The method according to claim 136, wherein the first MAC CE is multiplexed into the UL-SCH resource.

138. The method according to claim 136, wherein another transmission resource, other than the UL-SCH resource, in the at least one transmission resource is not used for generating a MAC CE, and/or the another transmission resource is not used for multiplexing a MAC CE, and/or the timer is not started or restarted.

139. The method according to claim 136, further comprising:
starting or restarting the timer.

140. The method according to claim 136, wherein
the at least one transmission resource is a resource scheduled or pre-configured by the network device; or
the at least one transmission resource is a resource that is scheduled or pre-configured by the network device and corresponds to a first period or the first duration, or
the at least one transmission resource is scheduled or pre-configured by the network device and is a resource within a first period or the first duration.

141. The method according to any one of claims 121 to 126, further comprising:
triggering a reporting of scheduling request (SR) information corresponding to the first report information in a case that the first report information is triggered, and/or no uplink shared channel (UL-SCH) resource for carrying the first report information or no UL-SCH resource for new transmission is available, and/or the network device configures a dedicated SR resource for the terminal.

142. The method according to claim 141, wherein the SR information is preferentially transmitted, or a transmission priority of the SR information is considered a high priority in a case that a transmission resource conflict is present.

143. The method according to any one of claims 121 to 126, wherein in a case that a second condition is satisfied, a padding buffer status report (BSR) is not triggered or supported, or padding first report information is not triggered or supported.

144. The method according to any one of claims 121 to 126, further comprising:
determining, based on a padding bit, a format of a reported buffer status report (BSR) in a case that a padding BSR is triggered and a second condition is satisfied.

145. The method according to claim 144, wherein in a case that a BSR medium access control control element (MAC CE) is generated, an 8-bit buffer size level table is used or a new buffer size level table is added in a buffer size field in the BSR MAC CE.

146. The method according to claim 144, wherein the padding BSR is padding first report information.

147. A method for transmitting information, applicable to a network device, the method comprising:
transmitting indication information, wherein the indication information instructs a terminal to perform at least one of processing a transmission resource or using the transmission resource.

148. A method for transmitting information, applicable to a terminal, the method comprising:
generating a medium access control packet data unit (MAC PDU) during a logical channel prioritization (LCP) procedure.

149. The method according to claim 148, further comprising:
performing the LCP procedure based on at least one of information of a data packet or a PDU, information of a PDU set, a first mapping relationship between the PDU and a quality of service (QoS) flow, a second mapping relationship between the PDU and a logical channel (LCH), a third mapping relationship between the PDU set and the QoS flow, or a fourth mapping relationship between the PDU set and the LCH.

150. The method according to claim 149, further comprising:
determining at least one of the information of the data packet or the PDU, the information of the PDU set, the first mapping relationship, the second mapping relationship, the third mapping relationship, or the fourth mapping relationship based on at least one of a radio link control (RLC) packet header, a Packet Data Convergence Protocol (PDCP) packet header, a Service Data Adaptation Protocol (SDAP) packet header, or a higher layer control PDU; or
determining at least one of the information of the data packet or the PDU, the information of the PDU set, the first mapping relationship, the second mapping relationship, the third mapping relationship, or the fourth mapping relationship based on inter-layer interaction of the terminal; or
determining at least one of the first mapping relationship, the second mapping relationship, the third mapping relationship, or the fourth mapping relationship based on a radio resource control (RRC) configuration; and determining at least one of the information of the data packet or the PDU or the PDU set based on at least one of a higher layer packet header, inter-layer interaction of the terminal, or a higher layer control PDU.

151. The method according to any one of claims 148 to 150, wherein in the LCP procedure, a first PDU is prioritized, or a first PDU set is prioritized, or a logical channel (LCH) priority is prioritized.

152. The method according to claim 151, wherein
in the LCP procedure, the first PDU is prioritized, or an LCH corresponding to the first PDU is prioritized, or data corresponding to the first PDU is preferentially put into the MAC PDU, or a priority of an LCH or an LCH group corresponding to the first PDU is adjusted to a high priority, or the first PDU set is prioritized, or an LCH corresponding to the first PDU set is prioritized, or data corresponding to the first PDU set is preferentially put into the MAC PDU, or a priority of an LCH in the MAC PDU or the LCP procedure is adjusted, or a priority of an LCH or an LCH group corresponding to the first PDU set is adjusted to a high priority; or
in the LCP procedure, the first PDU is assigned a secondary priority, or an LCH of the first PDU is assigned a secondary priority, or a secondary priority is assigned to putting data corresponding to the first PDU into the MAC PDU, or a priority of an LCH or an LCH group corresponding to the first PDU is adjusted to a secondary high priority, or the first PDU set is assigned a secondary priority, or an LCH corresponding to the first PDU set is assigned a secondary priority, or a secondary priority is assigned to putting data corresponding to the first PDU set into the MAC PDU, or a priority of an LCH or an LCH group corresponding to the first PDU set is adjusted to a secondary high priority.

153. The method according to claim 152, wherein
the first PDU set is at least one of a specified PDU set or an associated PDU set; and
the first PDU is a specified PDU or a specified data packet.

154. The method according to claim 153, wherein
the specified PDU set is a data packet with a third identifier, or the specified PDU set is a first data packet; and
the specified PDU is a data packet with the third identifier, or the specified PDU is the first data packet.

155. The method according to claim 154, wherein the third identifier is one of an importance identifier, a priority identifier, or a latency value.

156. The method according to claim 154, wherein the first data packet is one of:
a data packet of importance higher than a threshold;
a data packet of a priority higher than a threshold;
a data packet with a latency requirement higher than a threshold;
a data packet with a PDU set delay budget (PSDB) less than a threshold;
a data packet with a latency less than a threshold;
a data packet with a remaining latency less than a threshold;
a data packet with a latency higher than a first threshold and lower than a second threshold;
a data packet that does not satisfy a PSDB requirement;
a data packet that does not satisfy the PSDB requirement after a first time point; or
a data packet that does not satisfy the PSDB requirement within a first duration.

157. The method according to any one of claims 148 to 156, wherein at least one of a PSDB, a latency, a remaining PSDB, or a remaining latency is determined by medium access control (MAC) or a Packet Data Convergence Protocol (PDCP) through statistics.

158. The method according to claim 157, wherein the MAC or the PDCP determines at least one of the PSDB, the latency, the remaining PSDB, or the remaining latency based on a first duration or a first timer.

159. The method according to any one of claims 148 to 158, wherein
in the LCP procedure, a size of a PDU set corresponding to a first logical channel is prioritized before a first variable is subtracted from a size of the MAC PDU, or a size of a first associated PDU set corresponding to a first logical channel is prioritized before a first variable is subtracted from a size of the MAC PDU; or
in the LCP procedure, a size of a PDU set corresponding to a first logical channel is considered after a first variable is subtracted from a size of the MAC PDU, or a size of a first associated PDU set is considered after a first variable is subtracted from a size of the MAC PDU; or
in the LCP procedure, a size of a PDU set corresponding to a second logical channel is prioritized before a second variable is subtracted from a size of the MAC PDU, or a size of a second associated PDU set corresponding to a second logical channel is prioritized before a second variable is subtracted from a size of the MAC PDU; or
in the LCP procedure, a size of a PDU set corresponding to a second logical channel is considered after a second variable is subtracted from a size of the MAC PDU, or a size of a second associated PDU set is considered after a second variable is subtracted from a size of the MAC PDU; or
in the LCP procedure, a size of a PDU set corresponding to a first logical channel and a second logical channel having an association relationship is prioritized before a first variable and a second variable are subtracted from a size of the MAC PDU, or a size of a third associated PDU set corresponding to a first logical channel and a second logical channel having an association relationship is prioritized before a first variable and a second variable are subtracted from a size of the MAC PDU; or
in the LCP procedure, a size of an associated PDU set corresponding to a first logical channel and a second logical channel having an association relationship is prioritized after a first variable and a second variable are subtracted from a size of the MAC PDU, or a remaining size of a third associated PDU set is prioritized after a first variable and a second variable are subtracted from a size of the MAC PDU,
wherein the first variable indicates a quantity of available tokens in a token bucket corresponding to the first logical channel, the second variable indicates a quantity of available tokens in a token bucket corresponding to the second logical channel, the first logical channel is a logical channel corresponding to a specified PDU set, and the second logical channel is a logical channel corresponding to an associated PDU set.

160. The method according to claim 159, wherein the association relationship between the first logical channel and the second logical channel is determined based on at least one of a radio resource control (RRC) configuration, an RRC packet header, a data packet header, inter-layer interaction of the terminal, or a higher layer control PDU.

161. The method according to any one of claims 148 to 160, wherein
in the LCP procedure or in a MAC PDU packaging process, the MAC PDU carries indication information, wherein the indication information is used to request a network device to allocate a transmission resource, wherein the indication information is carried in a case that one of the following conditions is satisfied:
a specified PDU is present;
an associated PDU set is present;
the associated PDU set is present, and part of or all data in the associated PDU set is unable to be carried in the MAC PDU;
a specified PDU set is present;
all or part of data in the specified PDU set is not carried in the MAC PDU; or
all or part of data in the specified PDU is not carried in the MAC PDU.

162. The method according to claim 161, wherein the indication information is one of request indication information, assistance information, or first report information.

163. The method according to claim 162, wherein the indication information is one of a medium access control control element (MAC CE), a scheduling request (SR), uplink control information (UCI), pre-configured grant-uplink control information (CG-UCI), or physical uplink shared channel-uplink control information (PUSCH-UCI) corresponding to the first report information.

164. The method according to any one of claims 148 to 163, wherein in the LCP procedure, in a case that a remaining resource is present in the MAC PDU, a first PDU is prioritized, or data or remaining data of the first PDU is preferentially put into the MAC PDU, or a first PDU set is prioritized, or data or remaining data of the first PDU set is preferentially put into the MAC PDU, wherein the first PDU set is at least one of a specified PDU set or an associated PDU set.

165. The method according to any one of claims 148 to 164, further comprising:
determining a size of remaining data in a PDU or a PDU set in a third logical channel in a case that data in the PDU or the PDU set in the third logical channel is multiplexed into a size of the MAC PDU; and
subtracting the size of the remaining data in the PDU or the PDU set in the third logical channel from a third variable,
wherein the third variable indicates a quantity of available tokens in a token bucket corresponding to the third logical channel.

166. The method according to any one of claims 148 to 164, further comprising:
allocating a resource to at least one logical channel based on a size of a PDU or a PDU set corresponding to the at least one logical channel.

167. The method according to claim 166, further comprising:
subtracting a size of a MAC service data unit (MAC SDU) multiplexed into the MAC PDU of a fourth logical channel from a fourth variable.

168. The method according to any one of claims 148 to 167, further comprising:
allocating a resource to at least one logical channel based on a result acquired by subtracting a size of a PDU or a PDU set that has been allocated to a logical channel from a quantity of tokens in a token bucket corresponding to the logical channel.

169. The method according to any one of claims 148 to 168, further comprising:
receiving an uplink grant for new transmission from a network device.

170. A method for processing a data packet, comprising:
performing data packet processing.

171. The method according to claim 170, wherein the data packet processing comprises at least one of:
determining to perform the data packet processing;
determining a manner of performing the data packet processing;
determining to perform packet discarding processing; or
determining a manner of performing packet discarding processing.

172. The method according to claim 170 or 171, wherein performing the data packet processing comprises:
discovering or determining, by a transmitter, a data packet, and instructing a receiver to process the data packet; or
discovering or determining, by a receiver, a data packet, and instructing a transmitter to process the data packet; or
discovering or determining, by a transmitter, a data packet, and processing the data packet; or
discovering or determining, by a receiver, a data packet, and processing the data packet; or
discovering or determining, by a transmitter, a data packet, and processing, by the transmitter and a receiver, the data packet; or
discovering or determining, by a receiver, a data packet, and processing, by a transmitter and the receiver, the data packet.

173. The method according to claim 170 or 171, wherein performing the data packet processing comprises:
performing at least one of determining to perform the data packet processing or the data packet processing in a case that a fourth condition is satisfied; or
processing at least one of determining to perform the packet discarding processing or the packet discarding processing in a case that a fourth condition is satisfied.

174. The method according to claim 173, wherein the fourth condition comprises at least one of the following options:
at least one data packet in an associated packet data unit (PDU) set is lost;
a data packet at a first location in the associated PDU set is lost;
a first data packet in the associated PDU set is lost;
the associated PDU set exceeds a first PDU set delay budget (PSDB) requirement;
a transmission duration, a reception duration, or a storage duration of the associated PDU set is not less than a packet discarding duration of a PDU set;
the transmission duration, the reception duration, or the storage duration of the associated PDU set is not less than a second PSDB requirement;
at least one PDU in the associated PDU set is confirmed to have been not needed;
a received PDU is used to decode or recover a PDU set or a part of a PDU set;
a part of data packets in the associated PDU set is discovered or confirmed;
a part of data packets in the associated PDU set is discovered or confirmed to have been lost;
N associated PDUs or data packets are transmitted or successfully transmitted;
the N associated PDUs or data packets are received;
a PSDB duration is reached;
the packet discarding duration is reached;
an application layer or a network device configures the data packet processing to be enabled;
the application layer or the network device configures a quantity corresponding to data packets; or
the application layer or the network device configures second indication information or a first operation to be enabled.

175. The method according to claim 170 or 171, wherein a data packet for performing the data packet processing comprises at least one of:
a data packet in a corresponding packet data unit (PDU) set;
a data packet without a data packet serial number (SN) in the corresponding PDU set;
a data packet without a Packet Data Convergence Protocol (PDCP) SN in the corresponding PDU set;
a data packet, in the corresponding PDU set, not submitted to a lower layer;
a data packet, in the corresponding PDU set, not transmitted or not successfully transmitted;
a data packet, in the corresponding PDU set, confirmed to have been unsuccessfully transmitted;
a data packet corresponding to an SN carried in second indication information; or
a data packet associated with the SN.

176. The method according to claim 170 or 171, wherein performing the data packet processing comprises:
considering, by a transmitter, that a service data unit (SDU) with an indicated serial number (SN) or an associated SN is successful, ended, or not needed; or
indicating, by a transmitter, to a higher layer that a PDU with an indicated SN or an associated SN is successful, ended, or not needed; or
considering, by a receiver, that an SDU with an indicated SN number or an associated SN number is placed in a buffer; or
considering, by a receiver, that an SDU with an indicated SN or an associated SN is received, ended, or not needed; or
considering, by a receiver, that an SDU with an indicated SN or an associated SN is submitted to a higher layer; or
performing, by a transmitter, packet discarding processing for a PDU corresponding to an SDU/SDU with an indicated SN or an associated SN; or
performing, by a receiver, packet discarding processing for a PDU corresponding to an SDU/SDU with an indicated SN or an associated SN.

177. The method according to claim 170 or 171, wherein the method is applicable to a transmitter, and performing the data packet processing comprises:
transmitting second indication information to a receiver, wherein the second indication information instructs the receiver to perform a first operation.

178. The method according to claim 177, wherein transmitting the second indication information to the receiver comprises one of:
triggering a status report;
transmitting data packet processing indication information to the receiver; or
transmitting packet discarding indication information to the receiver.

179. The method according to claim 177, wherein transmitting the second indication information to the receiver comprises:
triggering a status report in a case that a fourth condition is satisfied.

180. The method according to claim 179, wherein
the status report carries data packet transmission information of an associated packet data unit (PDU) set; or
the status report carries at least one of a serial number (SN) or a status of a data packet.

181. The method according to claim 177, wherein the second indication information comprises at least one of:
data packet processing indication information;
packet discarding indication information;
a serial number (SN); or
indication information carrying an SN.

182. The method according to claim 170 or 171, wherein the method is applicable to a receiver, and performing the data packet processing comprises:
performing a first operation based on second indication information transmitted by a transmitter.

183. The method according to claim 182, wherein the first operation comprises at least one of:
considering that a service data unit (SDU) with an indicated serial number (SN) or an associated SN is successful, ended, or not needed;
notifying a higher layer that a PDU with an indicated SN or an associated SN is successful, ended, or not needed;
considering that an SDU with an indicated SN or an associated SN is placed in a buffer;
considering that an SDU with an indicated SN or an associated SN is submitted to a higher layer; or
performing packet discarding processing for an PDU corresponding to an SDU/SDU with an indicated SN or an associated SN.

184. The method according to claim 183, wherein the packet discarding processing comprises at least one of discarding an SDU or discarding a PDU corresponding to the SDU.

185. The method according to claim 170 or 171, wherein performing the data packet processing comprises at least one of:
performing packet discarding processing on a second data packet that is not transmitted, and/ or not needed, and/or not successfully transmitted;
performing packet discarding processing on at least one of a radio link control service data unit (RLC SDU) or an RLC SDU segment that is not transmitted or submitted to a lower layer;
performing packet discarding processing on at least one of a Packet Data Convergence Protocol service data unit (PDCP SDU) or a Packet Data Convergence Protocol packet data unit (PDCP PDU) that is not transmitted or submitted to a lower layer; or
skipping performing packet discarding processing on at least one of an RLC SDU or an RLC SDU segment that is transmitted or submitted to a lower layer.

186. The method according to claim 185, wherein the second data packet is at least one of:
a data packet in an associated packet data unit (PDU) set;
a PDU, in the PDU set, not transmitted, and/ or not needed, and/or not successfully transmitted;
a PDU set not successfully transmitted;
a PDU set that exceeds a PDU set delay budget (PSDB) requirement and is not transmitted;
a PDU set that exceeds a PSDB requirement and is not successfully transmitted;
a PDU set that exceeds a packet discarding duration of a PDU set and is not transmitted; or
a PDU set that exceeds a packet discarding duration of a PDU set and is not successfully transmitted.

187. A method for selecting a resource, applicable to a terminal, the method comprising:
selecting a transmission resource or a hybrid automatic repeat request (HARQ) process based on at least one of a second packet data unit (PDU), a logical channel (LCH) corresponding to the second PDU, data corresponding to the second PDU, or a logical channel priority.

188. The method according to claim 187, further comprising:
prioritizing the logical channel priority; or
prioritizing the second PDU; or
prioritizing the LCH corresponding to the second PDU; or
prioritizing the data corresponding to the second PDU.

189. The method according to claim 187, further comprising at least one of:
prioritizing the logical channel priority, and then considering the second PDU, the LCH corresponding to the second PDU, or the data corresponding to the second PDU;
prioritizing the second PDU, the LCH corresponding to the second PDU, or the data corresponding to the second PDU, and then considering the logical channel priority;
prioritizing the LCH corresponding to the second PDU;
preferentially transmitting a HARQ or resource for data on an LCH corresponding to a second PDU set;
prioritizing the second PDU;
preferentially transmitting a HARQ or resource for the data on the LCH corresponding to the second PDU;
adjusting the logical channel priority; or
adjusting a priority of the LCH corresponding to the second PDU to a high priority.

190. An apparatus for transmitting information, comprising:
a reporting module, configured to report assistance information, wherein the assistance information indicates service information of a terminal.

191. An apparatus for transmitting information, comprising:
an adjusting module, configured to adjust a transmission resource or a configuration of the transmission resource.

192. An apparatus for transmitting information, comprising:
a triggering module, configured to trigger or generate first report information, wherein the first report information is used to trigger a network device to perform at least one of resource allocation, resource adjustment, resource scheduling, parameter adjustment, or parameter configuration.

193. An apparatus for configuring a timer, the apparatus comprising:
a receiving module, configured to receive a timer configuration configured by a network device, wherein the timer is a timer corresponding to first report information, and a duration of the timer is a first duration.

194. An apparatus for transmitting information, comprising:
a transmitting module, configured to transmit indication information, wherein the indication information instructs a terminal to perform at least one of processing a transmission resource or using the transmission resource.

195. An apparatus for transmitting information, comprising:
a generation module, configured to generate a medium access control packet data unit (MAC PDU) during a logical channel prioritization (LCP) procedure.

196. An apparatus for processing a data packet, the apparatus comprising:
an executing module, configured to perform data packet processing.

197. An apparatus for selecting a resource, the apparatus comprising:
a selecting module, configured to select a transmission resource or a hybrid automatic repeat request (HARQ) process based on at least one of a second packet data unit (PDU), a logical channel (LCH) corresponding to the second PDU, data corresponding to the second PDU, or a logical channel priority.

198. A terminal, comprising a memory and a processor, wherein
the memory stores at least one program code, and the processor is configured to load and execute the at least one program code, to cause the terminal to perform the method for transmitting information as defined in any one of claims 1 to 41, or the method for transmitting information as defined in any one of claims 61 to 120, or the method for configuring a timer as defined in any one of claims 121 to 146, or the method for transmitting information as defined in any one of claims 148 to 169, or the method for processing a data packet as defined in any one of claims 170 to 186, or the method for selecting a resource as defined in any one of claims 187 to 189.

199. A network device, comprising a memory and a processor, wherein
the memory stores at least one program code, and the processor is configured to load and execute the at least one program code, to cause the network device to perform the method for transmitting information as defined in any one of claims 42 to 60, or the method for transmitting information as defined in claim 147, or the method for processing a data packet as defined in any one of claims 170 to 186.

200. A computer-readable storage medium, storing one or more computer programs, wherein the processor is configured to load and run the one or more computer programs, to cause the processor to perform the method for transmitting information as defined in any one of claims 1 to 120, or the method for configuring a timer as defined in any one of claims 121 to 146, or the method for transmitting information as defined in any one of claims 147 to 169, or the method for processing a data packet as defined in any one of claims 170 to 186, or the method for selecting a resource as defined in any one of claims 187 to 189.

201. A chip, comprising one or more programmable logic circuits and/or program instructions, wherein an electronic device equipped with the chip, when executing the one or more programmable logic circuits and/or program instructions, is caused to perform the method for transmitting information as defined in any one of claims 1 to 120, or the method for configuring a timer as defined in any one of claims 121 to 146, or the method for transmitting information as defined in any one of claims 147 to 169, or the method for processing a data packet as defined in any one of claims 170 to 186, or the method for selecting a resource as defined in any one of claims 187 to 189.

202. A computer program product, comprising one or more computer instructions stored in a computer-readable storage medium, wherein a processor, when reading and executing the one or more computer instructions from the computer-readable storage medium, is caused to perform the method for transmitting information as defined in any one of claims 1 to 120, or the method for configuring a timer as defined in any one of claims 121 to 146, or the method for transmitting information as defined in any one of claims 147 to 169, or the method for processing a data packet as defined in any one of claims 170 to 186, or the method for selecting a resource as defined in any one of claims 187 to 189.
